# EUROPEAN PATENT SPECIFICATION

(11) **EP 3 823 469 B1**
(45) Date of publication and mention of the grant of the patent: **06.09.2023**
(21) Application number: 19817699.2
(22) Date of filing: 10.12.2019
(51) Int. Cl.: A23L 27/30

(54) **SWEETENER FORMULATIONS AND USES**
SÜSSSTOFFFORMULIERUNGEN MIT VERBESSERTEM ZEIT- UND/ODER GESCHMACKSPROFIL, VERFAHREN ZU DEREN FORMULIERUNG UND VERWENDUNGEN
FORMULATIONS D'ÉDULCORANT PRÉSENTANT UN MEILLEUR PROFIL TEMPOREL ET/OU DE PARFUM, PROCÉDÉS POUR LEUR FORMULATION ET UTILISATIONS

(30) Priority: 19.12.2018 US 201862781823 P; 08.01.2019 EP 19150683
(43) Date of publication of application: 26.05.2021
(73) Proprietor: Firmenich SA, 1242 Satigny (CH)
(72) Inventor: FARHAT, Imad, Singapore 638377 (SG); HUGHES, Susannah, Plainsboro, New Jersey 08536 (US); SAVAGE, Craig, Plainsboro, New Jersey 08536 (US); SUBRAMANIAN, Srinivasan, Plainsboro, New Jersey 08536 (US); JHA, Priti, Plainsboro, New Jersey 08536 (US); BANAVARA, Dattatreya, Plainsboro, New Jersey 08536 (US)
(74) Representative: Strych, Sebastian
(86) International application number: PCT/EP2019/084469
(87) International publication number: WO 2020/126688

(56) References cited:
- WO-A1-2007/129251
- WO-A1-2015/042344
- WO-A1-2017/125518
- WO-A1-2017/189994
- US-A1- 2015 320 101
- US-A1- 2016 183 574
- US-A1- 2017 156 384
- US-A1- 2017 190 728
- US-A1- 2017 231 259
- US-A1- 2018 035 702
- US-A1- 2018 289 042
- US-A1- 2018 289 050
- US-A1- 2018 289 051
- US-A9- 2018 263 262
- US-B2- 8 993 027

## Description

### CROSS-REFERENCE TO RELATED APPLICATIONS

The present application claims the benefit of priority of United States Provisional Application No. 62/781,823, filed December 19, 2018, and European Patent Application No. 19150683.1, filed January 8, 2019.

### TECHNICAL FIELD

The present disclosure generally provides compositions of non-caloric or low-caloric sweeteners, as well as the use of such compounds to sweeten various food and beverage products. In some embodiments, the compositions disclosed herein improve the taste of non-caloric or low-caloric sweeteners by imparting a more sugar-like taste or characteristic. In particular, the compositions provide a more sugar-like temporal profile, including sweetness onset and sweetness linger, or a more sugar-like flavor profile.

### BACKGROUND

The taste system provides sensory information about the chemical composition of the external world. Taste transduction is one of the more sophisticated forms of chemically triggered sensation in animals. Signaling of taste is found throughout the animal kingdom, from simple metazoans to the most complex of vertebrates. Mammals are believed to have five basic taste modalities: sweet, bitter, sour, salty, and umami.

Sweetness is the taste most commonly perceived when eating foods rich in sugars. Mammals generally perceive sweetness to be a pleasurable sensation, except in excess. Caloric sweeteners, such as sucrose and fructose, are the prototypical examples of sweet substances. Although a variety of no-calorie and low-calorie substitutes exist, these caloric sweeteners are still the predominant means by which comestible products induce the perception of sweetness upon consumption.

Metabolic disorders and related conditions, such as obesity, diabetes, and cardiovascular disease, are major public health concerns throughout the world. And their prevalence is increasing at alarming rates in almost every developed country. Caloric sweeteners are a key contributor to this trend, as they are included in various packaged food and beverage products to make them more palatable to consumers. In many cases, no-calorie or low-calorie substitutes can be used in foods and beverages in place of sucrose or fructose. Even so, these compounds impart sweetness differently from caloric sweeteners, and a number of consumers fail to view them as suitable alternatives. Moreover, such compounds may be difficult to incorporate into certain products. In some instances, they may be used as partial replacements for caloric sweeteners, but their mere presence can cause many consumers to perceive unpleasant off-tastes including, astringency, bitterness, and metallic and licorice tastes. Thus, lower-calorie sweeteners face certain challenges to their adoption.

US8993027 discloses sweetener comprising rebaudioside A combined with erythritol or sucrose or rebaudioside B or E.

US2016/0183574 discloses a sweetener comprising rebaudioside E in combination with other rebaudiosides or sugar.

Thus, there is a continuing need to discover ways of formulating non-caloric and low-caloric sweeteners to create a more sugar-like taste profile

In the following description, the first, second and third aspects pertain to the invention, whereas mere references to the disclosure do not pertain to the invention.

### SUMMARY

The present disclosure sets forth certain discoveries whereby lower-calorie sweeteners are formulated in a way that imparts a more sugar-like taste profile.

In a first aspect, the disclosure provides a sweetener composition comprising rebaudioside A and rebaudioside E. In some embodiments, the composition further comprises other natural steviol glycosides, rebaudioside B, rebaudioside D, rebaudioside M, mogroside V, glucosylated natural steviol glycosides (GSGs), or combinations thereof. In some embodiments, the composition further comprises a mouthfeel enhancer comprising a glycerol wash of an edible oil, phloretin, naringenin, erythritol, or a sugar. According to the present invention, the ratio (w/w) of rebaudioside A to rebaudioside E in the composition ranges from 6:1 to 2:5.

In one embodiment, the disclosure provides a sweetener composition further comprising glucosylated natural steviol glycosides (GSGs). In some embodiments, the ratio (w/w) of rebaudioside E to GSGs in the composition ranges from 1:2 to 2:1. In some embodiments, the composition further comprises other natural steviol glycosides, rebaudioside A, rebaudioside B, rebaudioside D, rebaudioside M, mogroside V, or combinations thereof. In some embodiments, the composition further comprises a mouthfeel enhancer comprising a glycerol wash of an edible oil, phloretin, naringenin, erythritol, or a sugar.

In one embodiment, the disclosure provides a sweetener composition further comprising rebaudioside M, and rebaudioside D. In some embodiments, the sweetener composition further comprises natural steviol glycosides. In some embodiments, the ratio (w/w) of rebaudioside M to rebaudioside A ranges from 9:16 to 10:3. In some embodiments, the ratio (w/w) of rebaudioside M to rebaudioside D ranges from 1:1 to 3:2. In some embodiments, the ratio (w/w) of rebaudioside A to rebaudioside D ranges from 3:10 to 8:1. In some embodiments, the composition further comprises other natural steviol glycosides, rebaudioside B, rebaudioside E, mogroside V, glucosylated natural steviol glycosides (GSGs), or combinations thereof. In some embodiments, the composition further comprises a mouthfeel enhancer comprising a glycerol wash of an edible oil, phloretin, naringenin, erythritol, or a sugar.

The disclosure provides a sweetening composition comprising mogroside V, rebaudioside A, rebaudioside M, and a mouthfeel enhancer, wherein the mouthfeel enhancer comprises a glycerol wash of an edible oil, phloretin, naringenin, or any combination thereof. According to the disclosure, the ratio (w/w) of mogroside V to rebaudioside A ranges from 1:5 to 1:2. According to the disclosure, the ratio (w/w) of mogroside V to rebaudioside M ranges from 1:1 to 2:1. According to the disclosure the ratio (w/w) of rebaudioside A to rebaudiosode M ranges from 2:1 to 10:1. According to the disclosure, the composition further comprises other natural steviol glycosides, rebaudioside B, rebaudioside D, rebaudioside E, glucosylated natural steviol glycosides (GSGs), or combinations thereof. According to the disclosure, the compositions can be used beneficially in a beverage comprising from 5 to 50% w/v of a juice concentrate comprising solids greater than 60 degrees Brix.

The disclosure provides a composition comprising rebaudioside M, glucosylated natural steviol glycosides (GSGs), erythritol, and naringenin. According to the disclosure, the composition further comprises rebaudioside A, an extract comprising steviol glycosides, or any combination thereof.

The disclosure provides a sweetener composition comprising sucrose, rebaudioside A, rebaudioside M, and mogroside V. According to the disclosure, the composition imparts a desired level of sweetness to a the flavored article equivalent to sucrose at 10 to 15 degrees Brix (°Bx). According to the disclosure, the ratio (w/w) of rebaudioside A to rebaudioside M ranges from 10:1 to 13.3:1. In some embodiments, the ratio (w/w) of rebaudioside A to mogroside V ranges from 5:8 to 8:5. According to the disclosure, the ratio (w/w) of rebaudioside M to mogroside V ranges from 1:16 to 1:8.3.

The disclosure provides a sweetener composition comprising sucrose, rebaudioside A, rebaudioside E, glucosylated natural steviol glycosides (GSGs), phloretin, and naringenin. According to the disclosure, the composition imparts a desired level of sweetness to a flavored article equivalent to sucrose at 10 to 15 degrees Brix (°Bx). According to the disclosure, the ratio (w/w) of rebaudioside A to rebaudioside E ranges from 4:5 to 1:1. In some embodiments, the ratio (w/w) of rebaudioside A and rebaudioside E (collectively) to naringenin and phloretin (collectively) ranges from 6:1 to 12:1. According to the disclosure, the ratio (w/w) of rebaudioside A and rebaudioside E (collectively) to GSGs ranges from 2:1 to 8:1. According to the disclosure, the ratio (w/w) of GSGs to naringenin and phloretin (collectively) ranges from 3:2 to 5:2. According to the disclosure, the ratio (w/w) of naringenin to phloretin ranges from 3:5 to 1:1. According to the disclosure, the ratio (w/w) of rebaudioside A, rebaudioside E, GSGs, phloretin, and naringenin ranges from 6:6:5:1:1 to 80:100:25:6:10.

The disclosure provides a sweetener composition comprising an extract comprising steviol glycosides and a mouthfeel enhancer comprising a glycerol wash of an edible oil. According to the disclosure, the composition enhances the sweetness of a flavored article. According to the disclosure, the enhancement of sweetness is equivalent to the sweetness imparted by 1-10 degrees Brix (°Bx) sucrose. According to the disclosure, the composition further comprises glucosylated steviol glycosides (GSGs). According to the disclosure, the composition comprises mogroside V, an extract comprising steviol glycosides, naringenin, phloretin, a mouthfeel enhancer comprising a glycerol wash of an edible oil, or any combination thereof.

The disclosure provides uses of a sweetener composition of the first aspect or any disclosure hereinabove to reduce an amount of caloric sweetener (e.g., sucrose, fructose, or combinations thereof) in a flavored article, such as a food or beverage article. According to the disclosure, the amount of caloric sweetener is reduced by at least 40%, or at least 50%, or at least 60%, or at least 70%, or at least 80%, or at least 90%.

The disclosure provides uses of a sweetener composition of the first aspect or any disclosure hereinabove to impart a sucrose-like temporal or flavor profile. In some embodiments, the sweetener composition is used to impart a sucrose-like temporal or flavor profile in a flavored article, such as a food or beverage article.

The disclosure provides uses of a sweetener composition of the first aspect or any disclosure hereinabove to enhance the sweetness of a flavored article. In some embodiments, the sweetener composition enhances the sweetness in an amount equivalent to the sweetness imparted by from 1 to 10 degrees Brix (°Bx) sucrose. In some embodiments, the amount of the sweetener composition used in the flavored article ranges from 5 to 350 ppm. The disclosure provides methods of enhancing the sweetness of a flavored article, comprising introducing to the flavored article an amount of a sweetener composition of any one of the first to the seventh aspects. According to the disclosure, the sweetener composition enhances the sweetness in an amount equivalent to the sweetness imparted by from 1 to 10 degrees Brix (°Bx) sucrose. According to the disclosure, the amount of the sweetener composition introduced to the flavored article ranges from 5 to 350 ppm. In a second aspect, the disclosure provides a flavored article comprising a sweetener composition according to the first aspect.

In a third aspect, the disclosure provides a tabletop sweetener comprising a bulking agent and a sweetener composition according to the first aspect. In one embodiment, at least a portion of the sweetener composition of the tabletop sweetener is encapsulated.

Other aspects and embodiments are set forth in further detail in the Detailed Description below.

### BRIEF DESCRIPTION OF THE FIGURES

FIG. 1 shows the sensory profile of a sweetener composition according to certain embodiments set forth herein.
FIG. 2 shows the sensory profile of a comparative sweetener composition.
FIG. 3 shows the sensory profile of a comparative sweetener composition.
FIG. 4 shows the sensory profile of a comparative sweetener composition.

### DETAILED DESCRIPTION

In the following description, reference is made to specific embodiments which may be practiced, which is shown by way of illustration. These embodiments are described in detail to enable those skilled in the art to practice the invention described herein, and it is to be understood that other embodiments may be utilized and that logical changes may be made without departing from the scope of the aspects presented herein. The following description of example embodiments is, therefore, not to be taken in a limited sense, and the scope of the various aspects presented herein is defined by the appended claims.

The Abstract is provided to comply with 37 C.F.R. §1.72(b) to allow the reader to quickly ascertain the nature and gist of the technical disclosure. The Abstract is submitted with the understanding that it will not be used to interpret or limit the scope or meaning of the claims.

### Sweetener Compositions

Generally, this disclosure addresses the above described need by providing a sweetener composition with an improved temporal profile or flavor profile or both, a composition for improving the temporal profile and/or flavor profile of a sweetener composition, a method for improving the temporal profile and/or flavor profile of a sweetener composition, flavored articles comprising sweetener compositions according to certain embodiments presented herein, compositions and methods for improving the temporal profile and/or flavor profile of flavored articles comprising sweetener compositions. In some embodiments, the improved temporal profile and/or flavor profile is a sucrose-like temporal profile and/or flavor profile.

As used herein, the phrase "undesirable taste" includes any taste property which is not imparted by sugars, e.g. glucose, sucrose, fructose, or similar saccharides. Non-limiting examples of undesirable tastes include delayed sweetness onset, lingering sweet aftertaste, metallic taste, bitter taste, cooling sensation taste or menthol-like taste, licorice-like taste, and/or the like.

As used herein, the phrases "sugar-like characteristic, " "sugar-like taste, " "sugar-like sweet, " "sugary, " and "sugar-like" are synonymous. Sugar-like characteristics include any characteristic similar to that of sucrose and include, but are not limited to, maximal response, flavor profile, temporal profile, adaptation behavior, mouthfeel, concentration/response function, tastant and flavor/sweet taste interactions, spatial pattern selectivity, and temperature effects. These characteristics are dimensions in which the taste of sucrose is different from the tastes of sweetener compositions. Whether or not a characteristic is more sugar-like is determined by an expert sensory panel who taste compositions comprising sugar and compositions according to certain embodiments presented herein, and provide their impression as to the similarities of the characteristics of those compositions, with those comprising sugar. Suitable procedures for determining whether a composition has a more sugar-like taste are well known in the art.

In some embodiments, a panel of assessors is used to measure the reduction of sweetness linger. Briefly described, a panel of assessors (generally 8 to 12 individuals) is trained to evaluate sweetness perception and measure sweetness at several time points from when the sample initially is taken into the mouth until 3 minutes after it has been expectorated. Using statistical analysis, the results are compared between samples containing additives and samples that do not contain additives. A decrease in score for a time point measured after the sample has cleared the mouth indicates there has been a reduction in sweetness perception.

The panel of assessors may be trained using procedures well known to those of ordinary skill in the art. In one embodiment, the panel of assessors may be trained using the Spectra Descriptive Analysis Method (Meilgaard et al, Sensory Evaluation Techniques, 3rd edition, Chapter 11). Desirably, the focus of training should be the recognition of and the measure of the basic tastes; specifically, sweet. In order to ensure accuracy and reproducibility of results, each assessor should repeat the measure of the reduction of sweetness linger about three to about five times per sample, taking at least a five minute break between each repetition and/or sample and rinsing well with water to clear the mouth.

Generally, the method of measuring sweetness comprises taking a 10 mL sample into the mouth, holding the sample in the mouth for 5 seconds and gently swirling the sample in the mouth, rating the sweetness intensity perceived at 5 seconds, expectorating the sample (without swallowing following expectorating the sample), rinsing with one mouthful of water (e.g., vigorously moving water in mouth as if with mouth wash) and expectorating the rinse water, rating the sweetness intensity perceived immediately upon expectorating the rinse water, waiting 45 seconds and, while waiting those 45 seconds, identifying the time of maximum perceived sweetness intensity and rating the sweetness intensity at that time (moving the mouth normally and swallowing as needed), rating the sweetness intensity after another 10 seconds, rating the sweetness intensity after another 60 seconds (cumulative 120 seconds after rinse), and rating the sweetness intensity after still another 60 seconds (cumulative 180 seconds after rinse). Between samples take a 5 minute break, rinsing well with water to clear the mouth.

The amount of sucrose, and thus another measure of sweetness, in a reference solution may be described in degrees Brix (°Bx). One degree Brix is 1 gram of sucrose in 100 grams of solution and represents the strength of the solution as percentage by weight (% w/w) (strictly speaking, by mass).

In some embodiments, the sweetener composition comprises the at least one sweetener in an amount effective to provide a sweetness equivalence from about 0.50 to 14 degrees Brix of sugar when present in a sweetened composition (e.g. a consumable), such as, for example, from about 5 to about 12 degrees Brix.

The present disclosure provides a composition comprising at least one first compound selected from the group consisting of: an extract comprising steviol glycosides, rebaudioside A, rebaudioside B, rebaudioside D, rebaudioside E, rebaudioside M, mogroside V, and glucosylated natural steviol glycosides (GSGs).

In a first aspect, the disclosure provides a sweetener composition comprising rebaudioside A and rebaudioside E, wherein the weight ratio of rebaudioside A to rebaudioside E ranges from 2:5 to 6:1. In some embodiments, the composition further comprises other natural steviol glycosides, rebaudioside B, rebaudioside D, rebaudioside M, mogroside V, glucosylated natural steviol glycosides (GSGs), or combinations thereof. In some embodiments, the composition further comprises a mouthfeel enhancer comprising a glycerol wash of an edible oil, phloretin, naringenin, erythritol, or a sugar. According to the invention, the ratio (w/w) of rebaudioside A to rebaudioside E in the composition ranges from 6:1 to 2:5.

In a one embodiment, the disclosure provides a sweetener composition further comprising glucosylated natural steviol glycosides (GSGs). In some embodiments, the ratio (w/w) of rebaudioside E to GSGs in the composition ranges from 1:2 to 2:1. In some embodiments, the composition further comprises other natural steviol glycosides, rebaudioside A, rebaudioside B, rebaudioside D, rebaudioside M, mogroside V, or combinations thereof. In some embodiments, the composition further comprises a mouthfeel enhancer comprising a glycerol wash of an edible oil, phloretin, naringenin, erythritol, or a sugar.

The disclosure provides a sweetener composition comprising steviol glycosides, rebaudioside M, rebaudioside A, and rebaudioside D. In one embodiment, the disclosure provides a sweetener composition further comprising rebaudioside M, rebaudioside A, and rebaudioside D. In some embodiments, the sweetener composition further comprises natural steviol glycosides. In some embodiments, the ratio (w/w) of rebaudioside M to rebaudioside A ranges from 9:16 to 10:3. In some embodiments, the ratio (w/w) of rebaudioside M to rebaudioside D ranges from 1:1 to 3:2. In some embodiments, the ratio (w/w) of rebaudioside A to rebaudioside D ranges from 3:10 to 8:1. In some embodiments, the composition further comprises other natural steviol glycosides, rebaudioside B, rebaudioside E, mogroside V, glucosylated natural steviol glycosides (GSGs), or combinations thereof. In some embodiments, the composition further comprises a mouthfeel enhancer comprising a glycerol wash of an edible oil, phloretin, naringenin, erythritol, or a sugar.

The disclosure provides a sweetening composition comprising mogroside V, rebaudioside A, rebaudioside M, and a mouthfeel enhancer, wherein the mouthfeel enhancer comprises a glycerol wash of an edible oil, phloretin, naringenin, or any combination thereof. According to the disclosure, the ratio (w/w) of mogroside V to rebaudioside A ranges from 1:5 to 1:2. According to the disclosure, the ratio (w/w) of mogroside V to rebaudioside M ranges from 1:1 to 2:1. In some disclosure, the ratio (w/w) of rebaudioside A to rebaudiosode M ranges from 2:1 to 10:1. In some disclosure, the composition further comprises other natural steviol glycosides, rebaudioside B, rebaudioside D, rebaudioside E, glucosylated natural steviol glycosides (GSGs), or combinations thereof. In some related disclosures, the compositions can be used beneficially in a beverage comprising from 5 to 50% w/v of a juice concentrate comprising solids greater than 60 degrees Brix.

The disclosure provides a composition comprising rebaudioside M, glucosylated natural steviol glycosides (GSGs), erythritol, and naringenin. In some disclosures thereof, the composition further comprises rebaudioside A, an extract comprising steviol glycosides, or any combination thereof.

The disclosure provides a sweetener composition comprising sucrose, rebaudioside A, rebaudioside M, and mogroside V. In some disclosures, the composition imparts a desired level of sweetness to a the flavored article equivalent to sucrose at 10 to 15 degrees Brix (°Bx). In some disclosures, the ratio (w/w) of rebaudioside A to rebaudioside M ranges from 10:1 to 13.3:1. In some disclosures, the ratio (w/w) of rebaudioside A to mogroside V ranges from 5:8 to 8:5. In some disclosures, the ratio (w/w) of rebaudioside M to mogroside V ranges from 1:16 to 1:8.3.

The disclosure provides a sweetener composition comprising sucrose, rebaudioside A, rebaudioside E, glucosylated natural steviol glycosides (GSGs), phloretin, and naringenin. In some disclosures, the composition imparts a desired level of sweetness to a flavored article equivalent to sucrose at 10 to 15 degrees Brix (°Bx). In some disclosures, the ratio (w/w) of rebaudioside A to rebaudioside E ranges from 4:5 to 1:1. In some disclosures, the ratio (w/w) of rebaudioside A and rebaudioside E (collectively) to naringenin and phloretin (collectively) ranges from 6:1 to 12:1. In some disclosures, the ratio (w/w) of rebaudioside A and rebaudioside E (collectively) to GSGs ranges from 2:1 to 8:1. In some disclosures, the ratio (w/w) of GSGs to naringenin and phloretin (collectively) ranges from 3:2 to 5:2. In some disclosures, the ratio (w/w) of naringenin to phloretin ranges from 3:5 to 1:1. In some disclosures, the ratio (w/w) of rebaudioside A, rebaudioside E, GSGs, phloretin, and naringenin ranges from 6:6:5:1:1 to 80:100:25:6:10.

The disclosure provides a sweetener composition comprising an extract comprising steviol glycosides and a mouthfeel enhancer comprising a glycerol wash of an edible oil. In some embodiments of the invention, the composition enhances the sweetness of a flavored article. In some such embodiments, the enhancement of sweetness is equivalent to the sweetness imparted by 1-10 degrees Brix (°Bx) sucrose. According to the disclosure, the composition further comprises glucosylated steviol glycosides (GSGs). According to the disclosure, the composition comprises mogroside V, an extract comprising steviol glycosides, naringenin, phloretin, a mouthfeel enhancer comprising a glycerol wash of an edible oil, or any combination thereof.

The disclosure provides uses of a sweetener composition of the first aspect to reduce an amount of caloric sweetener (e.g., sucrose, fructose, or combinations thereof) in a flavored article, such as a food or beverage article. According to the disclosure, the amount of caloric sweetener is reduced by at least 40%, or at least 50%, or at least 60%, or at least 70%, or at least 80%, or at least 90%.

The disclosure provides uses of a sweetener composition of the first aspect to impart a sucrose-like temporal or flavor profile. According to the disclosure, the sweetener composition is used to impart a sucrose-like temporal or flavor profile in a flavored article, such as a food or beverage article.

The disclosure provides uses of a sweetener composition of the first aspect or any item disclosed hereinabove to enhance the sweetness of a flavored article. In some embodiments, the sweetener composition enhances the sweetness in an amount equivalent to the sweetness imparted by from 1 to 10 degrees Brix (°Bx) sucrose. In some embodiments, the amount of the sweetener composition used in the flavored article ranges from 5 to 350 ppm. The disclosure provides methods of enhancing the sweetness of a flavored article, comprising introducing to the flavored article an amount of a sweetener composition of any one of the first to the seventh aspects. According to the disclosure, the sweetener composition enhances the sweetness in an amount equivalent to the sweetness imparted by from 1 to 10 degrees Brix (°Bx) sucrose. According to the disclosure, the amount of the sweetener composition introduced to the flavored article ranges from 5 to 350 ppm.

The following paragraphs set forth various embodiments, of each of the preceding aspects and embodiments. The features of the following embodiments may be combined with any of the preceding aspects and embodiments to create additional embodiments thereof.

In some embodiments, the composition further comprises at least one second selected from the group consisting of: a mouthfeel enhancer comprising a glycerol wash of an edible oil, phloretin, naringenin, erythritol, and a sugar.

In some embodiments, the edible oil is selected from the group consisting of: palm oil, oat oil, coconut oil, high oleic sunflower oil, tomato seed oil, and combinations thereof.

In some embodiments, the composition comprises rebaudioside A, and rebaudioside E. In one embodiment, the ratio of rebaudioside A to rebaudioside E in the composition is from 6:1 to 2:5.

In some embodiments, when the composition is added to a flavored article, the final concentration of rebaudioside A is from 10 to 100 ppm. Alternatively, when the composition is added to a flavored article, the final concentration of rebaudioside A is from 10 to 90 ppm. Alternatively, when the composition is added to a flavored article, the final concentration of rebaudioside A is from 10 to 80 ppm. Alternatively, when the composition is added to a flavored article, the final concentration of rebaudioside A is from 10 to 70 ppm. Alternatively, when the composition is added to a flavored article, the final concentration of rebaudioside A is from 10 to 60 ppm. Alternatively, when the composition is added to a flavored article, the final concentration of rebaudioside A is from 10 to 50 ppm. Alternatively, when the composition is added to a flavored article, the final concentration of rebaudioside A is from 10 to 40 ppm. Alternatively, when the composition is added to a flavored article, the final concentration of rebaudioside A is from 10 to 30 ppm. Alternatively, when the composition is added to a flavored article, the final concentration of rebaudioside A is from 10 to 20 ppm.

In some embodiments, when the composition is added to a flavored article, the final concentration of rebaudioside A is from 20 to 100 ppm. Alternatively, when the composition is added to a flavored article, the final concentration of rebaudioside A is from 30 to 100 ppm. Alternatively, when the composition is added to a flavored article, the final concentration of rebaudioside A is from 40 to 100 ppm. Alternatively, when the composition is added to a flavored article, the final concentration of rebaudioside A is from 50 to 100 ppm. Alternatively, when the composition is added to a flavored article, the final concentration of rebaudioside A is from 60 to 100 ppm. Alternatively, when the composition is added to a flavored article, the final concentration of rebaudioside A is from 70 to 100 ppm. Alternatively, when the composition is added to a flavored article, the final concentration of rebaudioside A is from 80 to 100 ppm. Alternatively, when the composition is added to a flavored article, the final concentration of rebaudioside A is from 90 to 100 ppm.

In some embodiments, when the composition is added to a flavored article, the final concentration of rebaudioside A is 10, or 20, or 30, or 40, or 50, or 60, or 70, or 80, or 90, or 100 ppm.

In some embodiments, when the composition is added to a flavored article, the final concentration of rebaudioside A is 100 ppm.

In some embodiments, when the composition is added to a flavored article, the final concentration of rebaudioside E is from 10 to 250 ppm. Alternatively, when the composition is added to a flavored article, the final concentration of rebaudioside E is from 10 to 240 ppm. Alternatively, when the composition is added to a flavored article, the final concentration of rebaudioside E is from 10 to 230 ppm. Alternatively, when the composition is added to a flavored article, the final concentration of rebaudioside E is from 10 to 220 ppm. Alternatively, when the composition is added to a flavored article, the final concentration of rebaudioside E is from 10 to 210 ppm. Alternatively, when the composition is added to a flavored article, the final concentration of rebaudioside E is from 10 to 200 ppm. Alternatively, when the composition is added to a flavored article, the final concentration of rebaudioside E is from 10 to 190 ppm. Alternatively, when the composition is added to a flavored article, the final concentration of rebaudioside E is from 10 to 180 ppm. Alternatively, when the composition is added to a flavored article, the final concentration of rebaudioside E is from 10 to 170 ppm. Alternatively, when the composition is added to a flavored article, the final concentration of rebaudioside E is from 10 to 160 ppm. Alternatively, when the composition is added to a flavored article, the final concentration of rebaudioside E is from 10 to 150 ppm. Alternatively, when the composition is added to a flavored article, the final concentration of rebaudioside E is from 10 to 140 ppm. Alternatively, when the composition is added to a flavored article, the final concentration of rebaudioside E is from 10 to 130 ppm. Alternatively, when the composition is added to a flavored article, the final concentration of rebaudioside E is from 10 to 120 ppm. Alternatively, when the composition is added to a flavored article, the final concentration of rebaudioside E is from 10 to 110 ppm. Alternatively, when the composition is added to a flavored article, the final concentration of rebaudioside E is from 10 to 250 ppm. Alternatively, when the composition is added to a flavored article, the final concentration of rebaudioside E is from 10 to 90 ppm. Alternatively, when the composition is added to a flavored article, the final concentration of rebaudioside E is from 10 to 80 ppm. Alternatively, when the composition is added to a flavored article, the final concentration of rebaudioside E is from 10 to 70 ppm. Alternatively, when the composition is added to a flavored article, the final concentration of rebaudioside E is from 10 to 60 ppm. Alternatively, when the composition is added to a flavored article, the final concentration of rebaudioside E is from 10 to 50 ppm. Alternatively, when the composition is added to a flavored article, the final concentration of rebaudioside E is from 10 to 40 ppm. Alternatively, when the composition is added to a flavored article, the final concentration of rebaudioside E is from 10 to 30 ppm. Alternatively, when the composition is added to a flavored article, the final concentration of rebaudioside E is from 10 to 20 ppm.

In some embodiments, when the composition is added to a flavored article, the final concentration of rebaudioside E is from 20 to 250 ppm. Alternatively, when the composition is added to a flavored article, the final concentration of rebaudioside E is from 30 to 250 ppm. Alternatively, when the composition is added to a flavored article, the final concentration of rebaudioside E is from 40 to 250 ppm. Alternatively, when the composition is added to a flavored article, the final concentration of rebaudioside E is from 50 to 250 ppm. Alternatively, when the composition is added to a flavored article, the final concentration of rebaudioside E is from 60 to 250 ppm. Alternatively, when the composition is added to a flavored article, the final concentration of rebaudioside E is from 70 to 250 ppm. Alternatively, when the composition is added to a flavored article, the final concentration of rebaudioside E is from 80 to 250 ppm. Alternatively, when the composition is added to a flavored article, the final concentration of rebaudioside E is from 90 to 250 ppm. Alternatively, when the composition is added to a flavored article, the final concentration of rebaudioside E is from 100 to 250 ppm. Alternatively, when the composition is added to a flavored article, the final concentration of rebaudioside E is from 110 to 250 ppm. Alternatively, when the composition is added to a flavored article, the final concentration of rebaudioside E is from 120 to 250 ppm. Alternatively, when the composition is added to a flavored article, the final concentration of rebaudioside E is from 130 to 250 ppm. Alternatively, when the composition is added to a flavored article, the final concentration of rebaudioside E is from 140 to 250 ppm. Alternatively, when the composition is added to a flavored article, the final concentration of rebaudioside E is from 150 to 250 ppm. Alternatively, when the composition is added to a flavored article, the final concentration of rebaudioside E is from 160 to 250 ppm. Alternatively, when the composition is added to a flavored article, the final concentration of rebaudioside E is from 170 to 250 ppm. Alternatively, when the composition is added to a flavored article, the final concentration of rebaudioside E is from 180 to 250 ppm. Alternatively, when the composition is added to a flavored article, the final concentration of rebaudioside E is from 190 to 250 ppm. Alternatively, when the composition is added to a flavored article, the final concentration of rebaudioside E is from 200 to 250 ppm. Alternatively, when the composition is added to a flavored article, the final concentration of rebaudioside E is from 210 to 250 ppm. Alternatively, when the composition is added to a flavored article, the final concentration of rebaudioside E is from 220 to 250 ppm. Alternatively, when the composition is added to a flavored article, the final concentration of rebaudioside E is from 230 to 250 ppm. Alternatively, when the composition is added to a flavored article, the final concentration of rebaudioside E is from 240 to 250 ppm.

In some embodiments, when the composition is added to a flavored article, the final concentration of rebaudioside E is 10, or 20, or 30, or 40, or 50, or 60, or 70, or 80, or 90, or 100, or 110, or 120, or 130, or 140, or 150, or 160, or 170, or 180, or 190, or 200, or 210, or 220, or 230, or 240, or 250 ppm.

In some embodiments, when the composition is added to a flavored article, the final concentration of rebaudioside E is 250 ppm.

In some embodiments, the composition comprises rebaudioside E and glucosylated natural steviol glycosides (GSGs). In one embodiment, the ratio of rebaudioside E to glucosylated natural steviol glycosides (GSGs) in the composition is from 1:2 to 2:1.

Throughout this disclosure, in various aspects and embodiments, reference is made to glucosylated natural steviol glycosides (GSGs). The extract of the *Stevia rebaudiana* plant contains a number of different diterpene glycosides having a single base-steviol-which differ from each other in terms of the carbohydrate functionalization at the C13 and C19 positions on the steviol compound. Such steviol glycosides that are present naturally within the *Stevia rebaudiana* plant are referred to as "natural steviol glycosides." Examples include rebaudioside A, rebaudioside D, rebaudioside M, and the like. In some instances, it can be desirable to derivatize these natural steviol glycosides to add additional glucose (namely, D-glucose) units to the natural steviol glycoside compounds. Such further glusocylated compounds are referred to as "glucosylated steviol glycosides" or "GSGs." U.S. Patent Nos. 9,107,436 and 10,398,160 describe typical processes for glucosylating natural steviol glycosides to make GSGs. The GSGs can include any number of additional glucose units, such as one, two, three, or four additional glucose units. The additional glucose units are typically added to the natural steviol glycosides by an enzymatic process, wherein the additional glucose units attach to existing sugar units by forming glycosidic bonds. Any suitable glycosidic linkage can be used, such as α-1,2 or α-1,4 or α-1,6 or β-1,2 or β-1,4 or β-1,6 or any combination thereof. In some embodiments, the glycoisidic linkages are α-1,4 linkages.

In some embodiments, when the composition is added to a flavored article, the final concentration of rebaudioside E is from 5 to 75 ppm. Alternatively, when the composition is added to a flavored article, the final concentration of rebaudioside E is from 5 to 70 ppm. Alternatively, when the composition is added to a flavored article, the final concentration of rebaudioside E is from 5 to 65 ppm. Alternatively, when the composition is added to a flavored article, the final concentration of rebaudioside E is from 5 to 60 ppm. Alternatively, when the composition is added to a flavored article, the final concentration of rebaudioside E is from 5 to 55 ppm. Alternatively, when the composition is added to a flavored article, the final concentration of rebaudioside E is from 5 to 50 ppm. Alternatively, when the composition is added to a flavored article, the final concentration of rebaudioside E is from 5 to 45 ppm. Alternatively, when the composition is added to a flavored article, the final concentration of rebaudioside E is from 5 to 40 ppm. Alternatively, when the composition is added to a flavored article, the final concentration of rebaudioside E is from 5 to 35 ppm. Alternatively, when the composition is added to a flavored article, the final concentration of rebaudioside E is from 5 to 30 ppm. Alternatively, when the composition is added to a flavored article, the final concentration of rebaudioside E is from 5 to 25 ppm. Alternatively, when the composition is added to a flavored article, the final concentration of rebaudioside E is from 5 to 20 ppm. Alternatively, when the composition is added to a flavored article, the final concentration of rebaudioside E is from 5 to 15 ppm. Alternatively, when the composition is added to a flavored article, the final concentration of rebaudioside E is from 5 to 10 ppm.

In some embodiments, when the composition is added to a flavored article, the final concentration of rebaudioside E is from 10 to 75 ppm. Alternatively, when the composition is added to a flavored article, the final concentration of rebaudioside E is from 15 to 75 ppm. Alternatively, when the composition is added to a flavored article, the final concentration of rebaudioside E is from 20 to 75 ppm. Alternatively, when the composition is added to a flavored article, the final concentration of rebaudioside E is from 25 to 75 ppm. Alternatively, when the composition is added to a flavored article, the final concentration of rebaudioside E is from 30 to 75 ppm. Alternatively, when the composition is added to a flavored article, the final concentration of rebaudioside E is from 35 to 75 ppm. Alternatively, when the composition is added to a flavored article, the final concentration of rebaudioside E is from 40 to 75 ppm. Alternatively, when the composition is added to a flavored article, the final concentration of rebaudioside E is from 45 to 75 ppm. Alternatively, when the composition is added to a flavored article, the final concentration of rebaudioside E is from 50 to 75 ppm. Alternatively, when the composition is added to a flavored article, the final concentration of rebaudioside E is from 55 to 75 ppm. Alternatively, when the composition is added to a flavored article, the final concentration of rebaudioside E is from 60 to 75 ppm. Alternatively, when the composition is added to a flavored article, the final concentration of rebaudioside E is from 65 to 75 ppm. Alternatively, when the composition is added to a flavored article, the final concentration of rebaudioside E is from 70 to 75 ppm.

In some embodiments, when the composition is added to a flavored article, the final concentration of rebaudioside E is 10, or 15, or 20, or 25, or 30, or 35, or 40, or 45, or 50, or 55, or 60, or 65, or 70, or, or 75 ppm.

In some embodiments, when the composition is added to a flavored article, the final concentration of glucosylated natural steviol glycosides (GSGs) is from 5 to 125 ppm. Alternatively, when the composition is added to a flavored article, the final concentration of glucosylated natural steviol glycosides (GSGs) is from 5 to 120 ppm. Alternatively, when the composition is added to a flavored article, the final concentration of glucosylated natural steviol glycosides (GSGs) is from 5 to 115 ppm. Alternatively, when the composition is added to a flavored article, the final concentration of glucosylated natural steviol glycosides (GSGs) is from 5 to 110 ppm. Alternatively, when the composition is added to a flavored article, the final concentration of glucosylated natural steviol glycosides (GSGs) is from 5 to 105 ppm. Alternatively, when the composition is added to a flavored article, the final concentration of glucosylated natural steviol glycosides (GSGs) is from 5 to 100 ppm. Alternatively, when the composition is added to a flavored article, the final concentration of glucosylated natural steviol glycosides (GSGs) is from 5 to 95 ppm. Alternatively, when the composition is added to a flavored article, the final concentration of glucosylated natural steviol glycosides (GSGs) is from 5 to 90 ppm. Alternatively, when the composition is added to a flavored article, the final concentration of glucosylated natural steviol glycosides (GSGs) is from 5 to 85 ppm. Alternatively, when the composition is added to a flavored article, the final concentration of glucosylated natural steviol glycosides (GSGs) is from 5 to 80 ppm. Alternatively, when the composition is added to a flavored article, the final concentration of glucosylated natural steviol glycosides (GSGs) is from 5 to 75 ppm. Alternatively, when the composition is added to a flavored article, the final concentration of glucosylated natural steviol glycosides (GSGs) is from 5 to 70 ppm. Alternatively, when the composition is added to a flavored article, the final concentration of glucosylated natural steviol glycosides (GSGs) is from 5 to 65 ppm. Alternatively, when the composition is added to a flavored article, the final concentration of glucosylated natural steviol glycosides (GSGs) is from 5 to 60 ppm. Alternatively, when the composition is added to a flavored article, the final concentration of glucosylated natural steviol glycosides (GSGs) is from 5 to 55 ppm. Alternatively, when the composition is added to a flavored article, the final concentration of glucosylated natural steviol glycosides (GSGs) is from 5 to 50 ppm. Alternatively, when the composition is added to a flavored article, the final concentration of glucosylated natural steviol glycosides (GSGs) is from 5 to 45 ppm. Alternatively, when the composition is added to a flavored article, the final concentration of glucosylated natural steviol glycosides (GSGs) is from 5 to 40 ppm. Alternatively, when the composition is added to a flavored article, the final concentration of glucosylated natural steviol glycosides (GSGs) is from 5 to 35 ppm. Alternatively, when the composition is added to a flavored article, the final concentration of glucosylated natural steviol glycosides (GSGs) is from 5 to 30 ppm. Alternatively, when the composition is added to a flavored article, the final concentration of glucosylated natural steviol glycosides (GSGs) is from 5 to 25 ppm. Alternatively, when the composition is added to a flavored article, the final concentration of glucosylated natural steviol glycosides (GSGs) is from 5 to 20 ppm. Alternatively, when the composition is added to a flavored article, the final concentration of glucosylated natural steviol glycosides (GSGs) is from 5 to 15 ppm. Alternatively, when the composition is added to a flavored article, the final concentration of glucosylated natural steviol glycosides (GSGs) is from 5 to 10 ppm.

In some embodiments, when the composition is added to a flavored article, the final concentration of glucosylated natural steviol glycosides (GSGs) is from 10 to 125 ppm. Alternatively, when the composition is added to a flavored article, the final concentration of glucosylated natural steviol glycosides (GSGs) is from 15 to 125 ppm. Alternatively, when the composition is added to a flavored article, the final concentration of glucosylated natural steviol glycosides (GSGs) is from 20 to 125 ppm. Alternatively, when the composition is added to a flavored article, the final concentration of glucosylated natural steviol glycosides (GSGs) is from 25 to 125 ppm. Alternatively, when the composition is added to a flavored article, the final concentration of glucosylated natural steviol glycosides (GSGs) is from 30 to 125 ppm. Alternatively, when the composition is added to a flavored article, the final concentration of glucosylated natural steviol glycosides (GSGs) is from 35 to 125 ppm. Alternatively, when the composition is added to a flavored article, the final concentration of glucosylated natural steviol glycosides (GSGs) is from 40 to 125 ppm. Alternatively, when the composition is added to a flavored article, the final concentration of glucosylated natural steviol glycosides (GSGs) is from 45 to 125 ppm. Alternatively, when the composition is added to a flavored article, the final concentration of glucosylated natural steviol glycosides (GSGs) is from 50 to 125 ppm. Alternatively, when the composition is added to a flavored article, the final concentration of glucosylated natural steviol glycosides (GSGs) is from 55 to 125 ppm. Alternatively, when the composition is added to a flavored article, the final concentration of glucosylated natural steviol glycosides (GSGs) is from 60 to 125 ppm. Alternatively, when the composition is added to a flavored article, the final concentration of glucosylated natural steviol glycosides (GSGs) is from 65 to 125 ppm. Alternatively, when the composition is added to a flavored article, the final concentration of glucosylated natural steviol glycosides (GSGs) is from 70 to 125 ppm. Alternatively, when the composition is added to a flavored article, the final concentration of glucosylated natural steviol glycosides (GSGs) is from 75 to 125 ppm. Alternatively, when the composition is added to a flavored article, the final concentration of glucosylated natural steviol glycosides (GSGs) is from 80 to 125 ppm. Alternatively, when the composition is added to a flavored article, the final concentration of glucosylated natural steviol glycosides (GSGs) is from 85 to 125 ppm. Alternatively, when the composition is added to a flavored article, the final concentration of glucosylated natural steviol glycosides (GSGs) is from 90 to 125 ppm. Alternatively, when the composition is added to a flavored article, the final concentration of glucosylated natural steviol glycosides (GSGs) is from 95 to 125 ppm. Alternatively, when the composition is added to a flavored article, the final concentration of glucosylated natural steviol glycosides (GSGs) is from 100 to 125 ppm. Alternatively, when the composition is added to a flavored article, the final concentration of glucosylated natural steviol glycosides (GSGs) is from 105 to 125 ppm. Alternatively, when the composition is added to a flavored article, the final concentration of glucosylated natural steviol glycosides (GSGs) is from 110 to 125 ppm. Alternatively, when the composition is added to a flavored article, the final concentration of glucosylated natural steviol glycosides (GSGs) is from 115 to 125 ppm. Alternatively, when the composition is added to a flavored article, the final concentration of glucosylated natural steviol glycosides (GSGs) is from 120 to 125 ppm.

In some embodiments, when the composition is added to a flavored article, the final concentration of glucosylated natural steviol glycosides (GSGs) is 5, or 10, or 15, or 20, or 25, or 30, or 35, or 40, or 45, or 50, or 55, or 60, or 65, or 70, or 75, or 80, or 85, or 90, or 95, or 100, or 105, or 110, or 115, or 120, or 125 ppm.

In some embodiments, the composition comprises an extract comprising steviol glycosides, rebaudioside M, rebaudioside A, and rebaudioside D. In one embodiment, the ratio of the extract comprising steviol glycosides, rebaudioside M, rebaudioside A, to rebaudioside D is from 1:3.3:1:3.3 to 7.5:1.5:2.67:1.

Examples of steviol glycosides suitable for use in the present disclosure include, but are not limited to the steviol glycosides and extracts comprising steviol glycosides disclosed in U.S. Patent Application Publication No. 2015/0141632 A1. Another example of steviol glycosides and extracts comprising steviol glycosides suitable for use in the present disclosure is disclosed in U.S. Patent Application Publication No. 2014/0099403 A1.

In some embodiments, the extract comprising steviol glycosides comprises 95 weight percent steviol glycosides. In some embodiments, the major constituents of the extract comprising steviol glycosides is stevioside and rebaudioside A. In some embodiments, the extract comprising steviol glycosides comprises from 60 to 95 weight percent rebaudioside A. In some embodiments, the extract comprising steviol glycosides comprises additional steviol glycosides, such as, for example, rebaudioside B, rebaudioside C, rebaudioside D, rebaudioside F, dulcoside A, rubusoside and steviolbioside.

In some embodiments, when the composition is added to a flavored article, the final concentration of the extract comprising steviol glycosides is from 5 to 150 ppm. Alternatively, when the composition is added to a flavored article, the final concentration of the extract comprising steviol glycosides is from 10 to 150 ppm. Alternatively, when the composition is added to a flavored article, the final concentration of the extract comprising steviol glycosides is from 15 to 150 ppm. Alternatively, when the composition is added to a flavored article, the final concentration of the extract comprising steviol glycosides is from 20 to 150 ppm. Alternatively, when the composition is added to a flavored article, the final concentration of the extract comprising steviol glycosides is from 25 to 150 ppm. Alternatively, when the composition is added to a flavored article, the final concentration of the extract comprising steviol glycosides is from 30 to 150 ppm. Alternatively, when the composition is added to a flavored article, the final concentration of the extract comprising steviol glycosides is from 35 to 150 ppm. Alternatively, when the composition is added to a flavored article, the final concentration of the extract comprising steviol glycosides is from 40 to 150 ppm. Alternatively, when the composition is added to a flavored article, the final concentration of the extract comprising steviol glycosides is from 45 to 150 ppm. Alternatively, when the composition is added to a flavored article, the final concentration of the extract comprising steviol glycosides is from 50 to 150 ppm. Alternatively, when the composition is added to a flavored article, the final concentration of the extract comprising steviol glycosides is from 55 to 150 ppm. Alternatively, when the composition is added to a flavored article, the final concentration of the extract comprising steviol glycosides is from 60 to 150 ppm. Alternatively, when the composition is added to a flavored article, the final concentration of the extract comprising steviol glycosides is from 65 to 150 ppm. Alternatively, when the composition is added to a flavored article, the final concentration of the extract comprising steviol glycosides is from 70 to 150 ppm. Alternatively, when the composition is added to a flavored article, the final concentration of the extract comprising steviol glycosides is from 75 to 150 ppm. Alternatively, when the composition is added to a flavored article, the final concentration of the extract comprising steviol glycosides is from 80 to 150 ppm. Alternatively, when the composition is added to a flavored article, the final concentration of the extract comprising steviol glycosides is from 85 to 150 ppm. Alternatively, when the composition is added to a flavored article, the final concentration of the extract comprising steviol glycosides is from 90 to 150 ppm. Alternatively, when the composition is added to a flavored article, the final concentration of the extract comprising steviol glycosides is from 95 to 150 ppm. Alternatively, when the composition is added to a flavored article, the final concentration of the extract comprising steviol glycosides is from 100 to 150 ppm. Alternatively, when the composition is added to a flavored article, the final concentration of the extract comprising steviol glycosides is from 105 to 150 ppm. Alternatively, when the composition is added to a flavored article, the final concentration of the extract comprising steviol glycosides is from 110 to 150 ppm. Alternatively, when the composition is added to a flavored article, the final concentration of the extract comprising steviol glycosides is from 115 to 150 ppm. Alternatively, when the composition is added to a flavored article, the final concentration of the extract comprising steviol glycosides is from 10 to 150 ppm. Alternatively, when the composition is added to a flavored article, the final concentration of the extract comprising steviol glycosides is from 120 to 150 ppm. Alternatively, when the composition is added to a flavored article, the final concentration of the extract comprising steviol glycosides is from 125 to 150 ppm. Alternatively, when the composition is added to a flavored article, the final concentration of the extract comprising steviol glycosides is from 130 to 150 ppm. Alternatively, when the composition is added to a flavored article, the final concentration of the extract comprising steviol glycosides is from 135 to 150 ppm. Alternatively, when the composition is added to a flavored article, the final concentration of the extract comprising steviol glycosides is from 140 to 150 ppm. Alternatively, when the composition is added to a flavored article, the final concentration of the extract comprising steviol glycosides is from 145 to 150 ppm.

In some embodiments, when the composition is added to a flavored article, the final concentration of the extract comprising steviol glycosides is from 5 to 145 ppm. Alternatively, when the composition is added to a flavored article, the final concentration of the extract comprising steviol glycosides is from 5 to 140 ppm. Alternatively, when the composition is added to a flavored article, the final concentration of the extract comprising steviol glycosides is from 5 to 135 ppm. Alternatively, when the composition is added to a flavored article, the final concentration of the extract comprising steviol glycosides is from 5 to 130 ppm. Alternatively, when the composition is added to a flavored article, the final concentration of the extract comprising steviol glycosides is from 5 to 125 ppm. Alternatively, when the composition is added to a flavored article, the final concentration of the extract comprising steviol glycosides is from 5 to 120 ppm. Alternatively, when the composition is added to a flavored article, the final concentration of the extract comprising steviol glycosides is from 5 to 115 ppm. Alternatively, when the composition is added to a flavored article, the final concentration of the extract comprising steviol glycosides is from 5 to 110 ppm. Alternatively, when the composition is added to a flavored article, the final concentration of the extract comprising steviol glycosides is from 5 to 105 ppm. Alternatively, when the composition is added to a flavored article, the final concentration of the extract comprising steviol glycosides is from 5 to 100 ppm. Alternatively, when the composition is added to a flavored article, the final concentration of the extract comprising steviol glycosides is from 5 to 95 ppm. Alternatively, when the composition is added to a flavored article, the final concentration of the extract comprising steviol glycosides is from 5 to 90 ppm. Alternatively, when the composition is added to a flavored article, the final concentration of the extract comprising steviol glycosides is from 5 to 85 ppm. Alternatively, when the composition is added to a flavored article, the final concentration of the extract comprising steviol glycosides is from 5 to 80 ppm. Alternatively, when the composition is added to a flavored article, the final concentration of the extract comprising steviol glycosides is from 5 to 75 ppm. Alternatively, when the composition is added to a flavored article, the final concentration of the extract comprising steviol glycosides is from 5 to 70 ppm. Alternatively, when the composition is added to a flavored article, the final concentration of the extract comprising steviol glycosides is from 5 to 65 ppm. Alternatively, when the composition is added to a flavored article, the final concentration of the extract comprising steviol glycosides is from 5 to 60 ppm. Alternatively, when the composition is added to a flavored article, the final concentration of the extract comprising steviol glycosides is from 5 to 55 ppm. Alternatively, when the composition is added to a flavored article, the final concentration of the extract comprising steviol glycosides is from 5 to 50 ppm. Alternatively, when the composition is added to a flavored article, the final concentration of the extract comprising steviol glycosides is from 5 to 45 ppm. Alternatively, when the composition is added to a flavored article, the final concentration of the extract comprising steviol glycosides is from 5 to 40 ppm. Alternatively, when the composition is added to a flavored article, the final concentration of the extract comprising steviol glycosides is from 5 to 35 ppm. Alternatively, when the composition is added to a flavored article, the final concentration of the extract comprising steviol glycosides is from 5 to 30 ppm. Alternatively, when the composition is added to a flavored article, the final concentration of the extract comprising steviol glycosides is from 5 to 25 ppm. Alternatively, when the composition is added to a flavored article, the final concentration of the extract comprising steviol glycosides is from 5 to 20 ppm. Alternatively, when the composition is added to a flavored article, the final concentration of the extract comprising steviol glycosides is from 5 to 15 ppm. Alternatively, when the composition is added to a flavored article, the final concentration of the extract comprising steviol glycosides is from 5 to 10 ppm.

In some embodiments, when the composition is added to a flavored article, the final concentration of the extract comprising steviol glycosides is 5, or 10, or 15, or 20, or 25, or 30, or 35, or 40, or 45, or 50, or 55, or 60, or 65, or 70, or 75, or 80, or 85, or 90, or 95, or 100, or 105, or 110, or 115, or 120, or 125, or 130, or 135, or 140, or 145, or 150 ppm.

In some embodiments, when the composition is added to a flavored article, the final concentration of rebaudioside M is from 5 to 45 ppm. Alternatively, when the composition is added to a flavored article, the final concentration of rebaudioside M is from 5 to 40 ppm. Alternatively, when the composition is added to a flavored article, the final concentration of rebaudioside M is from 5 to 35 ppm. Alternatively, when the composition is added to a flavored article, the final concentration of rebaudioside M is from 5 to 30 ppm. Alternatively, when the composition is added to a flavored article, the final concentration of rebaudioside M is from 5 to 25 ppm. Alternatively, when the composition is added to a flavored article, the final concentration of rebaudioside M is from 5 to 20 ppm. Alternatively, when the composition is added to a flavored article, the final concentration of rebaudioside M is from 5 to 15 ppm. Alternatively, when the composition is added to a flavored article, the final concentration of rebaudioside M is from 5 to 10 ppm.

In some embodiments, when the composition is added to a flavored article, the final concentration of rebaudioside M is from 10 to 45 ppm. Alternatively, when the composition is added to a flavored article, the final concentration of rebaudioside M is from 15 to 45 ppm. Alternatively, when the composition is added to a flavored article, the final concentration of rebaudioside M is from 20 to 45 ppm. Alternatively, when the composition is added to a flavored article, the final concentration of rebaudioside M is from 25 to 45 ppm. Alternatively, when the composition is added to a flavored article, the final concentration of rebaudioside M is from 30 to 45 ppm. Alternatively, when the composition is added to a flavored article, the final concentration of rebaudioside M is from 35 to 45 ppm. Alternatively, when the composition is added to a flavored article, the final concentration of rebaudioside M is from 40 to 45 ppm.

In some embodiments, when the composition is added to a flavored article, the final concentration of rebaudioside M is 5, or 10, or 15, or 20, or 35, or 30, or 35, or 40, or 45 ppm.

In some embodiments, when the composition is added to a flavored article, the final concentration of rebaudioside A is from 5 to 150 ppm. Alternatively, when the composition is added to a flavored article, the final concentration of rebaudioside A is from 10 to 150 ppm. Alternatively, when the composition is added to a flavored article, the final concentration of rebaudioside A is from 15 to 150 ppm. Alternatively, when the composition is added to a flavored article, the final concentration of rebaudioside A is from 20 to 150 ppm. Alternatively, when the composition is added to a flavored article, the final concentration of rebaudioside A is from 25 to 150 ppm. Alternatively, when the composition is added to a flavored article, the final concentration of rebaudioside A is from 30 to 150 ppm. Alternatively, when the composition is added to a flavored article, the final concentration of rebaudioside A is from 35 to 150 ppm. Alternatively, when the composition is added to a flavored article, the final concentration of rebaudioside A is from 40 to 150 ppm. Alternatively, when the composition is added to a flavored article, the final concentration of rebaudioside A is from 45 to 150 ppm. Alternatively, when the composition is added to a flavored article, the final concentration of rebaudioside A is from 50 to 150 ppm. Alternatively, when the composition is added to a flavored article, the final concentration of rebaudioside A is from 55 to 150 ppm. Alternatively, when the composition is added to a flavored article, the final concentration of rebaudioside A is from 60 to 150 ppm. Alternatively, when the composition is added to a flavored article, the final concentration of rebaudioside A is from 65 to 150 ppm. Alternatively, when the composition is added to a flavored article, the final concentration of rebaudioside A is from 70 to 150 ppm. Alternatively, when the composition is added to a flavored article, the final concentration of rebaudioside A is from 75 to 150 ppm. Alternatively, when the composition is added to a flavored article, the final concentration of rebaudioside A is from 80 to 150 ppm. Alternatively, when the composition is added to a flavored article, the final concentration of rebaudioside A is from 85 to 150 ppm. Alternatively, when the composition is added to a flavored article, the final concentration of rebaudioside A is from 90 to 150 ppm. Alternatively, when the composition is added to a flavored article, the final concentration of rebaudioside A is from 95 to 150 ppm. Alternatively, when the composition is added to a flavored article, the final concentration of rebaudioside A is from 100 to 150 ppm. Alternatively, when the composition is added to a flavored article, the final concentration of rebaudioside A is from 105 to 150 ppm. Alternatively, when the composition is added to a flavored article, the final concentration of rebaudioside A is from 110 to 150 ppm. Alternatively, when the composition is added to a flavored article, the final concentration of rebaudioside A is from 115 to 150 ppm. Alternatively, when the composition is added to a flavored article, the final concentration of rebaudioside A is from 10 to 150 ppm. Alternatively, when the composition is added to a flavored article, the final concentration of rebaudioside A is from 120 to 150 ppm. Alternatively, when the composition is added to a flavored article, the final concentration of rebaudioside A is from 125 to 150 ppm. Alternatively, when the composition is added to a flavored article, the final concentration of rebaudioside A is from 130 to 150 ppm. Alternatively, when the composition is added to a flavored article, the final concentration of rebaudioside A is from 135 to 150 ppm. Alternatively, when the composition is added to a flavored article, the final concentration of rebaudioside A is from 140 to 150 ppm. Alternatively, when the composition is added to a flavored article, the final concentration of rebaudioside A is from 145 to 150 ppm.

In some embodiments, when the composition is added to a flavored article, the final concentration of rebaudioside A is from 5 to 145 ppm. Alternatively, when the composition is added to a flavored article, the final concentration of rebaudioside A is from 5 to 140 ppm. Alternatively, when the composition is added to a flavored article, the final concentration of rebaudioside A is from 5 to 135 ppm. Alternatively, when the composition is added to a flavored article, the final concentration of rebaudioside A is from 5 to 130 ppm. Alternatively, when the composition is added to a flavored article, the final concentration of rebaudioside A is from 5 to 125 ppm. Alternatively, when the composition is added to a flavored article, the final concentration of rebaudioside A is from 5 to 120 ppm. Alternatively, when the composition is added to a flavored article, the final concentration of rebaudioside A is from 5 to 115 ppm. Alternatively, when the composition is added to a flavored article, the final concentration of rebaudioside A is from 5 to 110 ppm. Alternatively, when the composition is added to a flavored article, the final concentration of rebaudioside A is from 5 to 105 ppm. Alternatively, when the composition is added to a flavored article, the final concentration of rebaudioside A is from 5 to 100 ppm. Alternatively, when the composition is added to a flavored article, the final concentration of rebaudioside A is from 5 to 95 ppm. Alternatively, when the composition is added to a flavored article, the final concentration of rebaudioside A is from 5 to 90 ppm. Alternatively, when the composition is added to a flavored article, the final concentration of rebaudioside A is from 5 to 85 ppm. Alternatively, when the composition is added to a flavored article, the final concentration of rebaudioside A is from 5 to 80 ppm. Alternatively, when the composition is added to a flavored article, the final concentration of rebaudioside A is from 5 to 75 ppm. Alternatively, when the composition is added to a flavored article, the final concentration of rebaudioside A is from 5 to 70 ppm. Alternatively, when the composition is added to a flavored article, the final concentration of rebaudioside A is from 5 to 65 ppm. Alternatively, when the composition is added to a flavored article, the final concentration of rebaudioside A is from 5 to 60 ppm. Alternatively, when the composition is added to a flavored article, the final concentration of rebaudioside A is from 5 to 55 ppm. Alternatively, when the composition is added to a flavored article, the final concentration of rebaudioside A is from 5 to 50 ppm. Alternatively, when the composition is added to a flavored article, the final concentration of rebaudioside A is from 5 to 45 ppm. Alternatively, when the composition is added to a flavored article, the final concentration of rebaudioside A is from 5 to 40 ppm. Alternatively, when the composition is added to a flavored article, the final concentration of rebaudioside A is from 5 to 35 ppm. Alternatively, when the composition is added to a flavored article, the final concentration of rebaudioside A is from 5 to 30 ppm. Alternatively, when the composition is added to a flavored article, the final concentration of rebaudioside A is from 5 to 25 ppm. Alternatively, when the composition is added to a flavored article, the final concentration of rebaudioside A is from 5 to 20 ppm. Alternatively, when the composition is added to a flavored article, the final concentration of rebaudioside A is from 5 to 15 ppm. Alternatively, when the composition is added to a flavored article, the final concentration of rebaudioside A is from 5 to 10 ppm.

In some embodiments, when the composition is added to a flavored article, the final concentration of rebaudioside A is 5, or 10, or 15, or 20, or 25, or 30, or 35, or 40, or 45, or 50, or 55, or 60, or 65, or 70, or 75, or 80, or 85, or 90, or 95, or 100, or 105, or 110, or 115, or 120, or 125, or 130, or 135, or 140, or 145, or 150 ppm.

In some embodiments, when the composition is added to a flavored article, the final concentration of rebaudioside D is from 5 to 45 ppm. Alternatively, when the composition is added to a flavored article, the final concentration of rebaudioside D is from 5 to 40 ppm. Alternatively, when the composition is added to a flavored article, the final concentration of rebaudioside D is from 5 to 35 ppm. Alternatively, when the composition is added to a flavored article, the final concentration of rebaudioside D is from 5 to 30 ppm. Alternatively, when the composition is added to a flavored article, the final concentration of rebaudioside D is from 5 to 25 ppm. Alternatively, when the composition is added to a flavored article, the final concentration of rebaudioside D is from 5 to 20 ppm. Alternatively, when the composition is added to a flavored article, the final concentration of rebaudioside D is from 5 to 15 ppm. Alternatively, when the composition is added to a flavored article, the final concentration of rebaudioside D is from 5 to 10 ppm.

In some embodiments, when the composition is added to a flavored article, the final concentration of rebaudioside D is from 10 to 45 ppm. Alternatively, when the composition is added to a flavored article, the final concentration of rebaudioside D is from 15 to 45 ppm. Alternatively, when the composition is added to a flavored article, the final concentration of rebaudioside D is from 20 to 45 ppm. Alternatively, when the composition is added to a flavored article, the final concentration of rebaudioside D is from 25 to 45 ppm. Alternatively, when the composition is added to a flavored article, the final concentration of rebaudioside D is from 30 to 45 ppm. Alternatively, when the composition is added to a flavored article, the final concentration of rebaudioside D is from 35 to 45 ppm. Alternatively, when the composition is added to a flavored article, the final concentration of rebaudioside D is from 40 to 45 ppm.

In some embodiments, when the composition is added to a flavored article, the final concentration of rebaudioside D is 5, or 10, or 15, or 20, or 35, or 30, or 35, or 40, or 45 ppm.

In some embodiments, the composition comprises mogroside V, rebaudioside A, rebaudioside M, a mouthfeel enhancer comprising a glycerol wash of an edible oil, phloretin, and naringenin. In one embodiment, the ratio of mogroside V, rebaudioside A, rebaudioside M, the mouthfeel enhancer comprising a glycerol wash of an edible oil, phloretin, to naringenin is from 1.313:5:1:12.5:0.125:0.125 to 1.313:5:1:50:0.75:1.25. In one embodiment, the composition is added to a beverage comprising from 5 to 50% w/v of a juice concentrate comprising solids greater than 60 degrees Brix.

In some embodiments, the mogroside V comprises a monk fruit juice extract. In some embodiments, the concentration of the mogroside V in the monk fruit juice extract is 3.5 weight percent.

In some embodiments, when the composition is added to a flavored article, the final concentration of the monk fruit juice extract is from 0.05 to 1.0 weight percent, relative to the weight of the flavored article. Alternatively, when the composition is added to a flavored article, the final concentration of the monk fruit juice extract is from 0.05 to 0.95 weight percent, relative to the weight of the flavored article. Alternatively, when the composition is added to a flavored article, the final concentration of the monk fruit juice extract is from 0.05 to 0.9 weight percent, relative to the weight of the flavored article. Alternatively, when the composition is added to a flavored article, the final concentration of the monk fruit juice extract is from 0.05 to 0.85 weight percent, relative to the weight of the flavored article. Alternatively, when the composition is added to a flavored article, the final concentration of the monk fruit juice extract is from 0.05 to 0.8 weight percent, relative to the weight of the flavored article. Alternatively, when the composition is added to a flavored article, the final concentration of the monk fruit juice extract is from 0.05 to 0.75 weight percent, relative to the weight of the flavored article. Alternatively, when the composition is added to a flavored article, the final concentration of the monk fruit juice extract is from 0.05 to 0.7 weight percent, relative to the weight of the flavored article. Alternatively, when the composition is added to a flavored article, the final concentration of the monk fruit juice extract is from 0.05 to 0.65 weight percent, relative to the weight of the flavored article. Alternatively, when the composition is added to a flavored article, the final concentration of the monk fruit juice extract is from 0.05 to 0.6 weight percent, relative to the weight of the flavored article. Alternatively, when the composition is added to a flavored article, the final concentration of the monk fruit juice extract is from 0.05 to 0.55 weight percent, relative to the weight of the flavored article. Alternatively, when the composition is added to a flavored article, the final concentration of the monk fruit juice extract is from 0.05 to 0.5 weight percent, relative to the weight of the flavored article. Alternatively, when the composition is added to a flavored article, the final concentration of the monk fruit juice extract is from 0.05 to 0.45 weight percent, relative to the weight of the flavored article. Alternatively, when the composition is added to a flavored article, the final concentration of the monk fruit juice extract is from 0.05 to 0.4 weight percent, relative to the weight of the flavored article. Alternatively, when the composition is added to a flavored article, the final concentration of the monk fruit juice extract is from 0.05 to 0.35 weight percent, relative to the weight of the flavored article. Alternatively, when the composition is added to a flavored article, the final concentration of the monk fruit juice extract is from 0.05 to 0.3 weight percent, relative to the weight of the flavored article. Alternatively, when the composition is added to a flavored article, the final concentration of the monk fruit juice extract is from 0.05 to 0.25 weight percent, relative to the weight of the flavored article. Alternatively, when the composition is added to a flavored article, the final concentration of the monk fruit juice extract is from 0.05 to 0.2 weight percent, relative to the weight of the flavored article. Alternatively, when the composition is added to a flavored article, the final concentration of the monk fruit juice extract is from 0.05 to 0.15 weight percent, relative to the weight of the flavored article. Alternatively, when the composition is added to a flavored article, the final concentration of the monk fruit juice extract is from 0.05 to 0.1 weight percent, relative to the weight of the flavored article.

In some embodiments, when the composition is added to a flavored article, the final concentration of the monk fruit juice extract is from 0.1 to 1.0 weight percent, relative to the weight of the flavored article. Alternatively, when the composition is added to a flavored article, the final concentration of the monk fruit juice extract is from 0.15 to 1.0 weight percent, relative to the weight of the flavored article. Alternatively, when the composition is added to a flavored article, the final concentration of the monk fruit juice extract is from 0.2 to 1.0 weight percent, relative to the weight of the flavored article. Alternatively, when the composition is added to a flavored article, the final concentration of the monk fruit juice extract is from 0.25 to 1.0 weight percent, relative to the weight of the flavored article. Alternatively, when the composition is added to a flavored article, the final concentration of the monk fruit juice extract is from 0.3 to 1.0 weight percent, relative to the weight of the flavored article. Alternatively, when the composition is added to a flavored article, the final concentration of the monk fruit juice extract is from 0.35 to 1.0 weight percent, relative to the weight of the flavored article. Alternatively, when the composition is added to a flavored article, the final concentration of the monk fruit juice extract is from 0.4 to 1.0 weight percent, relative to the weight of the flavored article. Alternatively, when the composition is added to a flavored article, the final concentration of the monk fruit juice extract is from 0.45 to 1.0 weight percent, relative to the weight of the flavored article. Alternatively, when the composition is added to a flavored article, the final concentration of the monk fruit juice extract is from 0.5 to 1.0 weight percent, relative to the weight of the flavored article. Alternatively, when the composition is added to a flavored article, the final concentration of the monk fruit juice extract is from 0.55 to 1.0 weight percent, relative to the weight of the flavored article. Alternatively, when the composition is added to a flavored article, the final concentration of the monk fruit juice extract is from 0.6 to 1.0 weight percent, relative to the weight of the flavored article. Alternatively, when the composition is added to a flavored article, the final concentration of the monk fruit juice extract is from 0.65 to 1.0 weight percent, relative to the weight of the flavored article. Alternatively, when the composition is added to a flavored article, the final concentration of the monk fruit juice extract is from 0.7 to 1.0 weight percent, relative to the weight of the flavored article. Alternatively, when the composition is added to a flavored article, the final concentration of the monk fruit juice extract is from 0.75 to 1.0 weight percent, relative to the weight of the flavored article. Alternatively, when the composition is added to a flavored article, the final concentration of the monk fruit juice extract is from 0.8 to 1.0 weight percent, relative to the weight of the flavored article. Alternatively, when the composition is added to a flavored article, the final concentration of the monk fruit juice extract is from 0.85 to 1.0 weight percent, relative to the weight of the flavored article. Alternatively, when the composition is added to a flavored article, the final concentration of the monk fruit juice extract is from 0.9 to 1.0 weight percent, relative to the weight of the flavored article. Alternatively, when the composition is added to a flavored article, the final concentration of the monk fruit juice extract is from 0.95 to 1.0 weight percent, relative to the weight of the flavored article.

In some embodiments, when the composition is added to a flavored article, the final concentration of the monk fruit juice extract is 0.1, or 0.15, or 0.2, or 0.25, or 0.3, or 0.35, or 0.4, or 0.45, or 0.5, or 0.55, or 0.6, or 0.65, or 0.7, or 0.75, or 0.8, or 0.85, or 0.9, or 0.95, or 1.0 weight percent, relative to the weight of the flavored article.

In some embodiments, when the composition is added to a flavored article, the final concentration of the monk fruit juice extract is 0.15 weight percent.

In some embodiments, the mogroside V comprises a Luo Han Guo extract. In some embodiments, the concentration of the mogroside V in the Luo Han Guo extract is 50 weight percent.

In some embodiments, when the composition is added to a flavored article, the final concentration of rebaudioside A is from 150 to 400 ppm. Alternatively, when the composition is added to a flavored article, the final concentration of rebaudioside A is from 150 to 350 ppm. Alternatively, when the composition is added to a flavored article, the final concentration of rebaudioside A is from 150 to 250 ppm. Alternatively, when the composition is added to a flavored article, the final concentration of rebaudioside A is from 150 to 350 ppm. Alternatively, when the composition is added to a flavored article, the final concentration of rebaudioside A is from 150 to 200 ppm.

In some embodiments, when the composition is added to a flavored article, the final concentration of rebaudioside A is from 200 to 400 ppm. Alternatively, when the composition is added to a flavored article, the final concentration of rebaudioside A is from 250 to 400 ppm. Alternatively, when the composition is added to a flavored article, the final concentration of rebaudioside A is from 300 to 400 ppm. Alternatively, when the composition is added to a flavored article, the final concentration of rebaudioside A is from 350 to 400 ppm.

In some embodiments, when the composition is added to a flavored article, the final concentration of rebaudioside A is 150, or 200, or 250, or 300, or 350, or 400 ppm.

In some embodiments, when the composition is added to a flavored article, the final concentration of rebaudioside A is 200 ppm.

In some embodiments, when the composition is added to a flavored article, the final concentration of rebaudioside M is from 20 to 400 ppm. In some embodiments, when the composition is added to a flavored article, the final concentration of rebaudioside M is from 40 to 150 ppm. Alternatively, when the composition is added to a flavored article, the final concentration of rebaudioside M is from 40 to 140 ppm. Alternatively, when the composition is added to a flavored article, the final concentration of rebaudioside M is from 40 to 130 ppm. Alternatively, when the composition is added to a flavored article, the final concentration of rebaudioside M is from 40 to 120 ppm. Alternatively, when the composition is added to a flavored article, the final concentration of rebaudioside M is from 40 to 110 ppm. Alternatively, when the composition is added to a flavored article, the final concentration of rebaudioside M is from 40 to 100 ppm. Alternatively, when the composition is added to a flavored article, the final concentration of rebaudioside M is from 40 to 90 ppm. Alternatively, when the composition is added to a flavored article, the final concentration of rebaudioside M is from 40 to 80 ppm. Alternatively, when the composition is added to a flavored article, the final concentration of rebaudioside M is from 40 to 70 ppm. Alternatively, when the composition is added to a flavored article, the final concentration of rebaudioside M is from 40 to 60 ppm. Alternatively, when the composition is added to a flavored article, the final concentration of rebaudioside M is from 40 to 50 ppm.

In some embodiments, when the composition is added to a flavored article, the final concentration of rebaudioside M is from 50 to 150 ppm. Alternatively, when the composition is added to a flavored article, the final concentration of rebaudioside M is from 60 to 150 ppm. Alternatively, when the composition is added to a flavored article, the final concentration of rebaudioside M is from 70 to 150 ppm. Alternatively, when the composition is added to a flavored article, the final concentration of rebaudioside M is from 80 to 150 ppm. Alternatively, when the composition is added to a flavored article, the final concentration of rebaudioside M is from 90 to 150 ppm. Alternatively, when the composition is added to a flavored article, the final concentration of rebaudioside M is from 100 to 150 ppm. Alternatively, when the composition is added to a flavored article, the final concentration of rebaudioside M is from 110 to 150 ppm. Alternatively, when the composition is added to a flavored article, the final concentration of rebaudioside M is from 120 to 150 ppm. Alternatively, when the composition is added to a flavored article, the final concentration of rebaudioside M is from 130 to 150 ppm. Alternatively, when the composition is added to a flavored article, the final concentration of rebaudioside M is from 140 to 150 ppm.

In some embodiments, when the composition is added to a flavored article, the final concentration of rebaudioside M is 40, or 50, or 60, or 70, or 80, or 90, or 100, or 110, or 120, or 130, 140, or 150 ppm.

In some embodiments, when the composition is added to a flavored article, the final concentration of rebaudioside M is 40 ppm.

In some embodiments, when the composition is added to a flavored article, the final concentration of the mouthfeel enhancer comprising a glycerol wash of an edible oil is from 50 to 2000 ppm. Alternatively, when the composition is added to a flavored article, the final concentration of the mouthfeel enhancer comprising a glycerol wash of an edible oil is from 50 to 1500 ppm. Alternatively, when the composition is added to a flavored article, the final concentration of the mouthfeel enhancer comprising a glycerol wash of an edible oil is from 50 to 1000 ppm. Alternatively, when the composition is added to a flavored article, the final concentration of the mouthfeel enhancer comprising a glycerol wash of an edible oil is from 50 to 900 ppm. Alternatively, when the composition is added to a flavored article, the final concentration of the mouthfeel enhancer comprising a glycerol wash of an edible oil is from 50 to 800 ppm. Alternatively, when the composition is added to a flavored article, the final concentration of the mouthfeel enhancer comprising a glycerol wash of an edible oil is from 50 to 700 ppm. Alternatively, when the composition is added to a flavored article, the final concentration of the mouthfeel enhancer comprising a glycerol wash of an edible oil is from 50 to 600 ppm. Alternatively, when the composition is added to a flavored article, the final concentration of the mouthfeel enhancer comprising a glycerol wash of an edible oil is from 50 to 500 ppm. Alternatively, when the composition is added to a flavored article, the final concentration of the mouthfeel enhancer comprising a glycerol wash of an edible oil is from 50 to 400 ppm. Alternatively, when the composition is added to a flavored article, the final concentration of the mouthfeel enhancer comprising a glycerol wash of an edible oil is from 50 to 300 ppm. Alternatively, when the composition is added to a flavored article, the final concentration of the mouthfeel enhancer comprising a glycerol wash of an edible oil is from 50 to 200 ppm. Alternatively, when the composition is added to a flavored article, the final concentration of the mouthfeel enhancer comprising a glycerol wash of an edible oil is from 50 to 100 ppm. Alternatively, when the composition is added to a flavored article, the final concentration of the mouthfeel enhancer comprising a glycerol wash of an edible oil is from 50 to 90 ppm. Alternatively, when the composition is added to a flavored article, the final concentration of the mouthfeel enhancer comprising a glycerol wash of an edible oil is from 50 to 80 ppm. Alternatively, when the composition is added to a flavored article, the final concentration of the mouthfeel enhancer comprising a glycerol wash of an edible oil is from 50 to 70 ppm. Alternatively, when the composition is added to a flavored article, the final concentration of the mouthfeel enhancer comprising a glycerol wash of an edible oil is from 50 to 60 ppm.

In some embodiments, when the composition is added to a flavored article, the final concentration of the mouthfeel enhancer comprising a glycerol wash of an edible oil is from 60 to 2000 ppm. Alternatively, when the composition is added to a flavored article, the final concentration of the mouthfeel enhancer comprising a glycerol wash of an edible oil is from 70 to 2000 ppm. Alternatively, when the composition is added to a flavored article, the final concentration of the mouthfeel enhancer comprising a glycerol wash of an edible oil is from 80 to 2000 ppm. Alternatively, when the composition is added to a flavored article, the final concentration of the mouthfeel enhancer comprising a glycerol wash of an edible oil is from 90 to 2000 ppm. Alternatively, when the composition is added to a flavored article, the final concentration of the mouthfeel enhancer comprising a glycerol wash of an edible oil is from 100 to 2000 ppm. Alternatively, when the composition is added to a flavored article, the final concentration of the mouthfeel enhancer comprising a glycerol wash of an edible oil is from 200 to 2000 ppm. Alternatively, when the composition is added to a flavored article, the final concentration of the mouthfeel enhancer comprising a glycerol wash of an edible oil is from 300 to 2000 ppm. Alternatively, when the composition is added to a flavored article, the final concentration of the mouthfeel enhancer comprising a glycerol wash of an edible oil is from 400 to 2000 ppm. Alternatively, when the composition is added to a flavored article, the final concentration of the mouthfeel enhancer comprising a glycerol wash of an edible oil is from 500 to 2000 ppm. Alternatively, when the composition is added to a flavored article, the final concentration of the mouthfeel enhancer comprising a glycerol wash of an edible oil is from 600 to 2000 ppm. Alternatively, when the composition is added to a flavored article, the final concentration of the mouthfeel enhancer comprising a glycerol wash of an edible oil is from 700 to 2000 ppm. Alternatively, when the composition is added to a flavored article, the final concentration of the mouthfeel enhancer comprising a glycerol wash of an edible oil is from 800 to 2000 ppm. Alternatively, when the composition is added to a flavored article, the final concentration of the mouthfeel enhancer comprising a glycerol wash of an edible oil is from 900 to 2000 ppm. Alternatively, when the composition is added to a flavored article, the final concentration of the mouthfeel enhancer comprising a glycerol wash of an edible oil is from 1000 to 2000 ppm. Alternatively, when the composition is added to a flavored article, the final concentration of the mouthfeel enhancer comprising a glycerol wash of an edible oil is from 1500 to 2000 ppm.

In some embodiments, when the composition is added to a flavored article, the final concentration of the mouthfeel enhancer comprising a glycerol wash of an edible oil is 50, or 60, or 70, or 80, or 90, or 100, or 200, or 300, or 400, or 500, or 600, or 700, or 800, or 900, or 1000, or 1500, or 2000 ppm.

In some embodiments, when the composition is added to a flavored article, the final concentration of phloretin is from 5 to 30 ppm. Alternatively, when the composition is added to a flavored article, the final concentration of phloretin is from 5 to 25 ppm. Alternatively, when the composition is added to a flavored article, the final concentration of phloretin is from 5 to 20 ppm. Alternatively, when the composition is added to a flavored article, the final concentration of phloretin is from 5 to 15 ppm. Alternatively, when the composition is added to a flavored article, the final concentration of phloretin is from 5 to 10 ppm.

In some embodiments, when the composition is added to a flavored article, the final concentration of phloretin is from 10 to 30 ppm. Alternatively, when the composition is added to a flavored article, the final concentration of phloretin is from 15 to 30 ppm. Alternatively, when the composition is added to a flavored article, the final concentration of phloretin is from 20 to 30 ppm. Alternatively, when the composition is added to a flavored article, the final concentration of phloretin is from 25 to 30 ppm.

In some embodiments, when the composition is added to a flavored article, the final concentration of phloretin is 5, or 10, or 15, or 20, or 25, or 30 ppm.

In some embodiments, when the composition is added to a flavored article, the final concentration of naringenin is from 5 to 50 ppm. Alternatively, when the composition is added to a flavored article, the final concentration of naringenin is from 5 to 45 ppm. Alternatively, when the composition is added to a flavored article, the final concentration of naringenin is from 5 to 40 ppm. Alternatively, when the composition is added to a flavored article, the final concentration of naringenin is from 5 to 35 ppm. Alternatively, when the composition is added to a flavored article, the final concentration of naringenin is from 5 to 30 ppm. Alternatively, when the composition is added to a flavored article, the final concentration of naringenin is from 5 to 25 ppm. Alternatively, when the composition is added to a flavored article, the final concentration of naringenin is from 5 to 20 ppm. Alternatively, when the composition is added to a flavored article, the final concentration of naringenin is from 5 to 15 ppm. Alternatively, when the composition is added to a flavored article, the final concentration of naringenin is from 5 to 10 ppm.

In some embodiments, when the composition is added to a flavored article, the final concentration of naringenin is from 10 to 50 ppm. Alternatively, when the composition is added to a flavored article, the final concentration of naringenin is from 15 to 50 ppm. Alternatively, when the composition is added to a flavored article, the final concentration of naringenin is from 20 to 50 ppm. Alternatively, when the composition is added to a flavored article, the final concentration of naringenin is from 25 to 50 ppm. Alternatively, when the composition is added to a flavored article, the final concentration of naringenin is from 30 to 50 ppm. Alternatively, when the composition is added to a flavored article, the final concentration of naringenin is from 35 to 50 ppm. Alternatively, when the composition is added to a flavored article, the final concentration of naringenin is from 40 to 50 ppm. Alternatively, when the composition is added to a flavored article, the final concentration of naringenin is from 45 to 50 ppm.

In some embodiments, when the composition is added to a flavored article, the final concentration of naringenin is 5, or 10, or 15, or 20, or 25, or 30, or 35, or 40, or 45, or 50 ppm.

In some embodiments, the composition comprises rebaudioside M, glucosylated natural steviol glycosides (GSGs), erythritol, and naringenin.

In some embodiments, the composition further comprises rebaudioside A and an extract comprising steviol glycosides.

In some embodiments, when the composition is added to a flavored article, the final concentration of rebaudioside M is from 40 to 150 ppm. Alternatively, when the composition is added to a flavored article, the final concentration of rebaudioside M is from 45 to 150 ppm. Alternatively, when the composition is added to a flavored article, the final concentration of rebaudioside M is from 50 to 150 ppm. Alternatively, when the composition is added to a flavored article, the final concentration of rebaudioside M is from 55 to 150 ppm. Alternatively, when the composition is added to a flavored article, the final concentration of rebaudioside M is from 60 to 150 ppm. Alternatively, when the composition is added to a flavored article, the final concentration of rebaudioside M is from 65 to 150 ppm. Alternatively, when the composition is added to a flavored article, the final concentration of rebaudioside M is from 70 to 150 ppm. Alternatively, when the composition is added to a flavored article, the final concentration of rebaudioside M is from 75 to 150 ppm. Alternatively, when the composition is added to a flavored article, the final concentration of rebaudioside M is from 80 to 150 ppm. Alternatively, when the composition is added to a flavored article, the final concentration of rebaudioside M is from 85 to 150 ppm. Alternatively, when the composition is added to a flavored article, the final concentration of rebaudioside M is from 90 to 150 ppm. Alternatively, when the composition is added to a flavored article, the final concentration of rebaudioside M is from 95 to 150 ppm. Alternatively, when the composition is added to a flavored article, the final concentration of rebaudioside M is from 100 to 150 ppm. Alternatively, when the composition is added to a flavored article, the final concentration of rebaudioside M is from 105 to 150 ppm. Alternatively, when the composition is added to a flavored article, the final concentration of rebaudioside M is from 110 to 150 ppm. Alternatively, when the composition is added to a flavored article, the final concentration of rebaudioside M is from 115 to 150 ppm. Alternatively, when the composition is added to a flavored article, the final concentration of rebaudioside M is from 120 to 150 ppm. Alternatively, when the composition is added to a flavored article, the final concentration of rebaudioside M is from 125 to 150 ppm. Alternatively, when the composition is added to a flavored article, the final concentration of rebaudioside M is from 130 to 150 ppm. Alternatively, when the composition is added to a flavored article, the final concentration of rebaudioside M is from 135 to 150 ppm. Alternatively, when the composition is added to a flavored article, the final concentration of rebaudioside M is from 140 to 150 ppm. Alternatively, when the composition is added to a flavored article, the final concentration of rebaudioside M is from 145 to 150 ppm.

In some embodiments, when the composition is added to a flavored article, the final concentration of rebaudioside M is from 40 to 145 ppm. Alternatively, when the composition is added to a flavored article, the final concentration of rebaudioside M is from 40 to 140 ppm. Alternatively, when the composition is added to a flavored article, the final concentration of rebaudioside M is from 40 to 135 ppm. Alternatively, when the composition is added to a flavored article, the final concentration of rebaudioside M is from 40 to 130 ppm. Alternatively, when the composition is added to a flavored article, the final concentration of rebaudioside M is from 40 to 125 ppm. Alternatively, when the composition is added to a flavored article, the final concentration of rebaudioside M is from 40 to 120 ppm. Alternatively, when the composition is added to a flavored article, the final concentration of rebaudioside M is from 40 to 115 ppm. Alternatively, when the composition is added to a flavored article, the final concentration of rebaudioside M is from 40 to 110 ppm. Alternatively, when the composition is added to a flavored article, the final concentration of rebaudioside M is from 40 to 95 ppm. Alternatively, when the composition is added to a flavored article, the final concentration of rebaudioside M is from 40 to 90 ppm. Alternatively, when the composition is added to a flavored article, the final concentration of rebaudioside M is from 40 to 85 ppm. Alternatively, when the composition is added to a flavored article, the final concentration of rebaudioside M is from 40 to 80 ppm. Alternatively, when the composition is added to a flavored article, the final concentration of rebaudioside M is from 40 to 75 ppm. Alternatively, when the composition is added to a flavored article, the final concentration of rebaudioside M is from 40 to 70 ppm. Alternatively, when the composition is added to a flavored article, the final concentration of rebaudioside M is from 40 to 65 ppm. Alternatively, when the composition is added to a flavored article, the final concentration of rebaudioside M is from 40 to 60 ppm. Alternatively, when the composition is added to a flavored article, the final concentration of rebaudioside M is from 40 to 55 ppm. Alternatively, when the composition is added to a flavored article, the final concentration of rebaudioside M is from 40 to 50 ppm. Alternatively, when the composition is added to a flavored article, the final concentration of rebaudioside M is from 40 to 45 ppm.

In some embodiments, when the composition is added to a flavored article, the final concentration of rebaudioside M is 40, or 45, or 50, or 55, or 60, or 65, or 70, or 75, or 80, or 85, or 90, or 95, or 100, or 105, or 110, or 115, or 120, or 125, or 130, or 135, or 140, or 145, or 150 ppm.

In some embodiments, when the composition is added to a flavored article, the final concentration of rebaudioside M is 100 ppm.

In some embodiments, when the composition is added to a flavored article, the final concentration of glucosylated natural steviol glycosides (GSGs) is from 40 to 150 ppm. Alternatively, when the composition is added to a flavored article, the final concentration of glucosylated natural steviol glycosides (GSGs) is from 45 to 150 ppm. Alternatively, when the composition is added to a flavored article, the final concentration of glucosylated natural steviol glycosides (GSGs) is from 50 to 150 ppm. Alternatively, when the composition is added to a flavored article, the final concentration of glucosylated natural steviol glycosides (GSGs) is from 55 to 150 ppm. Alternatively, when the composition is added to a flavored article, the final concentration of glucosylated natural steviol glycosides (GSGs) is from 60 to 150 ppm. Alternatively, when the composition is added to a flavored article, the final concentration of glucosylated natural steviol glycosides (GSGs) is from 65 to 150 ppm. Alternatively, when the composition is added to a flavored article, the final concentration of glucosylated natural steviol glycosides (GSGs) is from 70 to 150 ppm. Alternatively, when the composition is added to a flavored article, the final concentration of glucosylated natural steviol glycosides (GSGs) is from 75 to 150 ppm. Alternatively, when the composition is added to a flavored article, the final concentration of glucosylated natural steviol glycosides (GSGs) is from 80 to 150 ppm. Alternatively, when the composition is added to a flavored article, the final concentration of glucosylated natural steviol glycosides (GSGs) is from 85 to 150 ppm. Alternatively, when the composition is added to a flavored article, the final concentration of glucosylated natural steviol glycosides (GSGs) is from 90 to 150 ppm. Alternatively, when the composition is added to a flavored article, the final concentration of glucosylated natural steviol glycosides (GSGs) is from 95 to 150 ppm. Alternatively, when the composition is added to a flavored article, the final concentration of glucosylated natural steviol glycosides (GSGs) is from 100 to 150 ppm. Alternatively, when the composition is added to a flavored article, the final concentration of glucosylated natural steviol glycosides (GSGs) is from 105 to 150 ppm. Alternatively, when the composition is added to a flavored article, the final concentration of glucosylated natural steviol glycosides (GSGs) is from 110 to 150 ppm. Alternatively, when the composition is added to a flavored article, the final concentration of glucosylated natural steviol glycosides (GSGs) is from 115 to 150 ppm. Alternatively, when the composition is added to a flavored article, the final concentration of glucosylated natural steviol glycosides (GSGs) is from 120 to 150 ppm. Alternatively, when the composition is added to a flavored article, the final concentration of glucosylated natural steviol glycosides (GSGs) is from 125 to 150 ppm. Alternatively, when the composition is added to a flavored article, the final concentration of glucosylated natural steviol glycosides (GSGs) is from 130 to 150 ppm. Alternatively, when the composition is added to a flavored article, the final concentration of glucosylated natural steviol glycosides (GSGs) is from 135 to 150 ppm. Alternatively, when the composition is added to a flavored article, the final concentration of glucosylated natural steviol glycosides (GSGs) is from 140 to 150 ppm. Alternatively, when the composition is added to a flavored article, the final concentration of glucosylated natural steviol glycosides (GSGs) is from 145 to 150 ppm.

In some embodiments, when the composition is added to a flavored article, the final concentration of glucosylated natural steviol glycosides (GSGs) is from 40 to 145 ppm. Alternatively, when the composition is added to a flavored article, the final concentration of glucosylated natural steviol glycosides (GSGs) is from 40 to 140 ppm. Alternatively, when the composition is added to a flavored article, the final concentration of glucosylated natural steviol glycosides (GSGs) is from 40 to 135 ppm. Alternatively, when the composition is added to a flavored article, the final concentration of glucosylated natural steviol glycosides (GSGs) is from 40 to 130 ppm. Alternatively, when the composition is added to a flavored article, the final concentration of glucosylated natural steviol glycosides (GSGs) is from 40 to 125 ppm. Alternatively, when the composition is added to a flavored article, the final concentration of glucosylated natural steviol glycosides (GSGs) is from 40 to 120 ppm. Alternatively, when the composition is added to a flavored article, the final concentration of glucosylated natural steviol glycosides (GSGs) is from 40 to 115 ppm. Alternatively, when the composition is added to a flavored article, the final concentration of glucosylated natural steviol glycosides (GSGs) is from 40 to 110 ppm. Alternatively, when the composition is added to a flavored article, the final concentration of glucosylated natural steviol glycosides (GSGs) is from 40 to 95 ppm. Alternatively, when the composition is added to a flavored article, the final concentration of glucosylated natural steviol glycosides (GSGs) is from 40 to 90 ppm. Alternatively, when the composition is added to a flavored article, the final concentration of glucosylated natural steviol glycosides (GSGs) is from 40 to 85 ppm. Alternatively, when the composition is added to a flavored article, the final concentration of glucosylated natural steviol glycosides (GSGs) is from 40 to 80 ppm. Alternatively, when the composition is added to a flavored article, the final concentration of glucosylated natural steviol glycosides (GSGs) is from 40 to 75 ppm. Alternatively, when the composition is added to a flavored article, the final concentration of glucosylated natural steviol glycosides (GSGs) is from 40 to 70 ppm. Alternatively, when the composition is added to a flavored article, the final concentration of glucosylated natural steviol glycosides (GSGs) is from 40 to 65 ppm. Alternatively, when the composition is added to a flavored article, the final concentration of glucosylated natural steviol glycosides (GSGs) is from 40 to 60 ppm. Alternatively, when the composition is added to a flavored article, the final concentration of glucosylated natural steviol glycosides (GSGs) is from 40 to 55 ppm. Alternatively, when the composition is added to a flavored article, the final concentration of glucosylated natural steviol glycosides (GSGs) is from 40 to 50 ppm. Alternatively, when the composition is added to a flavored article, the final concentration of glucosylated natural steviol glycosides (GSGs) is from 40 to 45 ppm.

In some embodiments, when the composition is added to a flavored article, the final concentration of glucosylated natural steviol glycosides (GSGs) is 40, or 45, or 50, or 55, or 60, or 65, or 70, or 75, or 80, or 85, or 90, or 95, or 100, or 105, or 110, or 115, or 120, or 125, or 130, or 135, or 140, or 145, or 150 ppm.

In some embodiments, when the composition is added to a flavored article, the final concentration of glucosylated natural steviol glycosides (GSGs) is 100 ppm.

In some embodiments, when the composition is added to a flavored article, the final concentration of erythritol is from 1000 to 15000 ppm. Alternatively, when the composition is added to a flavored article, the final concentration of erythritol is from 1500 to 15000 ppm. Alternatively, when the composition is added to a flavored article, the final concentration of erythritol is from 2000 to 15000 ppm. Alternatively, when the composition is added to a flavored article, the final concentration of erythritol is from 2500 to 15000 ppm. Alternatively, when the composition is added to a flavored article, the final concentration of erythritol is from 3000 to 15000 ppm. Alternatively, when the composition is added to a flavored article, the final concentration of erythritol is from 3500 to 15000 ppm. Alternatively, when the composition is added to a flavored article, the final concentration of erythritol is from 4000 to 15000 ppm. Alternatively, when the composition is added to a flavored article, the final concentration of erythritol is from 4500 to 15000 ppm. Alternatively, when the composition is added to a flavored article, the final concentration of erythritol is from 5000 to 15000 ppm. Alternatively, when the composition is added to a flavored article, the final concentration of erythritol is from 5500 to 15000 ppm. Alternatively, when the composition is added to a flavored article, the final concentration of erythritol is from 6000 to 15000 ppm. Alternatively, when the composition is added to a flavored article, the final concentration of erythritol is from 6500 to 15000 ppm. Alternatively, when the composition is added to a flavored article, the final concentration of erythritol is from 7000 to 15000 ppm. Alternatively, when the composition is added to a flavored article, the final concentration of erythritol is from 7500 to 15000 ppm. Alternatively, when the composition is added to a flavored article, the final concentration of erythritol is from 8000 to 15000 ppm. Alternatively, when the composition is added to a flavored article, the final concentration of erythritol is from 8500 to 15000 ppm. Alternatively, when the composition is added to a flavored article, the final concentration of erythritol is from 9000 to 15000 ppm. Alternatively, when the composition is added to a flavored article, the final concentration of erythritol is from 9500 to 15000 ppm. Alternatively, when the composition is added to a flavored article, the final concentration of erythritol is from 10000 to 15000 ppm. Alternatively, when the composition is added to a flavored article, the final concentration of erythritol is from 10500 to 15000 ppm. Alternatively, when the composition is added to a flavored article, the final concentration of erythritol is from 11000 to 15000 ppm. Alternatively, when the composition is added to a flavored article, the final concentration of erythritol is from 11500 to 15000 ppm. Alternatively, when the composition is added to a flavored article, the final concentration of erythritol is from 12000 to 15000 ppm. Alternatively, when the composition is added to a flavored article, the final concentration of erythritol is from 12500 to 15000 ppm. Alternatively, when the composition is added to a flavored article, the final concentration of erythritol is from 13000 to 15000 ppm. Alternatively, when the composition is added to a flavored article, the final concentration of erythritol is from 13500 to 15000 ppm. Alternatively, when the composition is added to a flavored article, the final concentration of erythritol is from 14000 to 15000 ppm. Alternatively, when the composition is added to a flavored article, the final concentration of erythritol is from 14500 to 15000 ppm.

In some embodiments, when the composition is added to a flavored article, the final concentration of erythritol is from 1000 to 14500 ppm. Alternatively, when the composition is added to a flavored article, the final concentration of erythritol is from 1000 to 14000 ppm. Alternatively, when the composition is added to a flavored article, the final concentration of erythritol is from 1000 to 13500 ppm. Alternatively, when the composition is added to a flavored article, the final concentration of erythritol is from 1000 to 13000 ppm. Alternatively, when the composition is added to a flavored article, the final concentration of erythritol is from 1000 to 12500 ppm. Alternatively, when the composition is added to a flavored article, the final concentration of erythritol is from 1000 to 12000 ppm. Alternatively, when the composition is added to a flavored article, the final concentration of erythritol is from 1000 to 11500 ppm. Alternatively, when the composition is added to a flavored article, the final concentration of erythritol is from 1000 to 11000 ppm. Alternatively, when the composition is added to a flavored article, the final concentration of erythritol is from 1000 to 10500 ppm. Alternatively, when the composition is added to a flavored article, the final concentration of erythritol is from 1000 to 10000 ppm. Alternatively, when the composition is added to a flavored article, the final concentration of erythritol is from 1000 to 9500 ppm. Alternatively, when the composition is added to a flavored article, the final concentration of erythritol is from 1000 to 9000 ppm. Alternatively, when the composition is added to a flavored article, the final concentration of erythritol is from 1000 to 8500 ppm. Alternatively, when the composition is added to a flavored article, the final concentration of erythritol is from 1000 to 8000 ppm. Alternatively, when the composition is added to a flavored article, the final concentration of erythritol is from 1000 to 7500 ppm. Alternatively, when the composition is added to a flavored article, the final concentration of erythritol is from 1000 to 7000 ppm. Alternatively, when the composition is added to a flavored article, the final concentration of erythritol is from 1000 to 6500 ppm. Alternatively, when the composition is added to a flavored article, the final concentration of erythritol is from 1000 to 6000 ppm. Alternatively, when the composition is added to a flavored article, the final concentration of erythritol is from 1000 to 5500 ppm. Alternatively, when the composition is added to a flavored article, the final concentration of erythritol is from 1000 to 5000 ppm. Alternatively, when the composition is added to a flavored article, the final concentration of erythritol is from 1000 to 4500 ppm. Alternatively, when the composition is added to a flavored article, the final concentration of erythritol is from 1000 to 4000 ppm. Alternatively, when the composition is added to a flavored article, the final concentration of erythritol is from 1000 to 3500 ppm. Alternatively, when the composition is added to a flavored article, the final concentration of erythritol is from 1000 to 3000 ppm. Alternatively, when the composition is added to a flavored article, the final concentration of erythritol is from 1000 to 2500 ppm. Alternatively, when the composition is added to a flavored article, the final concentration of erythritol is from 1000 to 2000 ppm. Alternatively, when the composition is added to a flavored article, the final concentration of erythritol is from 1000 to 1500 ppm.

In some embodiments, when the composition is added to a flavored article, the final concentration of erythritol is from 1000, or 1500, or 2000, or 2500, or 3000, or 3500, or 4000, or 4500, or 5000, or 5500, or 6000, or 6500, or 7000, or 7500, or 8000, or 8500, or 9000, or 9500, or 10000, or 10500, or 11000, or 11500, or 12000, or 12500, or 13000, or 13500, or 14000, or 14500, or 15000 ppm.

In some embodiments, when the composition is added to a flavored article, the final concentration of naringenin is from 5 to 50 ppm. Alternatively, when the composition is added to a flavored article, the final concentration of naringenin is from 5 to 45 ppm. Alternatively, when the composition is added to a flavored article, the final concentration of naringenin is from 5 to 40 ppm. Alternatively, when the composition is added to a flavored article, the final concentration of naringenin is from 5 to 35 ppm. Alternatively, when the composition is added to a flavored article, the final concentration of naringenin is from 5 to 30 ppm. Alternatively, when the composition is added to a flavored article, the final concentration of naringenin is from 5 to 25 ppm. Alternatively, when the composition is added to a flavored article, the final concentration of naringenin is from 5 to 20 ppm. Alternatively, when the composition is added to a flavored article, the final concentration of naringenin is from 5 to 15 ppm. Alternatively, when the composition is added to a flavored article, the final concentration of naringenin is from 5 to 10 ppm.

In some embodiments, when the composition is added to a flavored article, the final concentration of naringenin is from 10 to 50 ppm. Alternatively, when the composition is added to a flavored article, the final concentration of naringenin is from 15 to 50 ppm. Alternatively, when the composition is added to a flavored article, the final concentration of naringenin is from 20 to 50 ppm. Alternatively, when the composition is added to a flavored article, the final concentration of naringenin is from 25 to 50 ppm. Alternatively, when the composition is added to a flavored article, the final concentration of naringenin is from 30 to 50 ppm. Alternatively, when the composition is added to a flavored article, the final concentration of naringenin is from 35 to 50 ppm. Alternatively, when the composition is added to a flavored article, the final concentration of naringenin is from 40 to 50 ppm. Alternatively, when the composition is added to a flavored article, the final concentration of naringenin is from 45 to 50 ppm.

In some embodiments, when the composition is added to a flavored article, the final concentration of naringenin is 5, or 10, or 15, or 20, or 25, or 30, or 35, or 40, or 45, or 50 ppm.

In some embodiments, when the composition is added to a flavored article, the final concentration of the extract comprising steviol glycosides is from 100 to 300 ppm. Alternatively, when the composition is added to a flavored article, the final concentration of the extract comprising steviol glycosides is from 110 to 300 ppm. Alternatively, when the composition is added to a flavored article, the final concentration of the extract comprising steviol glycosides is from 120 to 300 ppm. Alternatively, when the composition is added to a flavored article, the final concentration of the extract comprising steviol glycosides is from 130 to 300 ppm. Alternatively, when the composition is added to a flavored article, the final concentration of the extract comprising steviol glycosides is from 140 to 300 ppm. Alternatively, when the composition is added to a flavored article, the final concentration of the extract comprising steviol glycosides is from 150 to 300 ppm. Alternatively, when the composition is added to a flavored article, the final concentration of the extract comprising steviol glycosides is from 160 to 300 ppm. Alternatively, when the composition is added to a flavored article, the final concentration of the extract comprising steviol glycosides is from 170 to 300 ppm. Alternatively, when the composition is added to a flavored article, the final concentration of the extract comprising steviol glycosides is from 180 to 300 ppm. Alternatively, when the composition is added to a flavored article, the final concentration of the extract comprising steviol glycosides is from 190 to 300 ppm. Alternatively, when the composition is added to a flavored article, the final concentration of the extract comprising steviol glycosides is from 200 to 300 ppm. Alternatively, when the composition is added to a flavored article, the final concentration of the extract comprising steviol glycosides is from 210 to 300 ppm. Alternatively, when the composition is added to a flavored article, the final concentration of the extract comprising steviol glycosides is from 220 to 300 ppm. Alternatively, when the composition is added to a flavored article, the final concentration of the extract comprising steviol glycosides is from 230 to 300 ppm. Alternatively, when the composition is added to a flavored article, the final concentration of the extract comprising steviol glycosides is from 240 to 300 ppm. Alternatively, when the composition is added to a flavored article, the final concentration of the extract comprising steviol glycosides is from 250 to 300 ppm. Alternatively, when the composition is added to a flavored article, the final concentration of the extract comprising steviol glycosides is from 260 to 300 ppm. Alternatively, when the composition is added to a flavored article, the final concentration of the extract comprising steviol glycosides is from 270 to 300 ppm. Alternatively, when the composition is added to a flavored article, the final concentration of the extract comprising steviol glycosides is from 280 to 300 ppm. Alternatively, when the composition is added to a flavored article, the final concentration of the extract comprising steviol glycosides is from 290 to 300 ppm.

In some embodiments, when the composition is added to a flavored article, the final concentration of the extract comprising steviol glycosides is from 100 to 290 ppm. Alternatively, when the composition is added to a flavored article, the final concentration of the extract comprising steviol glycosides is from 100 to 280 ppm. Alternatively, when the composition is added to a flavored article, the final concentration of the extract comprising steviol glycosides is from 100 to 270 ppm. Alternatively, when the composition is added to a flavored article, the final concentration of the extract comprising steviol glycosides is from 100 to 260 ppm. Alternatively, when the composition is added to a flavored article, the final concentration of the extract comprising steviol glycosides is from 100 to 250 ppm. Alternatively, when the composition is added to a flavored article, the final concentration of the extract comprising steviol glycosides is from 100 to 240 ppm. Alternatively, when the composition is added to a flavored article, the final concentration of the extract comprising steviol glycosides is from 100 to 230 ppm. Alternatively, when the composition is added to a flavored article, the final concentration of the extract comprising steviol glycosides is from 100 to 220 ppm. Alternatively, when the composition is added to a flavored article, the final concentration of the extract comprising steviol glycosides is from 100 to 210 ppm. Alternatively, when the composition is added to a flavored article, the final concentration of the extract comprising steviol glycosides is from 100 to 200 ppm. Alternatively, when the composition is added to a flavored article, the final concentration of the extract comprising steviol glycosides is from 100 to 190 ppm. Alternatively, when the composition is added to a flavored article, the final concentration of the extract comprising steviol glycosides is from 100 to 180 ppm. Alternatively, when the composition is added to a flavored article, the final concentration of the extract comprising steviol glycosides is from 100 to 170 ppm.
Alternatively, when the composition is added to a flavored article, the final concentration of the extract comprising steviol glycosides is from 100 to 160 ppm. Alternatively, when the composition is added to a flavored article, the final concentration of the extract comprising steviol glycosides is from 100 to 150 ppm. Alternatively, when the composition is added to a flavored article, the final concentration of the extract comprising steviol glycosides is from 100 to 140 ppm. Alternatively, when the composition is added to a flavored article, the final concentration of the extract comprising steviol glycosides is from 100 to 130 ppm.
Alternatively, when the composition is added to a flavored article, the final concentration of the extract comprising steviol glycosides is from 100 to 120 ppm. Alternatively, when the composition is added to a flavored article, the final concentration of the extract comprising steviol glycosides is from 100 to 110 ppm.

In some embodiments, when the composition is added to a flavored article, the final concentration of the extract comprising steviol glycosides is 100, or 110, or 120, or 130, or 140, or 150, or 160, or 170, or 180, or 190, or 200, or 210, or 220, or 230, or 240, or 250, or 260, or 270, or 280, or 290, or 300 ppm.

In some embodiments, when the composition is added to a flavored article, the final concentration of the extract comprising steviol glycosides is 220 ppm.

In some embodiments, when the composition is added to a flavored article, the final concentration of rebaudioside A is from 40 to 150 ppm. Alternatively, when the composition is added to a flavored article, the final concentration of rebaudioside A is from 45 to 150 ppm. Alternatively, when the composition is added to a flavored article, the final concentration of rebaudioside A is from 50 to 150 ppm. Alternatively, when the composition is added to a flavored article, the final concentration of rebaudioside A is from 55 to 150 ppm. Alternatively, when the composition is added to a flavored article, the final concentration of rebaudioside A is from 60 to 150 ppm. Alternatively, when the composition is added to a flavored article, the final concentration of rebaudioside A is from 65 to 150 ppm. Alternatively, when the composition is added to a flavored article, the final concentration of rebaudioside A is from 70 to 150 ppm. Alternatively, when the composition is added to a flavored article, the final concentration of rebaudioside A is from 75 to 150 ppm. Alternatively, when the composition is added to a flavored article, the final concentration of rebaudioside A is from 80 to 150 ppm. Alternatively, when the composition is added to a flavored article, the final concentration of rebaudioside A is from 85 to 150 ppm. Alternatively, when the composition is added to a flavored article, the final concentration of rebaudioside A is from 90 to 150 ppm. Alternatively, when the composition is added to a flavored article, the final concentration of rebaudioside A is from 95 to 150 ppm. Alternatively, when the composition is added to a flavored article, the final concentration of rebaudioside A is from 100 to 150 ppm. Alternatively, when the composition is added to a flavored article, the final concentration of rebaudioside A is from 105 to 150 ppm. Alternatively, when the composition is added to a flavored article, the final concentration of rebaudioside A is from 110 to 150 ppm. Alternatively, when the composition is added to a flavored article, the final concentration of rebaudioside A is from 115 to 150 ppm. Alternatively, when the composition is added to a flavored article, the final concentration of rebaudioside A is from 120 to 150 ppm. Alternatively, when the composition is added to a flavored article, the final concentration of rebaudioside A is from 125 to 150 ppm. Alternatively, when the composition is added to a flavored article, the final concentration of rebaudioside A is from 130 to 150 ppm. Alternatively, when the composition is added to a flavored article, the final concentration of rebaudioside A is from 135 to 150 ppm. Alternatively, when the composition is added to a flavored article, the final concentration of rebaudioside A is from 140 to 150 ppm. Alternatively, when the composition is added to a flavored article, the final concentration of rebaudioside A is from 145 to 150 ppm.

In some embodiments, when the composition is added to a flavored article, the final concentration of rebaudioside A is from 40 to 145 ppm. Alternatively, when the composition is added to a flavored article, the final concentration of rebaudioside A is from 40 to 140 ppm. Alternatively, when the composition is added to a flavored article, the final concentration of rebaudioside A is from 40 to 135 ppm. Alternatively, when the composition is added to a flavored article, the final concentration of rebaudioside A is from 40 to 130 ppm. Alternatively, when the composition is added to a flavored article, the final concentration of rebaudioside A is from 40 to 125 ppm. Alternatively, when the composition is added to a flavored article, the final concentration of rebaudioside A is from 40 to 120 ppm. Alternatively, when the composition is added to a flavored article, the final concentration of rebaudioside A is from 40 to 115 ppm. Alternatively, when the composition is added to a flavored article, the final concentration of rebaudioside A is from 40 to 110 ppm. Alternatively, when the composition is added to a flavored article, the final concentration of rebaudioside A is from 40 to 95 ppm. Alternatively, when the composition is added to a flavored article, the final concentration of rebaudioside A is from 40 to 90 ppm. Alternatively, when the composition is added to a flavored article, the final concentration of rebaudioside A is from 40 to 85 ppm. Alternatively, when the composition is added to a flavored article, the final concentration of rebaudioside A is from 40 to 80 ppm. Alternatively, when the composition is added to a flavored article, the final concentration of rebaudioside A is from 40 to 75 ppm. Alternatively, when the composition is added to a flavored article, the final concentration of rebaudioside A is from 40 to 70 ppm. Alternatively, when the composition is added to a flavored article, the final concentration of rebaudioside A is from 40 to 65 ppm. Alternatively, when the composition is added to a flavored article, the final concentration of rebaudioside A is from 40 to 60 ppm. Alternatively, when the composition is added to a flavored article, the final concentration of rebaudioside A is from 40 to 55 ppm. Alternatively, when the composition is added to a flavored article, the final concentration of rebaudioside A is from 40 to 50 ppm. Alternatively, when the composition is added to a flavored article, the final concentration of rebaudioside A is from 40 to 45 ppm.

In some embodiments, when the composition is added to a flavored article, the final concentration of rebaudioside A is 40, or 45, or 50, or 55, or 60, or 65, or 70, or 75, or 80, or 85, or 90, or 95, or 100, or 105, or 110, or 115, or 120, or 125, or 130, or 135, or 140, or 145, or 150 ppm.

In some embodiments, when the composition is added to a flavored article, the final concentration of rebaudioside A is 50 ppm.

In some embodiments, the composition comprises sucrose, rebaudioside A, rebaudioside M, and mogroside V. In one embodiment, the composition imparts a desired level of sweetness a the flavored article equivalent to sucrose at 10 to 15 degrees Brix. In one embodiment, the ratio of rebaudioside A, rebaudioside M, to mogroside V is from 10:1:16 to 13.3:1:8.3.

In some embodiments, when the composition is added to a flavored article, the final concentration of sucrose is from 0.1 to 3 weight percent. Alternatively, when the composition is added to a flavored article, the final concentration of sucrose is from 0.1 to 2.9 weight percent. Alternatively, when the composition is added to a flavored article, the final concentration of sucrose is from 0.1 to 2.8 weight percent. Alternatively, when the composition is added to a flavored article, the final concentration of sucrose is from 0.1 to 2.7 weight percent. Alternatively, when the composition is added to a flavored article, the final concentration of sucrose is from 0.1 to 2.6 weight percent. Alternatively, when the composition is added to a flavored article, the final concentration of sucrose is from 0.1 to 2.5 weight percent. Alternatively, when the composition is added to a flavored article, the final concentration of sucrose is from 0.1 to 2.4 weight percent. Alternatively, when the composition is added to a flavored article, the final concentration of sucrose is from 0.1 to 2.3 weight percent. Alternatively, when the composition is added to a flavored article, the final concentration of sucrose is from 0.1 to 2.2 weight percent. Alternatively, when the composition is added to a flavored article, the final concentration of sucrose is from 0.1 to 2.1 weight percent. Alternatively, when the composition is added to a flavored article, the final concentration of sucrose is from 0.1 to 2.0 weight percent. Alternatively, when the composition is added to a flavored article, the final concentration of sucrose is from 0.1 to 1.9 weight percent. Alternatively, when the composition is added to a flavored article, the final concentration of sucrose is from 0.1 to 1.8 weight percent. Alternatively, when the composition is added to a flavored article, the final concentration of sucrose is from 0.1 to 1.7 weight percent. Alternatively, when the composition is added to a flavored article, the final concentration of sucrose is from 0.1 to 1.6 weight percent. Alternatively, when the composition is added to a flavored article, the final concentration of sucrose is from 0.1 to 1.5 weight percent. Alternatively, when the composition is added to a flavored article, the final concentration of sucrose is from 0.1 to 1.4 weight percent. Alternatively, when the composition is added to a flavored article, the final concentration of sucrose is from 0.1 to 1.3 weight percent. Alternatively, when the composition is added to a flavored article, the final concentration of sucrose is from 0.1 to 1.2 weight percent. Alternatively, when the composition is added to a flavored article, the final concentration of sucrose is from 0.1 to 1.1 weight percent. Alternatively, when the composition is added to a flavored article, the final concentration of sucrose is from 0.1 to 1.0 weight percent. Alternatively, when the composition is added to a flavored article, the final concentration of sucrose is from 0.1 to 0.9 weight percent. Alternatively, when the composition is added to a flavored article, the final concentration of sucrose is from 0.1 to 0.8 weight percent. Alternatively, when the composition is added to a flavored article, the final concentration of sucrose is from 0.1 to 0.7 weight percent. Alternatively, when the composition is added to a flavored article, the final concentration of sucrose is from 0.1 to 0.6 weight percent. Alternatively, when the composition is added to a flavored article, the final concentration of sucrose is from 0.1 to 0.5 weight percent. Alternatively, when the composition is added to a flavored article, the final concentration of sucrose is from 0.1 to 0.4 weight percent. Alternatively, when the composition is added to a flavored article, the final concentration of sucrose is from 0.1 to 0.3 weight percent. Alternatively, when the composition is added to a flavored article, the final concentration of sucrose is from 0.1 to 0.2 weight percent.

In some embodiments, when the composition is added to a flavored article, the final concentration of sucrose is from 0.2 to 3 weight percent. Alternatively, when the composition is added to a flavored article, the final concentration of sucrose is from 0.3 to 3 weight percent. Alternatively, when the composition is added to a flavored article, the final concentration of sucrose is from 0.4 to 3 weight percent. Alternatively, when the composition is added to a flavored article, the final concentration of sucrose is from 0.5 to 3 weight percent. Alternatively, when the composition is added to a flavored article, the final concentration of sucrose is from 0.6 to 3 weight percent. Alternatively, when the composition is added to a flavored article, the final concentration of sucrose is from 0.7 to 3 weight percent. Alternatively, when the composition is added to a flavored article, the final concentration of sucrose is from 0.8 to 3 weight percent. Alternatively, when the composition is added to a flavored article, the final concentration of sucrose is from 0.9 to 3 weight percent. Alternatively, when the composition is added to a flavored article, the final concentration of sucrose is from 1.0 to 3 weight percent. Alternatively, when the composition is added to a flavored article, the final concentration of sucrose is from 1.1 to 3 weight percent. Alternatively, when the composition is added to a flavored article, the final concentration of sucrose is from 1.2 to 3 weight percent. Alternatively, when the composition is added to a flavored article, the final concentration of sucrose is from 1.3 to 3 weight percent. Alternatively, when the composition is added to a flavored article, the final concentration of sucrose is from 1.4 to 3 weight percent. Alternatively, when the composition is added to a flavored article, the final concentration of sucrose is from 1.5 to 3 weight percent. Alternatively, when the composition is added to a flavored article, the final concentration of sucrose is from 1.6 to 3 weight percent. Alternatively, when the composition is added to a flavored article, the final concentration of sucrose is from 1.7 to 3 weight percent. Alternatively, when the composition is added to a flavored article, the final concentration of sucrose is from 1.8 to 3 weight percent. Alternatively, when the composition is added to a flavored article, the final concentration of sucrose is from 1.9 to 3 weight percent. Alternatively, when the composition is added to a flavored article, the final concentration of sucrose is from 2.0 to 3 weight percent. Alternatively, when the composition is added to a flavored article, the final concentration of sucrose is from 2.1 to 3 weight percent. Alternatively, when the composition is added to a flavored article, the final concentration of sucrose is from 2.2 to 3 weight percent. Alternatively, when the composition is added to a flavored article, the final concentration of sucrose is from 2.3 to 3 weight percent. Alternatively, when the composition is added to a flavored article, the final concentration of sucrose is from 2.4 to 3 weight percent. Alternatively, when the composition is added to a flavored article, the final concentration of sucrose is from 2.5 to 3 weight percent. Alternatively, when the composition is added to a flavored article, the final concentration of sucrose is from 2.6 to 3 weight percent. Alternatively, when the composition is added to a flavored article, the final concentration of sucrose is from 2.7 to 3 weight percent. Alternatively, when the composition is added to a flavored article, the final concentration of sucrose is from 2.8 to 3 weight percent. Alternatively, when the composition is added to a flavored article, the final concentration of sucrose is from 2.9 to 3 weight percent.

In some embodiments, when the composition is added to a flavored article, the final concentration of sucrose is 0.1, or 0.2, or 0.3, or 0.4, or 0.5, or 0.6, or 0.7, or 0.8, or 0.9, or 1.0, or 1.1, or 1.2, or 1.3, or 1.4, or 1.5, or 1.6, or 1.7, or 1.8, or 1.9, or 2.0, or 2.1, or 2.2, or 2.3, or 2.4, or 2.5, or 2.6, or 2.7, or 2.8, or 2.9, or 3.0 weight percent.

In some embodiments, when the composition is added to a flavored article, the final concentration of sucrose is 2 weight percent.

In some embodiments, when the composition is added to a flavored article, the final concentration of rebaudioside A is from 50 to 400 ppm. Alternatively, when the composition is added to a flavored article, the final concentration of rebaudioside A is from 50 to 350 ppm. Alternatively, when the composition is added to a flavored article, the final concentration of rebaudioside A is from 50 to 300 ppm. Alternatively, when the composition is added to a flavored article, the final concentration of rebaudioside A is from 50 to 250 ppm. Alternatively, when the composition is added to a flavored article, the final concentration of rebaudioside A is from 50 to 200 ppm. Alternatively, when the composition is added to a flavored article, the final concentration of rebaudioside A is from 50 to 150 ppm. Alternatively, when the composition is added to a flavored article, the final concentration of rebaudioside A is from 50 to 100 ppm.

In some embodiments, when the composition is added to a flavored article, the final concentration of rebaudioside A is from 100 to 400 ppm. Alternatively, when the composition is added to a flavored article, the final concentration of rebaudioside A is from 150 to 400 ppm. Alternatively, when the composition is added to a flavored article, the final concentration of rebaudioside A is from 200 to 400 ppm. Alternatively, when the composition is added to a flavored article, the final concentration of rebaudioside A is from 250 to 400 ppm. Alternatively, when the composition is added to a flavored article, the final concentration of rebaudioside A is from 300 to 400 ppm. Alternatively, when the composition is added to a flavored article, the final concentration of rebaudioside A is from 350 to 400 ppm.

In some embodiments, when the composition is added to a flavored article, the final concentration of rebaudioside A is 50, or 100, or 150, or 200, or 250, or 300, or 350, or 400 ppm.

In some embodiments, when the composition is added to a flavored article, the final concentration of rebaudioside M is from 5 to 30 ppm. Alternatively, when the composition is added to a flavored article, the final concentration of rebaudioside M is from 5 to 25 ppm. Alternatively, when the composition is added to a flavored article, the final concentration of rebaudioside M is from 5 to 20 ppm. Alternatively, when the composition is added to a flavored article, the final concentration of rebaudioside M is from 5 to 15 ppm. Alternatively, when the composition is added to a flavored article, the final concentration of rebaudioside M is from 5 to 10 ppm.

In some embodiments, when the composition is added to a flavored article, the final concentration of rebaudioside M is from 10 to 30 ppm. Alternatively, when the composition is added to a flavored article, the final concentration of rebaudioside M is from 15 to 30 ppm. Alternatively, when the composition is added to a flavored article, the final concentration of rebaudioside M is from 20 to 30 ppm. Alternatively, when the composition is added to a flavored article, the final concentration of rebaudioside M is from 25 to 30 ppm.

In some embodiments, when the composition is added to a flavored article, the final concentration of rebaudioside M is 5, or 10, or 15, or 20, or 25, or 30 ppm.

In some embodiments, when the composition is added to a flavored article, the final concentration of mogroside V is from 40 to 250 ppm. Alternatively, when the composition is added to a flavored article, the final concentration of mogroside V is from 40 to 240 ppm. Alternatively, when the composition is added to a flavored article, the final concentration of mogroside V is from 40 to 230 ppm. Alternatively, when the composition is added to a flavored article, the final concentration of mogroside V is from 40 to 220 ppm. Alternatively, when the composition is added to a flavored article, the final concentration of mogroside V is from 40 to 210 ppm. Alternatively, when the composition is added to a flavored article, the final concentration of mogroside V is from 40 to 200 ppm. Alternatively, when the composition is added to a flavored article, the final concentration of mogroside V is from 40 to 190 ppm. Alternatively, when the composition is added to a flavored article, the final concentration of mogroside V is from 40 to 180 ppm. Alternatively, when the composition is added to a flavored article, the final concentration of mogroside V is from 40 to 170 ppm. Alternatively, when the composition is added to a flavored article, the final concentration of mogroside V is from 40 to 160 ppm. Alternatively, when the composition is added to a flavored article, the final concentration of mogroside V is from 40 to 150 ppm. Alternatively, when the composition is added to a flavored article, the final concentration of mogroside V is from 40 to 140 ppm. Alternatively, when the composition is added to a flavored article, the final concentration of mogroside V is from 40 to 130 ppm. Alternatively, when the composition is added to a flavored article, the final concentration of mogroside V is from 40 to 120 ppm. Alternatively, when the composition is added to a flavored article, the final concentration of mogroside V is from 40 to 110 ppm. Alternatively, when the composition is added to a flavored article, the final concentration of mogroside V is from 40 to 100 ppm. Alternatively, when the composition is added to a flavored article, the final concentration of mogroside V is from 40 to 90 ppm. Alternatively, when the composition is added to a flavored article, the final concentration of mogroside V is from 40 to 80 ppm. Alternatively, when the composition is added to a flavored article, the final concentration of mogroside V is from 40 to 70 ppm. Alternatively, when the composition is added to a flavored article, the final concentration of mogroside V is from 40 to 60 ppm. Alternatively, when the composition is added to a flavored article, the final concentration of mogroside V is from 40 to 50 ppm.

In some embodiments, when the composition is added to a flavored article, the final concentration of mogroside V is from 40 to 250 ppm. Alternatively, when the composition is added to a flavored article, the final concentration of mogroside V is from 50 to 250 ppm. Alternatively, when the composition is added to a flavored article, the final concentration of mogroside V is from 60 to 250 ppm. Alternatively, when the composition is added to a flavored article, the final concentration of mogroside V is from 70 to 250 ppm. Alternatively, when the composition is added to a flavored article, the final concentration of mogroside V is from 80 to 250 ppm. Alternatively, when the composition is added to a flavored article, the final concentration of mogroside V is from 90 to 250 ppm. Alternatively, when the composition is added to a flavored article, the final concentration of mogroside V is from 100 to 250 ppm. Alternatively, when the composition is added to a flavored article, the final concentration of mogroside V is from 110 to 250 ppm. Alternatively, when the composition is added to a flavored article, the final concentration of mogroside V is from 120 to 250 ppm. Alternatively, when the composition is added to a flavored article, the final concentration of mogroside V is from 130 to 250 ppm. Alternatively, when the composition is added to a flavored article, the final concentration of mogroside V is from 140 to 250 ppm. Alternatively, when the composition is added to a flavored article, the final concentration of mogroside V is from 150 to 250 ppm. Alternatively, when the composition is added to a flavored article, the final concentration of mogroside V is from 160 to 250 ppm. Alternatively, when the composition is added to a flavored article, the final concentration of mogroside V is from 170 to 250 ppm. Alternatively, when the composition is added to a flavored article, the final concentration of mogroside V is from 180 to 250 ppm. Alternatively, when the composition is added to a flavored article, the final concentration of mogroside V is from 190 to 250 ppm. Alternatively, when the composition is added to a flavored article, the final concentration of mogroside V is from 200 to 250 ppm. Alternatively, when the composition is added to a flavored article, the final concentration of mogroside V is from 210 to 250 ppm. Alternatively, when the composition is added to a flavored article, the final concentration of mogroside V is from 220 to 250 ppm. Alternatively, when the composition is added to a flavored article, the final concentration of mogroside V is from 230 to 250 ppm. Alternatively, when the composition is added to a flavored article, the final concentration of mogroside V is from 240 to 250 ppm.

In some embodiments, when the composition is added to a flavored article, the final concentration of mogroside V is 40, or 50, or 60, or 70, or 80, or 90, or 100, or 110, or 120, or 130, or 140, or 150, or 160, or 170, or 180, or 190, or 200, or 210, or 220, or 230, or 240, or 250 ppm.

In one embodiment, the composition comprises sucrose, rebaudioside A, rebaudioside E, glucosylated natural steviol glycosides (GSGs), phloretin, and naringenin. In one embodiment, the composition imparts a desired level of sweetness a the flavored article equivalent to sucrose at 10 to 15 degrees Brix. In one embodiment, the ratio of rebaudioside A, rebaudioside E, glucosylated natural steviol glycosides (GSGs). phloretin and naringenin is from 6:6:5:1:1 to 80:100:25:6:10.

In some embodiments, when the composition is added to a flavored article, the final concentration of sucrose is from 0.1 to 3 weight percent. Alternatively, when the composition is added to a flavored article, the final concentration of sucrose is from 0.1 to 2.9 weight percent. Alternatively, when the composition is added to a flavored article, the final concentration of sucrose is from 0.1 to 2.8 weight percent. Alternatively, when the composition is added to a flavored article, the final concentration of sucrose is from 0.1 to 2.7 weight percent. Alternatively, when the composition is added to a flavored article, the final concentration of sucrose is from 0.1 to 2.6 weight percent. Alternatively, when the composition is added to a flavored article, the final concentration of sucrose is from 0.1 to 2.5 weight percent. Alternatively, when the composition is added to a flavored article, the final concentration of sucrose is from 0.1 to 2.4 weight percent. Alternatively, when the composition is added to a flavored article, the final concentration of sucrose is from 0.1 to 2.3 weight percent. Alternatively, when the composition is added to a flavored article, the final concentration of sucrose is from 0.1 to 2.2 weight percent. Alternatively, when the composition is added to a flavored article, the final concentration of sucrose is from 0.1 to 2.1 weight percent. Alternatively, when the composition is added to a flavored article, the final concentration of sucrose is from 0.1 to 2.0 weight percent. Alternatively, when the composition is added to a flavored article, the final concentration of sucrose is from 0.1 to 1.9 weight percent. Alternatively, when the composition is added to a flavored article, the final concentration of sucrose is from 0.1 to 1.8 weight percent. Alternatively, when the composition is added to a flavored article, the final concentration of sucrose is from 0.1 to 1.7 weight percent. Alternatively, when the composition is added to a flavored article, the final concentration of sucrose is from 0.1 to 1.6 weight percent. Alternatively, when the composition is added to a flavored article, the final concentration of sucrose is from 0.1 to 1.5 weight percent. Alternatively, when the composition is added to a flavored article, the final concentration of sucrose is from 0.1 to 1.4 weight percent. Alternatively, when the composition is added to a flavored article, the final concentration of sucrose is from 0.1 to 1.3 weight percent. Alternatively, when the composition is added to a flavored article, the final concentration of sucrose is from 0.1 to 1.2 weight percent. Alternatively, when the composition is added to a flavored article, the final concentration of sucrose is from 0.1 to 1.1 weight percent. Alternatively, when the composition is added to a flavored article, the final concentration of sucrose is from 0.1 to 1.0 weight percent. Alternatively, when the composition is added to a flavored article, the final concentration of sucrose is from 0.1 to 0.9 weight percent. Alternatively, when the composition is added to a flavored article, the final concentration of sucrose is from 0.1 to 0.8 weight percent. Alternatively, when the composition is added to a flavored article, the final concentration of sucrose is from 0.1 to 0.7 weight percent. Alternatively, when the composition is added to a flavored article, the final concentration of sucrose is from 0.1 to 0.6 weight percent. Alternatively, when the composition is added to a flavored article, the final concentration of sucrose is from 0.1 to 0.5 weight percent. Alternatively, when the composition is added to a flavored article, the final concentration of sucrose is from 0.1 to 0.4 weight percent. Alternatively, when the composition is added to a flavored article, the final concentration of sucrose is from 0.1 to 0.3 weight percent. Alternatively, when the composition is added to a flavored article, the final concentration of sucrose is from 0.1 to 0.2 weight percent.

In some embodiments, when the composition is added to a flavored article, the final concentration of sucrose is from 0.2 to 3 weight percent. Alternatively, when the composition is added to a flavored article, the final concentration of sucrose is from 0.3 to 3 weight percent. Alternatively, when the composition is added to a flavored article, the final concentration of sucrose is from 0.4 to 3 weight percent. Alternatively, when the composition is added to a flavored article, the final concentration of sucrose is from 0.5 to 3 weight percent. Alternatively, when the composition is added to a flavored article, the final concentration of sucrose is from 0.6 to 3 weight percent. Alternatively, when the composition is added to a flavored article, the final concentration of sucrose is from 0.7 to 3 weight percent. Alternatively, when the composition is added to a flavored article, the final concentration of sucrose is from 0.8 to 3 weight percent. Alternatively, when the composition is added to a flavored article, the final concentration of sucrose is from 0.9 to 3 weight percent. Alternatively, when the composition is added to a flavored article, the final concentration of sucrose is from 1.0 to 3 weight percent. Alternatively, when the composition is added to a flavored article, the final concentration of sucrose is from 1.1 to 3 weight percent. Alternatively, when the composition is added to a flavored article, the final concentration of sucrose is from 1.2 to 3 weight percent. Alternatively, when the composition is added to a flavored article, the final concentration of sucrose is from 1.3 to 3 weight percent. Alternatively, when the composition is added to a flavored article, the final concentration of sucrose is from 1.4 to 3 weight percent. Alternatively, when the composition is added to a flavored article, the final concentration of sucrose is from 1.5 to 3 weight percent. Alternatively, when the composition is added to a flavored article, the final concentration of sucrose is from 1.6 to 3 weight percent. Alternatively, when the composition is added to a flavored article, the final concentration of sucrose is from 1.7 to 3 weight percent. Alternatively, when the composition is added to a flavored article, the final concentration of sucrose is from 1.8 to 3 weight percent. Alternatively, when the composition is added to a flavored article, the final concentration of sucrose is from 1.9 to 3 weight percent. Alternatively, when the composition is added to a flavored article, the final concentration of sucrose is from 2.0 to 3 weight percent. Alternatively, when the composition is added to a flavored article, the final concentration of sucrose is from 2.1 to 3 weight percent. Alternatively, when the composition is added to a flavored article, the final concentration of sucrose is from 2.2 to 3 weight percent. Alternatively, when the composition is added to a flavored article, the final concentration of sucrose is from 2.3 to 3 weight percent. Alternatively, when the composition is added to a flavored article, the final concentration of sucrose is from 2.4 to 3 weight percent. Alternatively, when the composition is added to a flavored article, the final concentration of sucrose is from 2.5 to 3 weight percent. Alternatively, when the composition is added to a flavored article, the final concentration of sucrose is from 2.6 to 3 weight percent. Alternatively, when the composition is added to a flavored article, the final concentration of sucrose is from 2.7 to 3 weight percent. Alternatively, when the composition is added to a flavored article, the final concentration of sucrose is from 2.8 to 3 weight percent. Alternatively, when the composition is added to a flavored article, the final concentration of sucrose is from 2.9 to 3 weight percent.

In some embodiments, when the composition is added to a flavored article, the final concentration of sucrose is 0.1, or 0.2, or 0.3, or 0.4, or 0.5, or 0.6, or 0.7, or 0.8, or 0.9, or 1.0, or 1.1, or 1.2, or 1.3, or 1.4, or 1.5, or 1.6, or 1.7, or 1.8, or 1.9, or 2.0, or 2.1, or 2.2, or 2.3, or 2.4, or 2.5, or 2.6, or 2.7, or 2.8, or 2.9, or 3.0 weight percent.

In some embodiments, when the composition is added to a flavored article, the final concentration of sucrose is 2 weight percent.

In some embodiments, when the composition is added to a flavored article, the final concentration of rebaudioside A is from 30 to 400 ppm. Alternatively, when the composition is added to a flavored article, the final concentration of rebaudioside A is from 30 to 350 ppm. Alternatively, when the composition is added to a flavored article, the final concentration of rebaudioside A is from 30 to 300 ppm. Alternatively, when the composition is added to a flavored article, the final concentration of rebaudioside A is from 30 to 250 ppm. Alternatively, when the composition is added to a flavored article, the final concentration of rebaudioside A is from 30 to 200 ppm. Alternatively, when the composition is added to a flavored article, the final concentration of rebaudioside A is from 30 to 150 ppm. Alternatively, when the composition is added to a flavored article, the final concentration of rebaudioside A is from 30 to 100 ppm. Alternatively, when the composition is added to a flavored article, the final concentration of rebaudioside A is from 30 to 90 ppm. Alternatively, when the composition is added to a flavored article, the final concentration of rebaudioside A is from 30 to 80 ppm. Alternatively, when the composition is added to a flavored article, the final concentration of rebaudioside A is from 30 to 70 ppm. Alternatively, when the composition is added to a flavored article, the final concentration of rebaudioside A is from 30 to 60 ppm. Alternatively, when the composition is added to a flavored article, the final concentration of rebaudioside A is from 30 to 50 ppm. Alternatively, when the composition is added to a flavored article, the final concentration of rebaudioside A is from 30 to 40 ppm.

In some embodiments, when the composition is added to a flavored article, the final concentration of rebaudioside A is from 40 to 400 ppm. Alternatively, when the composition is added to a flavored article, the final concentration of rebaudioside A is from 50 to 400 ppm. Alternatively, when the composition is added to a flavored article, the final concentration of rebaudioside A is from 60 to 400 ppm. Alternatively, when the composition is added to a flavored article, the final concentration of rebaudioside A is from 70 to 400 ppm. Alternatively, when the composition is added to a flavored article, the final concentration of rebaudioside A is from 80 to 400 ppm. Alternatively, when the composition is added to a flavored article, the final concentration of rebaudioside A is from 90 to 400 ppm. Alternatively, when the composition is added to a flavored article, the final concentration of rebaudioside A is from 100 to 400 ppm. Alternatively, when the composition is added to a flavored article, the final concentration of rebaudioside A is from 150 to 400 ppm. Alternatively, when the composition is added to a flavored article, the final concentration of rebaudioside A is from 200 to 400 ppm. Alternatively, when the composition is added to a flavored article, the final concentration of rebaudioside A is from 250 to 400 ppm. Alternatively, when the composition is added to a flavored article, the final concentration of rebaudioside A is from 300 to 400 ppm. Alternatively, when the composition is added to a flavored article, the final concentration of rebaudioside A is from 350 to 400 ppm.

In some embodiments, when the composition is added to a flavored article, the final concentration of rebaudioside A is 30, or 40, or 50, or 60, or 70, or 80, or 90, or 100, or 150, or 200, or 250, or 300, or 350, or 400 ppm.

In some embodiments, when the composition is added to a flavored article, the final concentration of rebaudioside E is from 30 to 500 ppm. Alternatively, when the composition is added to a flavored article, the final concentration of rebaudioside E is from 30 to 450 ppm. Alternatively, when the composition is added to a flavored article, the final concentration of rebaudioside E is from 30 to 400 ppm. Alternatively, when the composition is added to a flavored article, the final concentration of rebaudioside E is from 30 to 350 ppm. Alternatively, when the composition is added to a flavored article, the final concentration of rebaudioside E is from 30 to 300 ppm. Alternatively, when the composition is added to a flavored article, the final concentration of rebaudioside E is from 30 to 250 ppm. Alternatively, when the composition is added to a flavored article, the final concentration of rebaudioside E is from 30 to 200 ppm. Alternatively, when the composition is added to a flavored article, the final concentration of rebaudioside E is from 30 to 150 ppm. Alternatively, when the composition is added to a flavored article, the final concentration of rebaudioside E is from 30 to 100 ppm. Alternatively, when the composition is added to a flavored article, the final concentration of rebaudioside E is from 30 to 90 ppm. Alternatively, when the composition is added to a flavored article, the final concentration of rebaudioside E is from 30 to 80 ppm. Alternatively, when the composition is added to a flavored article, the final concentration of rebaudioside E is from 30 to 70 ppm. Alternatively, when the composition is added to a flavored article, the final concentration of rebaudioside E is from 30 to 60 ppm. Alternatively, when the composition is added to a flavored article, the final concentration of rebaudioside E is from 30 to 50 ppm. Alternatively, when the composition is added to a flavored article, the final concentration of rebaudioside E is from 30 to 40 ppm.

In some embodiments, when the composition is added to a flavored article, the final concentration of rebaudioside E is from 40 to 500 ppm. Alternatively, when the composition is added to a flavored article, the final concentration of rebaudioside E is from 50 to 500 ppm. Alternatively, when the composition is added to a flavored article, the final concentration of rebaudioside E is from 60 to 500 ppm. Alternatively, when the composition is added to a flavored article, the final concentration of rebaudioside E is from 70 to 500 ppm. Alternatively, when the composition is added to a flavored article, the final concentration of rebaudioside E is from 80 to 500 ppm. Alternatively, when the composition is added to a flavored article, the final concentration of rebaudioside E is from 90 to 500 ppm. Alternatively, when the composition is added to a flavored article, the final concentration of rebaudioside E is from 100 to 500 ppm. Alternatively, when the composition is added to a flavored article, the final concentration of rebaudioside E is from 150 to 500 ppm. Alternatively, when the composition is added to a flavored article, the final concentration of rebaudioside E is from 200 to 500 ppm. Alternatively, when the composition is added to a flavored article, the final concentration of rebaudioside E is from 250 to 500 ppm. Alternatively, when the composition is added to a flavored article, the final concentration of rebaudioside E is from 300 to 500 ppm. Alternatively, when the composition is added to a flavored article, the final concentration of rebaudioside E is from 350 to 500 ppm. Alternatively, when the composition is added to a flavored article, the final concentration of rebaudioside E is from 400 to 500 ppm. Alternatively, when the composition is added to a flavored article, the final concentration of rebaudioside E is from 450 to 500 ppm.

In some embodiments, when the composition is added to a flavored article, the final concentration of rebaudioside E is 30, or 40, or 50, or 60, or 70, or 80, or 90, or 100, or 150, or 200, or 250, or 300, or 350, or 400, or 450, or 500 ppm.

In some embodiments, when the composition is added to a flavored article, the final concentration of glucosylated natural steviol glycosides (GSGs) is from 25 to 125 ppm. Alternatively, when the composition is added to a flavored article, the final concentration of glucosylated natural steviol glycosides (GSGs) is from 25 to 120 ppm. Alternatively, when the composition is added to a flavored article, the final concentration of glucosylated natural steviol glycosides (GSGs) is from 25 to 115 ppm. Alternatively, when the composition is added to a flavored article, the final concentration of glucosylated natural steviol glycosides (GSGs) is from 25 to 110 ppm. Alternatively, when the composition is added to a flavored article, the final concentration of glucosylated natural steviol glycosides (GSGs) is from 25 to 105 ppm. Alternatively, when the composition is added to a flavored article, the final concentration of glucosylated natural steviol glycosides (GSGs) is from 25 to 100 ppm. Alternatively, when the composition is added to a flavored article, the final concentration of glucosylated natural steviol glycosides (GSGs) is from 25 to 95 ppm. Alternatively, when the composition is added to a flavored article, the final concentration of glucosylated natural steviol glycosides (GSGs) is from 25 to 90 ppm. Alternatively, when the composition is added to a flavored article, the final concentration of glucosylated natural steviol glycosides (GSGs) is from 25 to 85 ppm. Alternatively, when the composition is added to a flavored article, the final concentration of glucosylated natural steviol glycosides (GSGs) is from 25 to 80 ppm. Alternatively, when the composition is added to a flavored article, the final concentration of glucosylated natural steviol glycosides (GSGs) is from 25 to 75 ppm. Alternatively, when the composition is added to a flavored article, the final concentration of glucosylated natural steviol glycosides (GSGs) is from 25 to 70 ppm. Alternatively, when the composition is added to a flavored article, the final concentration of glucosylated natural steviol glycosides (GSGs) is from 25 to 65 ppm. Alternatively, when the composition is added to a flavored article, the final concentration of glucosylated natural steviol glycosides (GSGs) is from 25 to 60 ppm. Alternatively, when the composition is added to a flavored article, the final concentration of glucosylated natural steviol glycosides (GSGs) is from 25 to 55 ppm. Alternatively, when the composition is added to a flavored article, the final concentration of glucosylated natural steviol glycosides (GSGs) is from 25 to 50 ppm. Alternatively, when the composition is added to a flavored article, the final concentration of glucosylated natural steviol glycosides (GSGs) is from 25 to 45 ppm. Alternatively, when the composition is added to a flavored article, the final concentration of glucosylated natural steviol glycosides (GSGs) is from 25 to 40 ppm. Alternatively, when the composition is added to a flavored article, the final concentration of glucosylated natural steviol glycosides (GSGs) is from 25 to 35 ppm. Alternatively, when the composition is added to a flavored article, the final concentration of glucosylated natural steviol glycosides (GSGs) is from 25 to 30 ppm.

In some embodiments, when the composition is added to a flavored article, the final concentration of glucosylated natural steviol glycosides (GSGs) is from 30 to 125 ppm. Alternatively, when the composition is added to a flavored article, the final concentration of glucosylated natural steviol glycosides (GSGs) is from 35 to 125 ppm. Alternatively, when the composition is added to a flavored article, the final concentration of glucosylated natural steviol glycosides (GSGs) is from 40 to 125 ppm. Alternatively, when the composition is added to a flavored article, the final concentration of glucosylated natural steviol glycosides (GSGs) is from 45 to 125 ppm. Alternatively, when the composition is added to a flavored article, the final concentration of glucosylated natural steviol glycosides (GSGs) is from 50 to 125 ppm. Alternatively, when the composition is added to a flavored article, the final concentration of glucosylated natural steviol glycosides (GSGs) is from 55 to 125 ppm. Alternatively, when the composition is added to a flavored article, the final concentration of glucosylated natural steviol glycosides (GSGs) is from 60 to 125 ppm. Alternatively, when the composition is added to a flavored article, the final concentration of glucosylated natural steviol glycosides (GSGs) is from 65 to 125 ppm. Alternatively, when the composition is added to a flavored article, the final concentration of glucosylated natural steviol glycosides (GSGs) is from 70 to 125 ppm. Alternatively, when the composition is added to a flavored article, the final concentration of glucosylated natural steviol glycosides (GSGs) is from 75 to 125 ppm. Alternatively, when the composition is added to a flavored article, the final concentration of glucosylated natural steviol glycosides (GSGs) is from 80 to 125 ppm. Alternatively, when the composition is added to a flavored article, the final concentration of glucosylated natural steviol glycosides (GSGs) is from 85 to 125 ppm. Alternatively, when the composition is added to a flavored article, the final concentration of glucosylated natural steviol glycosides (GSGs) is from 90 to 125 ppm. Alternatively, when the composition is added to a flavored article, the final concentration of glucosylated natural steviol glycosides (GSGs) is from 95 to 125 ppm. Alternatively, when the composition is added to a flavored article, the final concentration of glucosylated natural steviol glycosides (GSGs) is from 100 to 125 ppm. Alternatively, when the composition is added to a flavored article, the final concentration of glucosylated natural steviol glycosides (GSGs) is from 105 to 125 ppm. Alternatively, when the composition is added to a flavored article, the final concentration of glucosylated natural steviol glycosides (GSGs) is from 110 to 125 ppm. Alternatively, when the composition is added to a flavored article, the final concentration of glucosylated natural steviol glycosides (GSGs) is from 115 to 125 ppm. Alternatively, when the composition is added to a flavored article, the final concentration of glucosylated natural steviol glycosides (GSGs) is from 120 to 125 ppm.

In some embodiments, when the composition is added to a flavored article, the final concentration of glucosylated natural steviol glycosides (GSGs) is 25, or 30, or 35, or 40, or 45, or 50, or 55, or 60, or 65, or 70, or 75, or 80, or 85, or 90, or 95, or 100, or 105, or 110, or 115, or 120, or 125 ppm.

In some embodiments, when the composition is added to a flavored article, the final concentration of phloretin is from 5 to 30 ppm. Alternatively, when the composition is added to a flavored article, the final concentration of phloretin is from 5 to 25 ppm. Alternatively, when the composition is added to a flavored article, the final concentration of phloretin is from 5 to 20 ppm. Alternatively, when the composition is added to a flavored article, the final concentration of phloretin is from 5 to 15 ppm. Alternatively, when the composition is added to a flavored article, the final concentration of phloretin is from 5 to 10 ppm. In some embodiments, when the composition is added to a flavored article, the final concentration of phloretin is from 10 to 30 ppm. Alternatively, when the composition is added to a flavored article, the final concentration of phloretin is from 15 to 30 ppm. Alternatively, when the composition is added to a flavored article, the final concentration of phloretin is from 20 to 30 ppm. Alternatively, when the composition is added to a flavored article, the final concentration of phloretin is from 25 to 30 ppm.

In some embodiments, when the composition is added to a flavored article, the final concentration of phloretin is 5, or 10, or 15, or 20, or 25, or 30 ppm.

In some embodiments, when the composition is added to a flavored article, the final concentration of naringenin is from 5 to 50 ppm. Alternatively, when the composition is added to a flavored article, the final concentration of naringenin is from 5 to 45 ppm. Alternatively, when the composition is added to a flavored article, the final concentration of naringenin is from 5 to 40 ppm. Alternatively, when the composition is added to a flavored article, the final concentration of naringenin is from 5 to 35 ppm. Alternatively, when the composition is added to a flavored article, the final concentration of naringenin is from 5 to 30 ppm. Alternatively, when the composition is added to a flavored article, the final concentration of naringenin is from 5 to 25 ppm. Alternatively, when the composition is added to a flavored article, the final concentration of naringenin is from 5 to 20 ppm. Alternatively, when the composition is added to a flavored article, the final concentration of naringenin is from 5 to 15 ppm. Alternatively, when the composition is added to a flavored article, the final concentration of naringenin is from 5 to 10 ppm.

In some embodiments, when the composition is added to a flavored article, the final concentration of naringenin is from 10 to 50 ppm. Alternatively, when the composition is added to a flavored article, the final concentration of naringenin is from 15 to 50 ppm. Alternatively, when the composition is added to a flavored article, the final concentration of naringenin is from 20 to 50 ppm. Alternatively, when the composition is added to a flavored article, the final concentration of naringenin is from 25 to 50 ppm. Alternatively, when the composition is added to a flavored article, the final concentration of naringenin is from 30 to 50 ppm. Alternatively, when the composition is added to a flavored article, the final concentration of naringenin is from 35 to 50 ppm. Alternatively, when the composition is added to a flavored article, the final concentration of naringenin is from 40 to 50 ppm. Alternatively, when the composition is added to a flavored article, the final concentration of naringenin is from 45 to 50 ppm.

In some embodiments, when the composition is added to a flavored article, the final concentration of naringenin is 5, or 10, or 15, or 20, or 25, or 30, or 35, or 40, or 45, or 50 ppm.

In some embodiments, the composition comprises an extract comprising steviol glycosides and a mouthfeel enhancer comprising a glycerol wash of an edible oil. In one embodiment, the composition enhances the sweetness of a flavored article, wherein the enhancement of sweetness is equivalent to the sweetness imparted by 1-10 degrees Brix sucrose.

In some embodiments, the composition further comprises glucosylated natural steviol glycosides (GSGs).

In some embodiments, when the composition is added to a flavored article, the final concentration of the extract comprising steviol glycosides is from 100 to 500 ppm. Alternatively, when the composition is added to a flavored article, the final concentration of the extract comprising steviol glycosides is from 100 to 450 ppm. Alternatively, when the composition is added to a flavored article, the final concentration of the extract comprising steviol glycosides is from 100 to 400 ppm. Alternatively, when the composition is added to a flavored article, the final concentration of the extract comprising steviol glycosides is from 100 to 350 ppm. Alternatively, when the composition is added to a flavored article, the final concentration of the extract comprising steviol glycosides is from 100 to 300 ppm. Alternatively, when the composition is added to a flavored article, the final concentration of the extract comprising steviol glycosides is from 100 to 250 ppm. Alternatively, when the composition is added to a flavored article, the final concentration of the extract comprising steviol glycosides is from 100 to 200 ppm. Alternatively, when the composition is added to a flavored article, the final concentration of the extract comprising steviol glycosides is from 100 to 150 ppm.

In some embodiments, when the composition is added to a flavored article, the final concentration of the extract comprising steviol glycosides is from 150 to 500 ppm. Alternatively, when the composition is added to a flavored article, the final concentration of the extract comprising steviol glycosides is from 200 to 500 ppm. Alternatively, when the composition is added to a flavored article, the final concentration of the extract comprising steviol glycosides is from 250 to 500 ppm. In some embodiments, when the composition is added to a flavored article, the final concentration of the extract comprising steviol glycosides is from 300 to 500 ppm. Alternatively, when the composition is added to a flavored article, the final concentration of the extract comprising steviol glycosides is from 350 to 500 ppm. Alternatively, when the composition is added to a flavored article, the final concentration of the extract comprising steviol glycosides is from 400 to 500 ppm. Alternatively, when the composition is added to a flavored article, the final concentration of the extract comprising steviol glycosides is from 450 to 500 ppm.

In some embodiments, when the composition is added to a flavored article, the final concentration of the extract comprising steviol glycosides is 100, or 150, or 200, or 250, or 300, or 350, or 400, or 450, or 500 ppm.

In some embodiments, when the composition is added to a flavored article, the final concentration of the extract comprising steviol glycosides is 400 ppm.

In some embodiments, when the composition is added to a flavored article the final concentration of the mouthfeel enhancer comprising a glycerol wash of an edible oil is from 0.01 to 0.3 weight percent. Alternatively, when the composition is added to a flavored article the final concentration of the mouthfeel enhancer comprising a glycerol wash of an edible oil is from 0.01 to 0.29 weight percent. Alternatively, when the composition is added to a flavored article the final concentration of the mouthfeel enhancer comprising a glycerol wash of an edible oil is from 0.01 to 0.28 weight percent. Alternatively, when the composition is added to a flavored article the final concentration of the mouthfeel enhancer comprising a glycerol wash of an edible oil is from 0.01 to 0.27 weight percent. Alternatively, when the composition is added to a flavored article the final concentration of the mouthfeel enhancer comprising a glycerol wash of an edible oil is from 0.01 to 0.26 weight percent.
Alternatively, when the composition is added to a flavored article the final concentration of the mouthfeel enhancer comprising a glycerol wash of an edible oil is from 0.01 to 0.25 weight percent. Alternatively, when the composition is added to a flavored article the final concentration of the mouthfeel enhancer comprising a glycerol wash of an edible oil is from 0.01 to 0.24 weight percent. Alternatively, when the composition is added to a flavored article the final concentration of the mouthfeel enhancer comprising a glycerol wash of an edible oil is from 0.01 to 0.23 weight percent. Alternatively, when the composition is added to a flavored article the final concentration of the mouthfeel enhancer comprising a glycerol wash of an edible oil is from 0.01 to 0.22 weight percent. Alternatively, when the composition is added to a flavored article the final concentration of the mouthfeel enhancer comprising a glycerol wash of an edible oil is from 0.01 to 0.21 weight percent.
Alternatively, when the composition is added to a flavored article the final concentration of the mouthfeel enhancer comprising a glycerol wash of an edible oil is from 0.01 to 0.20 weight percent. Alternatively, when the composition is added to a flavored article the final concentration of the mouthfeel enhancer comprising a glycerol wash of an edible oil is from 0.01 to 0.19 weight percent. Alternatively, when the composition is added to a flavored article the final concentration of the mouthfeel enhancer comprising a glycerol wash of an edible oil is from 0.01 to 0.18 weight percent. Alternatively, when the composition is added to a flavored article the final concentration of the mouthfeel enhancer comprising a glycerol wash of an edible oil is from 0.01 to 0.17 weight percent. Alternatively, when the composition is added to a flavored article the final concentration of the mouthfeel enhancer comprising a glycerol wash of an edible oil is from 0.01 to 0.16 weight percent.
Alternatively, when the composition is added to a flavored article the final concentration of the mouthfeel enhancer comprising a glycerol wash of an edible oil is from 0.01 to 0.15 weight percent. Alternatively, when the composition is added to a flavored article the final concentration of the mouthfeel enhancer comprising a glycerol wash of an edible oil is from 0.01 to 0.14 weight percent. Alternatively, when the composition is added to a flavored article the final concentration of the mouthfeel enhancer comprising a glycerol wash of an edible oil is from 0.01 to 0.13 weight percent. Alternatively, when the composition is added to a flavored article the final concentration of the mouthfeel enhancer comprising a glycerol wash of an edible oil is from 0.01 to 0.12 weight percent. Alternatively, when the composition is added to a flavored article the final concentration of the mouthfeel enhancer comprising a glycerol wash of an edible oil is from 0.01 to 0.11 weight percent.
Alternatively, when the composition is added to a flavored article the final concentration of the mouthfeel enhancer comprising a glycerol wash of an edible oil is from 0.01 to 0.10 weight percent. Alternatively, when the composition is added to a flavored article the final concentration of the mouthfeel enhancer comprising a glycerol wash of an edible oil is from 0.01 to 0.09 weight percent. Alternatively, when the composition is added to a flavored article the final concentration of the mouthfeel enhancer comprising a glycerol wash of an edible oil is from 0.01 to 0.08 weight percent. Alternatively, when the composition is added to a flavored article the final concentration of the mouthfeel enhancer comprising a glycerol wash of an edible oil is from 0.01 to 0.07 weight percent. Alternatively, when the composition is added to a flavored article the final concentration of the mouthfeel enhancer comprising a glycerol wash of an edible oil is from 0.01 to 0.06 weight percent.
Alternatively, when the composition is added to a flavored article the final concentration of the mouthfeel enhancer comprising a glycerol wash of an edible oil is from 0.01 to 0.05 weight percent. Alternatively, when the composition is added to a flavored article the final concentration of the mouthfeel enhancer comprising a glycerol wash of an edible oil is from 0.01 to 0.04 weight percent. Alternatively, when the composition is added to a flavored article the final concentration of the mouthfeel enhancer comprising a glycerol wash of an edible oil is from 0.01 to 0.03 weight percent. Alternatively, when the composition is added to a flavored article the final concentration of the mouthfeel enhancer comprising a glycerol wash of an edible oil is from 0.01 to 0.02 weight percent.In some embodiments, when the composition is added to a flavored article the final concentration of the mouthfeel enhancer comprising a glycerol wash of an edible oil is from 0.02 to 0.3 weight percent. Alternatively, when the composition is added to a flavored article the final concentration of the mouthfeel enhancer comprising a glycerol wash of an edible oil is from 0.03 to 0.3 weight percent. Alternatively, when the composition is added to a flavored article the final concentration of the mouthfeel enhancer comprising a glycerol wash of an edible oil is from 0.04 to 0.3 weight percent. Alternatively, when the composition is added to a flavored article the final concentration of the mouthfeel enhancer comprising a glycerol wash of an edible oil is from 0.05 to 0.3 weight percent. Alternatively, when the composition is added to a flavored article the final concentration of the mouthfeel enhancer comprising a glycerol wash of an edible oil is from 0.06 to 0.3 weight percent. Alternatively, when the composition is added to a flavored article the final concentration of the mouthfeel enhancer comprising a glycerol wash of an edible oil is from 0.07 to 0.3 weight percent. Alternatively, when the composition is added to a flavored article the final concentration of the mouthfeel enhancer comprising a glycerol wash of an edible oil is from 0.08 to 0.3 weight percent. Alternatively, when the composition is added to a flavored article the final concentration of the mouthfeel enhancer comprising a glycerol wash of an edible oil is from 0.09 to 0.3 weight percent. Alternatively, when the composition is added to a flavored article the final concentration of the mouthfeel enhancer comprising a glycerol wash of an edible oil is from 0.1 to 0.3 weight percent. Alternatively, when the composition is added to a flavored article the final concentration of the mouthfeel enhancer comprising a glycerol wash of an edible oil is from 0.11 to 0.3 weight percent. Alternatively, when the composition is added to a flavored article the final concentration of the mouthfeel enhancer comprising a glycerol wash of an edible oil is from 0.12 to 0.3 weight percent. Alternatively, when the composition is added to a flavored article the final concentration of the mouthfeel enhancer comprising a glycerol wash of an edible oil is from 0.13 to 0.3 weight percent. Alternatively, when the composition is added to a flavored article the final concentration of the mouthfeel enhancer comprising a glycerol wash of an edible oil is from 0.14 to 0.3 weight percent. Alternatively, when the composition is added to a flavored article the final concentration of the mouthfeel enhancer comprising a glycerol wash of an edible oil is from 0.15 to 0.3 weight percent. Alternatively, when the composition is added to a flavored article the final concentration of the mouthfeel enhancer comprising a glycerol wash of an edible oil is from 0.16 to 0.3 weight percent. Alternatively, when the composition is added to a flavored article the final concentration of the mouthfeel enhancer comprising a glycerol wash of an edible oil is from 0.17 to 0.3 weight percent. Alternatively, when the composition is added to a flavored article the final concentration of the mouthfeel enhancer comprising a glycerol wash of an edible oil is from 0.18 to 0.3 weight percent. Alternatively, when the composition is added to a flavored article the final concentration of the mouthfeel enhancer comprising a glycerol wash of an edible oil is from 0.19 to 0.3 weight percent. Alternatively, when the composition is added to a flavored article the final concentration of the mouthfeel enhancer comprising a glycerol wash of an edible oil is from 0.2 to 0.3 weight percent. Alternatively, when the composition is added to a flavored article the final concentration of the mouthfeel enhancer comprising a glycerol wash of an edible oil is from 0.21 to 0.3 weight percent. Alternatively, when the composition is added to a flavored article the final concentration of the mouthfeel enhancer comprising a glycerol wash of an edible oil is from 0.22 to 0.3 weight percent. Alternatively, when the composition is added to a flavored article the final concentration of the mouthfeel enhancer comprising a glycerol wash of an edible oil is from 0.23 to 0.3 weight percent. Alternatively, when the composition is added to a flavored article the final concentration of the mouthfeel enhancer comprising a glycerol wash of an edible oil is from 0.24 to 0.3 weight percent. Alternatively, when the composition is added to a flavored article the final concentration of the mouthfeel enhancer comprising a glycerol wash of an edible oil is from 0.25 to 0.3 weight percent. Alternatively, when the composition is added to a flavored article the final concentration of the mouthfeel enhancer comprising a glycerol wash of an edible oil is from 0.26 to 0.3 weight percent. Alternatively, when the composition is added to a flavored article the final concentration of the mouthfeel enhancer comprising a glycerol wash of an edible oil is from 0.27 to 0.3 weight percent. Alternatively, when the composition is added to a flavored article the final concentration of the mouthfeel enhancer comprising a glycerol wash of an edible oil is from 0.28 to 0.3 weight percent. Alternatively, when the composition is added to a flavored article the final concentration of the mouthfeel enhancer comprising a glycerol wash of an edible oil is from 0.29 to 0.3 weight percent.

In some embodiments, when the composition is added to a flavored article the final concentration of the mouthfeel enhancer comprising a glycerol wash of an edible oil is 0.01, or 0.02, or 0.03, or 0.04, or 0.05, or 0.06, or 0.07, or 0.08, or 0.09, or 0.1, or 0.11, or 0.12, or 0.13, or 0.14, or 0.15, or 0.16, or 0.17, or 0.18, or 0.19, or 0.2, or 0.21, or 0.22, or 0.23, or 0.24, or 0.25, or 0.26, or 0.27, or 0.28, or 0.29, or 0.3 weight percent.

In some embodiments, when the composition is added to a flavored article the final concentration of the mouthfeel enhancer comprising a glycerol wash of an edible oil is 0.1 weight percent.

In some embodiments, when the composition is added to a flavored article the final concentration of glucosylated natural steviol glycosides (GSGs) is from 125 to 600 ppm. Alternatively, when the composition is added to a flavored article the final concentration of glucosylated natural steviol glycosides (GSGs) is from 150 to 600 ppm. Alternatively, when the composition is added to a flavored article the final concentration of glucosylated natural steviol glycosides (GSGs) is from 175 to 600 ppm. Alternatively, when the composition is added to a flavored article the final concentration of glucosylated natural steviol glycosides (GSGs) is from 200 to 600 ppm. Alternatively, when the composition is added to a flavored article the final concentration of glucosylated natural steviol glycosides (GSGs) is from 225 to 600 ppm. Alternatively, when the composition is added to a flavored article the final concentration of glucosylated natural steviol glycosides (GSGs) is from 250 to 600 ppm.
Alternatively, when the composition is added to a flavored article the final concentration of glucosylated natural steviol glycosides (GSGs) is from 275 to 600 ppm. Alternatively, when the composition is added to a flavored article the final concentration of glucosylated natural steviol glycosides (GSGs) is from 300 to 600 ppm. Alternatively, when the composition is added to a flavored article the final concentration of glucosylated natural steviol glycosides (GSGs) is from 325 to 600 ppm. Alternatively, when the composition is added to a flavored article the final concentration of glucosylated natural steviol glycosides (GSGs) is from 350 to 600 ppm. Alternatively, when the composition is added to a flavored article the final concentration of glucosylated natural steviol glycosides (GSGs) is from 375 to 600 ppm. Alternatively, when the composition is added to a flavored article the final concentration of glucosylated natural steviol glycosides (GSGs) is from 400 to 600 ppm. Alternatively, when the composition is added to a flavored article the final concentration of glucosylated natural steviol glycosides (GSGs) is from 425 to 600 ppm. Alternatively, when the composition is added to a flavored article the final concentration of glucosylated natural steviol glycosides (GSGs) is from 450 to 600 ppm. Alternatively, when the composition is added to a flavored article the final concentration of glucosylated natural steviol glycosides (GSGs) is from 475 to 600 ppm. Alternatively, when the composition is added to a flavored article the final concentration of glucosylated natural steviol glycosides (GSGs) is from 500 to 600 ppm. Alternatively, when the composition is added to a flavored article the final concentration of glucosylated natural steviol glycosides (GSGs) is from 525 to 600 ppm. Alternatively, when the composition is added to a flavored article the final concentration of glucosylated natural steviol glycosides (GSGs) is from 550 to 600 ppm. Alternatively, when the composition is added to a flavored article the final concentration of glucosylated natural steviol glycosides (GSGs) is from 575 to 600 ppm.

In some embodiments, when the composition is added to a flavored article the final concentration of glucosylated natural steviol glycosides (GSGs) is from 125 to 575 ppm. Alternatively, when the composition is added to a flavored article the final concentration of glucosylated natural steviol glycosides (GSGs) is from 125 to 550 ppm. Alternatively, when the composition is added to a flavored article the final concentration of glucosylated natural steviol glycosides (GSGs) is from 125 to 525 ppm. Alternatively, when the composition is added to a flavored article the final concentration of glucosylated natural steviol glycosides (GSGs) is from 125 to 500 ppm. Alternatively, when the composition is added to a flavored article the final concentration of glucosylated natural steviol glycosides (GSGs) is from 125 to 475 ppm. Alternatively, when the composition is added to a flavored article the final concentration of glucosylated natural steviol glycosides (GSGs) is from 125 to 450 ppm. Alternatively, when the composition is added to a flavored article the final concentration of glucosylated natural steviol glycosides (GSGs) is from 125 to 425 ppm. Alternatively, when the composition is added to a flavored article the final concentration of glucosylated natural steviol glycosides (GSGs) is from 125 to 400 ppm. Alternatively, when the composition is added to a flavored article the final concentration of glucosylated natural steviol glycosides (GSGs) is from 125 to 375 ppm. Alternatively, when the composition is added to a flavored article the final concentration of glucosylated natural steviol glycosides (GSGs) is from 125 to 350 ppm. Alternatively, when the composition is added to a flavored article the final concentration of glucosylated natural steviol glycosides (GSGs) is from 125 to 325 ppm. Alternatively, when the composition is added to a flavored article the final concentration of glucosylated natural steviol glycosides (GSGs) is from 125 to 300 ppm. Alternatively, when the composition is added to a flavored article the final concentration of glucosylated natural steviol glycosides (GSGs) is from 125 to 275 ppm. Alternatively, when the composition is added to a flavored article the final concentration of glucosylated natural steviol glycosides (GSGs) is from 125 to 250 ppm. Alternatively, when the composition is added to a flavored article the final concentration of glucosylated natural steviol glycosides (GSGs) is from 125 to 225 ppm. Alternatively, when the composition is added to a flavored article the final concentration of glucosylated natural steviol glycosides (GSGs) is from 125 to 200 ppm. Alternatively, when the composition is added to a flavored article the final concentration of glucosylated natural steviol glycosides (GSGs) is from 125 to 175 ppm. Alternatively, when the composition is added to a flavored article the final concentration of glucosylated natural steviol glycosides (GSGs) is from 125 to 150 ppm.

In some embodiments, when the composition is added to a flavored article the final concentration of glucosylated natural steviol glycosides (GSGs) is 125, or 150, or 175, or 200, or 225, or 250, or 275, or 300, or 325, or 350, or 375, or 400, or 425, or 450, or 475, or 500 ppm.

In some embodiments, when the composition is added to a flavored article the final concentration of glucosylated natural steviol glycosides (GSGs) is 500 ppm.

In one embodiment, the composition comprises mogroside V, an extract comprising steviol glycosides, naringenin, phloretin and a mouthfeel enhancer comprising a glycerol wash of an edible oil.

In some embodiments, when the composition is added to a flavored article, the final concentration of mogroside V is from 50 to 300 ppm. Alternatively, when the composition is added to a flavored article, the final concentration of mogroside V is from 50 to 250 ppm. Alternatively, when the composition is added to a flavored article, the final concentration of mogroside V is from 50 to 200 ppm. Alternatively, when the composition is added to a flavored article, the final concentration of mogroside V is from 50 to 150 ppm. Alternatively, when the composition is added to a flavored article, the final concentration of mogroside V is from 50 to 100 ppm.

In some embodiments, when the composition is added to a flavored article, the final concentration of mogroside V is from 100 to 300 ppm. Alternatively, when the composition is added to a flavored article, the final concentration of mogroside V is from 150 to 300 ppm. Alternatively, when the composition is added to a flavored article, the final concentration of mogroside V is from 200 to 300 ppm. Alternatively, when the composition is added to a flavored article, the final concentration of mogroside V is from 250 to 300 ppm. In some embodiments, when the composition is added to a flavored article, the final concentration of mogroside V is 50, or 100, or 150, or 200, or 250, or 300 ppm. In some embodiments, when the composition is added to a flavored article, the final concentration of mogroside V is 200 ppm.

In some embodiments, when the composition is added to a flavored article, the final concentration of phloretin is from 5 to 30 ppm. Alternatively, when the composition is added to a flavored article, the final concentration of phloretin is from 5 to 25 ppm. Alternatively, when the composition is added to a flavored article, the final concentration of phloretin is from 5 to 20 ppm. Alternatively, when the composition is added to a flavored article, the final concentration of phloretin is from 5 to 15 ppm. Alternatively, when the composition is added to a flavored article, the final concentration of phloretin is from 5 to 10 ppm.

In some embodiments, when the composition is added to a flavored article, the final concentration of phloretin is from 10 to 30 ppm. Alternatively, when the composition is added to a flavored article, the final concentration of phloretin is from 15 to 30 ppm. Alternatively, when the composition is added to a flavored article, the final concentration of phloretin is from 20 to 30 ppm. Alternatively, when the composition is added to a flavored article, the final concentration of phloretin is from 25 to 30 ppm.

In some embodiments, when the composition is added to a flavored article, the final concentration of phloretin is 5, or 10, or 15, or 20, or 25, or 30 ppm.

In some embodiments, when the composition is added to a flavored article, the final concentration of naringenin is from 5 to 50 ppm. Alternatively, when the composition is added to a flavored article, the final concentration of naringenin is from 5 to 45 ppm. Alternatively, when the composition is added to a flavored article, the final concentration of naringenin is from 5 to 40 ppm. Alternatively, when the composition is added to a flavored article, the final concentration of naringenin is from 5 to 35 ppm. Alternatively, when the composition is added to a flavored article, the final concentration of naringenin is from 5 to 30 ppm. Alternatively, when the composition is added to a flavored article, the final concentration of naringenin is from 5 to 25 ppm. Alternatively, when the composition is added to a flavored article, the final concentration of naringenin is from 5 to 20 ppm. Alternatively, when the composition is added to a flavored article, the final concentration of naringenin is from 5 to 15 ppm. Alternatively, when the composition is added to a flavored article, the final concentration of naringenin is from 5 to 10 ppm.

In some embodiments, when the composition is added to a flavored article, the final concentration of naringenin is from 10 to 50 ppm. Alternatively, when the composition is added to a flavored article, the final concentration of naringenin is from 15 to 50 ppm. Alternatively, when the composition is added to a flavored article, the final concentration of naringenin is from 20 to 50 ppm. Alternatively, when the composition is added to a flavored article, the final concentration of naringenin is from 25 to 50 ppm. Alternatively, when the composition is added to a flavored article, the final concentration of naringenin is from 30 to 50 ppm. Alternatively, when the composition is added to a flavored article, the final concentration of naringenin is from 35 to 50 ppm. Alternatively, when the composition is added to a flavored article, the final concentration of naringenin is from 40 to 50 ppm. Alternatively, when the composition is added to a flavored article, the final concentration of naringenin is from 45 to 50 ppm.

In some embodiments, when the composition is added to a flavored article, the final concentration of naringenin is 5, or 10, or 15, or 20, or 25, or 30, or 35, or 40, or 45, or 50 ppm.

In some embodiments, when the composition is added to a flavored article the final concentration of the mouthfeel enhancer comprising a glycerol wash of an edible oil is from 0.01 to 0.3 weight percent. Alternatively, when the composition is added to a flavored article the final concentration of the mouthfeel enhancer comprising a glycerol wash of an edible oil is from 0.01 to 0.29 weight percent. Alternatively, when the composition is added to a flavored article the final concentration of the mouthfeel enhancer comprising a glycerol wash of an edible oil is from 0.01 to 0.28 weight percent. Alternatively, when the composition is added to a flavored article the final concentration of the mouthfeel enhancer comprising a glycerol wash of an edible oil is from 0.01 to 0.27 weight percent. Alternatively, when the composition is added to a flavored article the final concentration of the mouthfeel enhancer comprising a glycerol wash of an edible oil is from 0.01 to 0.26 weight percent. Alternatively, when the composition is added to a flavored article the final concentration of the mouthfeel enhancer comprising a glycerol wash of an edible oil is from 0.01 to 0.25 weight percent. Alternatively, when the composition is added to a flavored article the final concentration of the mouthfeel enhancer comprising a glycerol wash of an edible oil is from 0.01 to 0.24 weight percent. Alternatively, when the composition is added to a flavored article the final concentration of the mouthfeel enhancer comprising a glycerol wash of an edible oil is from 0.01 to 0.23 weight percent. Alternatively, when the composition is added to a flavored article the final concentration of the mouthfeel enhancer comprising a glycerol wash of an edible oil is from 0.01 to 0.22 weight percent. Alternatively, when the composition is added to a flavored article the final concentration of the mouthfeel enhancer comprising a glycerol wash of an edible oil is from 0.01 to 0.21 weight percent. Alternatively, when the composition is added to a flavored article the final concentration of the mouthfeel enhancer comprising a glycerol wash of an edible oil is from 0.01 to 0.20 weight percent. Alternatively, when the composition is added to a flavored article the final concentration of the mouthfeel enhancer comprising a glycerol wash of an edible oil is from 0.01 to 0.19 weight percent. Alternatively, when the composition is added to a flavored article the final concentration of the mouthfeel enhancer comprising a glycerol wash of an edible oil is from 0.01 to 0.18 weight percent. Alternatively, when the composition is added to a flavored article the final concentration of the mouthfeel enhancer comprising a glycerol wash of an edible oil is from 0.01 to 0.17 weight percent. Alternatively, when the composition is added to a flavored article the final concentration of the mouthfeel enhancer comprising a glycerol wash of an edible oil is from 0.01 to 0.16 weight percent. Alternatively, when the composition is added to a flavored article the final concentration of the mouthfeel enhancer comprising a glycerol wash of an edible oil is from 0.01 to 0.15 weight percent. Alternatively, when the composition is added to a flavored article the final concentration of the mouthfeel enhancer comprising a glycerol wash of an edible oil is from 0.01 to 0.14 weight percent. Alternatively, when the composition is added to a flavored article the final concentration of the mouthfeel enhancer comprising a glycerol wash of an edible oil is from 0.01 to 0.13 weight percent. Alternatively, when the composition is added to a flavored article the final concentration of the mouthfeel enhancer comprising a glycerol wash of an edible oil is from 0.01 to 0.12 weight percent. Alternatively, when the composition is added to a flavored article the final concentration of the mouthfeel enhancer comprising a glycerol wash of an edible oil is from 0.01 to 0.11 weight percent. Alternatively, when the composition is added to a flavored article the final concentration of the mouthfeel enhancer comprising a glycerol wash of an edible oil is from 0.01 to 0.10 weight percent. Alternatively, when the composition is added to a flavored article the final concentration of the mouthfeel enhancer comprising a glycerol wash of an edible oil is from 0.01 to 0.09 weight percent. Alternatively, when the composition is added to a flavored article the final concentration of the mouthfeel enhancer comprising a glycerol wash of an edible oil is from 0.01 to 0.08 weight percent. Alternatively, when the composition is added to a flavored article the final concentration of the mouthfeel enhancer comprising a glycerol wash of an edible oil is from 0.01 to 0.07 weight percent. Alternatively, when the composition is added to a flavored article the final concentration of the mouthfeel enhancer comprising a glycerol wash of an edible oil is from 0.01 to 0.06 weight percent. Alternatively, when the composition is added to a flavored article the final concentration of the mouthfeel enhancer comprising a glycerol wash of an edible oil is from 0.01 to 0.05 weight percent. Alternatively, when the composition is added to a flavored article the final concentration of the mouthfeel enhancer comprising a glycerol wash of an edible oil is from 0.01 to 0.04 weight percent. Alternatively, when the composition is added to a flavored article the final concentration of the mouthfeel enhancer comprising a glycerol wash of an edible oil is from 0.01 to 0.03 weight percent. Alternatively, when the composition is added to a flavored article the final concentration of the mouthfeel enhancer comprising a glycerol wash of an edible oil is from 0.01 to 0.02 weight percent.In some embodiments, when the composition is added to a flavored article the final concentration of the mouthfeel enhancer comprising a glycerol wash of an edible oil is from 0.02 to 0.3 weight percent. Alternatively, when the composition is added to a flavored article the final concentration of the mouthfeel enhancer comprising a glycerol wash of an edible oil is from 0.03 to 0.3 weight percent. Alternatively, when the composition is added to a flavored article the final concentration of the mouthfeel enhancer comprising a glycerol wash of an edible oil is from 0.04 to 0.3 weight percent. Alternatively, when the composition is added to a flavored article the final concentration of the mouthfeel enhancer comprising a glycerol wash of an edible oil is from 0.05 to 0.3 weight percent. Alternatively, when the composition is added to a flavored article the final concentration of the mouthfeel enhancer comprising a glycerol wash of an edible oil is from 0.06 to 0.3 weight percent. Alternatively, when the composition is added to a flavored article the final concentration of the mouthfeel enhancer comprising a glycerol wash of an edible oil is from 0.07 to 0.3 weight percent. Alternatively, when the composition is added to a flavored article the final concentration of the mouthfeel enhancer comprising a glycerol wash of an edible oil is from 0.08 to 0.3 weight percent. Alternatively, when the composition is added to a flavored article the final concentration of the mouthfeel enhancer comprising a glycerol wash of an edible oil is from 0.09 to 0.3 weight percent. Alternatively, when the composition is added to a flavored article the final concentration of the mouthfeel enhancer comprising a glycerol wash of an edible oil is from 0.1 to 0.3 weight percent. Alternatively, when the composition is added to a flavored article the final concentration of the mouthfeel enhancer comprising a glycerol wash of an edible oil is from 0.11 to 0.3 weight percent. Alternatively, when the composition is added to a flavored article the final concentration of the mouthfeel enhancer comprising a glycerol wash of an edible oil is from 0.12 to 0.3 weight percent. Alternatively, when the composition is added to a flavored article the final concentration of the mouthfeel enhancer comprising a glycerol wash of an edible oil is from 0.13 to 0.3 weight percent. Alternatively, when the composition is added to a flavored article the final concentration of the mouthfeel enhancer comprising a glycerol wash of an edible oil is from 0.14 to 0.3 weight percent. Alternatively, when the composition is added to a flavored article the final concentration of the mouthfeel enhancer comprising a glycerol wash of an edible oil is from 0.15 to 0.3 weight percent. Alternatively, when the composition is added to a flavored article the final concentration of the mouthfeel enhancer comprising a glycerol wash of an edible oil is from 0.16 to 0.3 weight percent. Alternatively, when the composition is added to a flavored article the final concentration of the mouthfeel enhancer comprising a glycerol wash of an edible oil is from 0.17 to 0.3 weight percent. Alternatively, when the composition is added to a flavored article the final concentration of the mouthfeel enhancer comprising a glycerol wash of an edible oil is from 0.18 to 0.3 weight percent. Alternatively, when the composition is added to a flavored article the final concentration of the mouthfeel enhancer comprising a glycerol wash of an edible oil is from 0.19 to 0.3 weight percent. Alternatively, when the composition is added to a flavored article the final concentration of the mouthfeel enhancer comprising a glycerol wash of an edible oil is from 0.2 to 0.3 weight percent. Alternatively, when the composition is added to a flavored article the final concentration of the mouthfeel enhancer comprising a glycerol wash of an edible oil is from 0.21 to 0.3 weight percent. Alternatively, when the composition is added to a flavored article the final concentration of the mouthfeel enhancer comprising a glycerol wash of an edible oil is from 0.22 to 0.3 weight percent. Alternatively, when the composition is added to a flavored article the final concentration of the mouthfeel enhancer comprising a glycerol wash of an edible oil is from 0.23 to 0.3 weight percent. Alternatively, when the composition is added to a flavored article the final concentration of the mouthfeel enhancer comprising a glycerol wash of an edible oil is from 0.24 to 0.3 weight percent. Alternatively, when the composition is added to a flavored article the final concentration of the mouthfeel enhancer comprising a glycerol wash of an edible oil is from 0.25 to 0.3 weight percent. Alternatively, when the composition is added to a flavored article the final concentration of the mouthfeel enhancer comprising a glycerol wash of an edible oil is from 0.26 to 0.3 weight percent. Alternatively, when the composition is added to a flavored article the final concentration of the mouthfeel enhancer comprising a glycerol wash of an edible oil is from 0.27 to 0.3 weight percent. Alternatively, when the composition is added to a flavored article the final concentration of the mouthfeel enhancer comprising a glycerol wash of an edible oil is from 0.28 to 0.3 weight percent. Alternatively, when the composition is added to a flavored article the final concentration of the mouthfeel enhancer comprising a glycerol wash of an edible oil is from 0.29 to 0.3 weight percent.

In some embodiments, when the composition is added to a flavored article the final concentration of the mouthfeel enhancer comprising a glycerol wash of an edible oil is 0.01, or 0.02, or 0.03, or 0.04, or 0.05, or 0.06, or 0.07, or 0.08, or 0.09, or 0.1, or 0.11, or 0.12, or 0.13, or 0.14, or 0.15, or 0.16, or 0.17, or 0.18, or 0.19, or 0.2, or 0.21, or 0.22, or 0.23, or 0.24, or 0.25, or 0.26, or 0.27, or 0.28, or 0.29, or 0.3 weight percent.

In some embodiments, when the composition is added to a flavored article the final concentration of the mouthfeel enhancer comprising a glycerol wash of an edible oil is 0.1 weight percent.

In some embodiments, when the composition is added to a flavored article, the final concentration of the extract comprising steviol glycosides is from 100 to 500 ppm. Alternatively, when the composition is added to a flavored article, the final concentration of the extract comprising steviol glycosides is from 100 to 450 ppm. Alternatively, when the composition is added to a flavored article, the final concentration of the extract comprising steviol glycosides is from 100 to 400 ppm. Alternatively, when the composition is added to a flavored article, the final concentration of the extract comprising steviol glycosides is from 100 to 350 ppm. Alternatively, when the composition is added to a flavored article, the final concentration of the extract comprising steviol glycosides is from 100 to 300 ppm. Alternatively, when the composition is added to a flavored article, the final concentration of the extract comprising steviol glycosides is from 100 to 250 ppm. Alternatively, when the composition is added to a flavored article, the final concentration of the extract comprising steviol glycosides is from 100 to 200 ppm. Alternatively, when the composition is added to a flavored article, the final concentration of the extract comprising steviol glycosides is from 100 to 150 ppm.

In some embodiments, when the composition is added to a flavored article, the final concentration of the extract comprising steviol glycosides is from 150 to 500 ppm. Alternatively, when the composition is added to a flavored article, the final concentration of the extract comprising steviol glycosides is from 200 to 500 ppm. Alternatively, when the composition is added to a flavored article, the final concentration of the extract comprising steviol glycosides is from 250 to 500 ppm. Alternatively, when the composition is added to a flavored article, the final concentration of the extract comprising steviol glycosides is from 300 to 500 ppm. Alternatively, when the composition is added to a flavored article, the final concentration of the extract comprising steviol glycosides is from 350 to 500 ppm. Alternatively, when the composition is added to a flavored article, the final concentration of the extract comprising steviol glycosides is from 400 to 500 ppm. Alternatively, when the composition is added to a flavored article, the final concentration of the extract comprising steviol glycosides is from 450 to 500 ppm.

In some embodiments, when the composition is added to a flavored article, the final concentration of the extract comprising steviol glycosides is 100, or 150, or 200, or 250, or 300, or 350, or 400, or 450, or 500 ppm.

In some embodiments, when the composition is added to a flavored article, the final concentration of the extract comprising steviol glycosides is 400 ppm.

### Tabletop Compositions

In some further aspects, the disclosure provides a tabletop sweetener composition comprising: (a) at least one sweetener composition according to any of the preceding aspects and embodiments thereof; and (b) at least one bulking agent.

The tabletop sweetener composition may take any suitable form including, but not limited to, an amorphous solid, a crystal, a powder, a tablet, a liquid, a cube, a glace or coating, a granulated product, an encapsulated form abound to or coated on to carriers/particles, wet or dried, or combinations thereof.

The tabletop sweetener composition may contain further additives known to those skilled in the art. These additives include but are not limited to bubble forming agents, bulking agents, carriers, fibers, sugar alcohols, oligosaccharides, sugars, high intensity sweeteners, nutritive sweeteners, flavorings, flavor enhancers, flavor stabilizers, acidulants, anti-caking and free-flow agents. Such additives are for example described by H. Mitchell (H. Mitchell, "Sweeteners and Sugar Alternatives in Food Technology", Backwell Publishing Ltd, 2006). As used herein, the term "flavorings" may include those flavors known to the skilled person, such as natural and artificial flavors. These flavorings may be chosen from synthetic flavor oils and flavoring aromatics and/or oils, oleoresins and extracts derived from plants, leaves, flowers, fruits, and so forth, and combinations thereof. Non-limiting representative flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, yazu, sudachi, and fruit essences including apple, pear, peach, grape, blueberry, strawberry, raspberry, cherry, plum, pineapple, watermelon, apricot, banana, melon, apricot, ume, cherry, raspberry, blackberry, tropical fruit, mango, mangosteen, pomegranate, papaya and so forth. Other potential flavors include a milk flavor, a butter flavor, a cheese flavor, a cream flavor, and a yogurt flavor; a vanilla flavor; tea or coffee flavors, such as a green tea flavor, a oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a camomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath freshening properties, particularly the mint flavors when used in combination with cooling agents.

Flavors may also provide breath freshening properties, particularly the mint flavors when used in combination with cooling agents. These flavorings may be used in liquid or solid form and may be used individually or in admixture. Other useful flavorings include aldehydes and esters such as cinnamyl acetate, cinnamaldehyde, citral diethylacetal, dihydrocarvyl acetate, eugenyl formate, p- methylamisol, and so forth may be used. Generally any flavoring or food additive such as those described in Chemicals Used in Food Processing, publication 1274, pages 63-258, by the National Academy of Sciences, may be used.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6- dimethyl-5-heptenal, i.e., melonal (melon), 2,6-dimethyloctanal (green fruit), and 2- dodecenal (citrus, mandarin), cherry, grape, strawberry shortcake, and mixtures thereof. These listings of flavorings are merely exemplary and are not meant to limit either the term "flavoring" or the scope of the disclosure generally.

In some embodiments, the flavoring may be employed in either liquid form and/or dried form. When employed in the latter form, suitable drying means such as spray drying the oil may be used. Alternatively, the flavoring may be absorbed onto water soluble materials, such as cellulose, starch, sugar, maltodextrin, gum arabic and so forth or may be encapsulated. The actual techniques for preparing such dried forms are well-known.

In some embodiments, the flavorings may be used in many distinct physical forms well- known in the art to provide an initial burst of flavor and/or a prolonged sensation of flavor. Without being limited thereto, such physical forms include free forms, such as spray dried, powdered, beaded forms, encapsulated forms, and mixtures thereof.

Suitable bulking agents include, but are not limited to maltodextrin (10 DE, 18 DE, or 5 DE), corn syrup solids (20 or 36 DE), sucrose, fructose, glucose, invert sugar, sorbitol, xylose, ribulose, mannose, xylitol, mannitol, galactitol, erythritol, maltitol, lactitol, isomalt, maltose, tagatose, lactose, inulin, glycerol, propylene glycol, polyols, polydextrose, fructooligosaccharides, cellulose and cellulose derivatives, and the like, and mixtures thereof. Additionally, granulated sugar (sucrose) or other caloric sweeteners such as crystalline fructose, other carbohydrates, or sugar alcohols can be used as a bulking agent due to their provision of good content uniformity without the addition of significant calories.

In one embodiment, the at least one bulking agent may be a bulking agent described in U.S. Patent No. 8,993,027.

In one embodiment, the at least one bulking agent may be a bulking agent described in U.S. Patent No. 6,607,771.

In one embodiment, the at least one bulking agent may be a bulking agent described in U.S. Patent No. 6,932,982.

In some embodiments, the tabletop sweetener composition may further comprise at least one anti-caking agent. As used herein the phrase "anti-caking agent" and "flow agent" refer to any composition which prevents, reduces, inhibits, or suppresses the at least one sweetener from attaching, binding, or contacting to another sweetener molecule. Alternatively, anti-caking agent may refer to any composition which assists in content uniformity and uniform dissolution. Non-limiting examples of anti-caking agents include cream of tartar, calcium silicate, silicon dioxide, microcrystalline cellulose (Avicel, FMC BioPolymer, Philadelphia, Pa.), and tricalcium phosphate. In one embodiment, the anti-caking agents are present in the tabletop sweetener composition in an amount from about 0.001 to about 3% by weight of the tabletop sweetener composition.

In some embodiments, the sweetener compositions of any of the preceding aspects and embodiments thereof are encapsulated using typical means for encapsulating flavor or fragrance compounds. Non-limiting examples of such technology are set forth in U.S. Patent Application Publication Nos. 2016/0235102, 2019/0082727, 2018/0369777, 2018/0103667, 2016/0346752, 2015/0164117, 2014/0056836, 2012/0027866, 2010/0172945, and 2007/0128234, as well as U.S. Patent Nos. 7,488,503, 6,416,799, 5,897,897, 5,786,017, 5,603,971, 4,689,235, 4,610,890, 3,704,137, 3,041,180, and 2,809,895.

### Flavored Articles

The sweetener compositions presented herein may be admixed with any known edible or oral composition (referred to herein as a "flavored article"), such as, for example, pharmaceutical compositions, edible gel mixes and compositions, dental compositions, foodstuffs (confections, condiments, chewing gum, cereal compositions baked goods dairy products, and tabletop sweetener compositions) beverages and beverage products.

In some embodiments, the present disclosure provides a flavored article comprising the composition according to several embodiments presented herein. In some embodiments, the flavored article comprises an effective amount of a composition according to an embodiment presented herein.

Flavored articles include, but are not limited to beverages, dental products, cosmetic products, pharmaceutical products and animal feed or animal food. For example, consumable products include all food products, including but not limited to cereal products, rice products, tapioca products, sago products, baker's products, biscuit products, pastry products, bread products, confectionary products, desert products, gums, chewing gums, chocolates, ices, honey products, treacle products, yeast products, baking-powder, salt and spice products, savory products, mustard products, vinegar products, sauces (condiments), tobacco products, cigars, cigarettes, processed foods, cooked fruits and vegetable products, meat and meat products, jellies, jams, fruit sauces, egg products, milk and dairy products, yoghurts, cheese products, butter and butter substitute products, milk substitute products, soy products, edible oils and fat products, medicaments, beverages, carbonated beverages, alcoholic drinks, beers, soft drinks, mineral and aerated waters and other non-alcoholic drinks, fruit drinks, fruit juices, coffee, artificial coffee, tea, cocoa, including forms requiring reconstitution, food extracts, plant extracts, meat extracts, condiments, sweeteners, nutraceuticals, gelatins, pharmaceutical and non-pharmaceutical gums, tablets, lozenges, drops, emulsions, elixirs, syrups and other preparations for making beverages, and combinations thereof.

As used herein, the term "non-alcoholic drinks" includes, but is not limited to all nonalcoholic drinks mentioned in the Directive 2003/115/EC of 22 December 2003 and in the Directive 94/35/EC of 30 June 2004, on sweeteners for use in foodstuffs. Examples include, but are not limited to water-based, flavored drinks, energy-reduced or with no added sugar, milk- and milk-derivative-based or fruit-juice-based drinks, energy-reduced or with no added sugar, "Gaseosa": nonalcoholic water-based drink with added carbon dioxide, sweeteners and flavorings.

Consumable products include without limitation, water-based consumables, solid dry consumables, dairy products, dairy-derived products and dairy-alternative products. In one embodiment, the consumable product is a water-based consumable product including but not limited to beverage, water, aqueous beverage, enhanced/slightly sweetened water drink, flavored carbonated and still mineral and table water, carbonated beverage, non-carbonated beverage, carbonated water, still water, soft drink, non-alcoholic drink, alcoholic drink, beer, wine, liquor, fruit drink, juice, fruit juice, vegetable juice, broth drink, coffee, tea, black tea, green tea, oolong tea, herbal infusion, cacao (e.g. water- based), tea-based drink, coffee-based drinks, cacao-based drink, infusion, syrup, frozen fruit, frozen fruit juice, water-based ice, fruit ice, sorbet, dressing, salad dressing, jams, marmalades, canned fruit, savoury, delicatessen products like delicatessen salads, sauces, ketchup, mustard, pickles and marinated fish, sauce, soup, and beverage botanical materials (e.g. whole or ground), or instant powder for reconstitution (e.g. coffee beans, ground coffee, instant coffee, cacao beans, cacao powder, instant cacao, tea leaves, instant tea powder). In another embodiment, the consumable product is a solid dry consumable product including but not limited to cereals, baked food products, biscuits, bread, breakfast cereal, cereal bar, energy bars/nutritional bars, granola, cakes, rice cakes, cookies, crackers, donuts, muffins, pastries, confectionaries, chewing gum, chocolate products, chocolate, fondant, hard candy, marshmallow, pressed tablets, snack foods, botanical materials (whole or ground), and instant powders for reconstitution.

Non-limiting examples of consumable products are disclosed in PCT Publication No. WO 2012/107203.

### Methods

In some embodiments, the present disclosure provides the use of a composition according to an embodiment presented herein to impart a perception of sweetness in a flavored article to a subject in need thereof.

In some embodiments, the present disclosure provides the use of a composition according to an embodiment presented herein to enhance the sweetness of a flavored article. In one embodiment, the enhancement of sweetness is equivalent to the sweetness imparted by 1-10 degrees Brix sucrose.

In some embodiments, the present disclosure provides the use of a composition according to an embodiment presented herein to reduce the amount of a calorific sweetener required to impart a desired level of sweetness in a flavored article. In one embodiment, the amount of the calorific sweetener required to impart the desired level of sweetness in the flavored article is reduced by 50%.

In some embodiments, the present disclosure provides a method, wherein the method imparts a perception of sweetness of the flavored article to a subject in need thereof, and wherein the perception of sweetness has a sucrose-like temporal profile and/or flavor profile, the method comprising adding a composition according to an embodiment presented herein to the flavored article in an amount sufficient to impart a perception of sweetness of the flavored article in the subject.

In some embodiments, the present disclosure provides a method, wherein the method enhances the sweetness of a flavored article, wherein the enhancement of sweetness is equivalent to the sweetness imparted by 1-10 degrees Brix sucrose, the method comprising adding a composition according to an embodiment presented herein to the flavored article in an amount sufficient to enhance the sweetness of a flavored article.

In some embodiments, the present disclosure provides a method, wherein the method reduces the amount of a calorific sweetener required to impart a desired level of sweetness in a flavored article, the method comprising adding a composition according to an embodiment presented herein to the flavored article in an amount sufficient to reduce the amount of the calorific sweetener required to impart the desired level of sweetness in the flavored article.

In some embodiments, the present disclosure provides the use of a composition according to an embodiment presented herein to improve the temporal profile and/or flavor profile of a sweetener composition, wherein the improved temporal profile and/or flavor profile is a sucrose-like temporal profile and/or flavor profile.

In one embodiment, the present disclosure provides a method, wherein the method improves the temporal profile and/or flavor profile of a sweetener composition, wherein the improved temporal profile and/or flavor profile is a sucrose-like temporal profile and/or flavor profile, the method comprising adding a composition according to an embodiment presented herein to the sweetener composition in an amount sufficient to improve the temporal profile and/or flavor profile of the sweetener composition.

In one embodiment, the present disclosure provides a method, wherein the method improves the temporal profile and/or flavor profile of a flavored article comprising a sweetener composition, wherein the improved temporal profile and/or flavor profile is a sucrose-like temporal profile and/or flavor profile, the method comprising adding the composition according to an embodiment presented herein to the flavored article in an amount sufficient to improve the temporal profile and/or flavor profile of the sweetener composition.

The present invention is illustrated, but is not limited to, the following examples.

### EXAMPLES

### Example 1: Sensory Evaluation of Compositions According to Several Embodiments Presented Herein in Flavored Articles

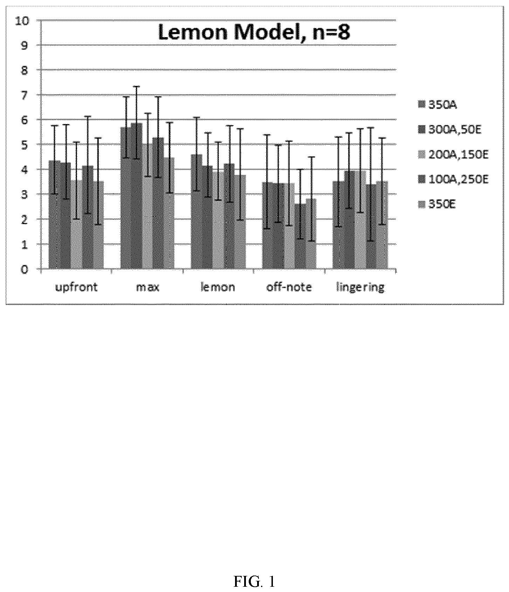

Composition 1: Several compositions comprising rebaudioside A and rebaudioside E were generated, and added to a lemon flavored drink model, wherein the final concentration of the composition was 350 ppm. The final concentrations of rebaudioside A and rebaudioside E in the lemon flavored drink models tested were as follows: (i) 300 ppm rebaudioside A and 50 ppm rebaudioside E (300A, 50E in FIG. 1); (ii) 200 ppm rebaudioside A and 100 ppm rebaudioside E (200A, 100E in FIG. 1); (iii) 100 ppm rebaudioside A and 250 ppm rebaudioside E (100A, 250E in FIG. 1); (iv) 350 ppm rebaudioside A control (350A in FIG. 1); and (v) 350 ppm rebaudioside E control (350A in FIG. 1).

The upfront sweetness, maximum sweetness, the intensity of lemon taste, the stevia off-note intensity and lingering sweetness reported by the test subjects for the lemon flavored drink models tested are shown in FIG 1. The lemon flavored drink model containing 100 ppm rebaudioside A and 250 ppm rebaudioside E (100A, 250E in FIG. 1) showed a reduction in the intensity of stevia off-notes. Note that in FIG. 1, for each set, the five bars are shown from left to right in the same order as the legend on the right from top to bottom.

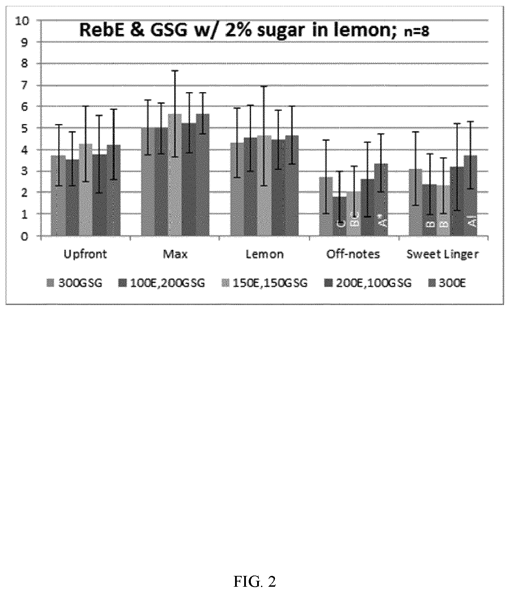

Comparative Composition 2: Several compositions comprising rebaudioside E and glucosylated natural steviol glycosides (GSGs) (GSG) were generated, and added to a lemon flavored drink model, wherein the final concentration of the composition was 300 ppm. The final concentrations of rebaudioside E and GSG in the lemon flavored drink models tested were as follows: (i) 100 ppm rebaudioside E and 200 ppm GSG (100E, 200GSG in FIG. 2); (ii) 150 ppm rebaudioside E and 150 ppm GSG (150E, 150GSG in FIG. 2); (iii) 200 ppm rebaudioside E and 100 ppm GSG (200E, 100GSG in FIG. 2); (iv) 300 ppm GSG (300GSG in FIG. 2); and (v) 300 ppm rebaudioside E (300E in FIG. 2).

The upfront sweetness, maximum sweetness, the intensity of lemon taste, the stevia off-note intensity and lingering sweetness reported by the test subjects for the lemon flavored drink models tested are shown in FIG. 2. The lemon flavored drink model containing 150 ppm rebaudioside E and 150 ppm GSG (150E, 150GSG in FIG. 2) showed a reduction in the intensity of stevia off-notes, and a synergistic increase in the maximum sweetness intensity. Note that in FIG. 2, for each set, the five bars are shown from left to right in the same order as the legend on the bottom from left to right.

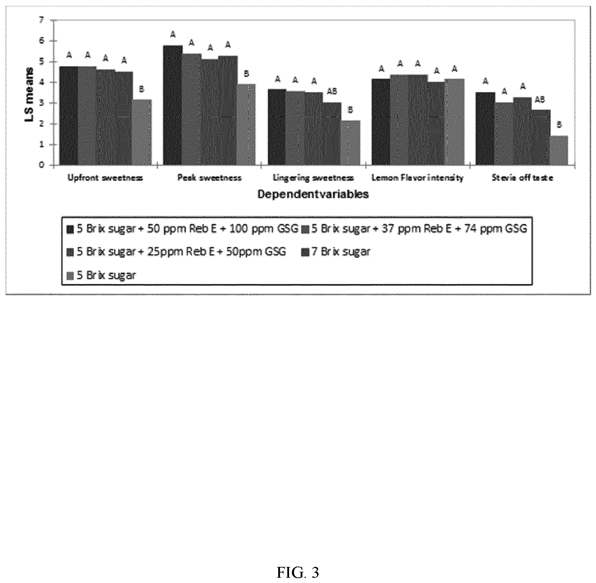

Comparative Composition 3: Several compositions comprising rebaudioside E and glucosylated natural steviol glycosides (GSGs) (GSG) were generated, and added to a lemon flavor drink model containing 5 Bx sucrose. The final concentrations of rebaudioside E and GSG in the lemon flavor drink models tested were as follows: (i) 5 Bx sucrose, 50 ppm rebaudioside E, and 100 ppm GSG (5 Brix sugar + 50 ppm Reb E + 100 ppm GSG in FIG. 3); (ii) 5 Bx sucrose, 37 ppm rebaudioside E, and 74 ppm GSG (5 Brix sugar + 37 ppm Reb E + 74 ppm GSG in FIG. 3); (iii) 5 Bx sucrose, 25 ppm rebaudioside E, and 50 ppm GSG (5 Brix sugar + 25 ppm Reb E + 50 ppm GSG in FIG. 3); (iv) 7 Bx sucrose (7 Brix sugar in FIG. 3); and 5 Bx sucrose (5 Brix sugar in FIG. 3).

The upfront sweetness, maximum sweetness, the intensity of lemon taste, the stevia off-note intensity and lingering sweetness reported by the test subjects for the lemon flavored drink models tested are shown in FIG. 3. All the compositions comprising rebaudioside E and GSG tested showed a sweetness enhancement equivalent to 2 degrees Brix in the presence of sucrose, without imparting sweetness of their own in the absence of sugar/sweetener. Note that in FIG. 3, for each set, the five bars are shown from left to right in the same order as the legend at the bottom from top left to top right, then to middle left, then to middle right, then to bottom left.

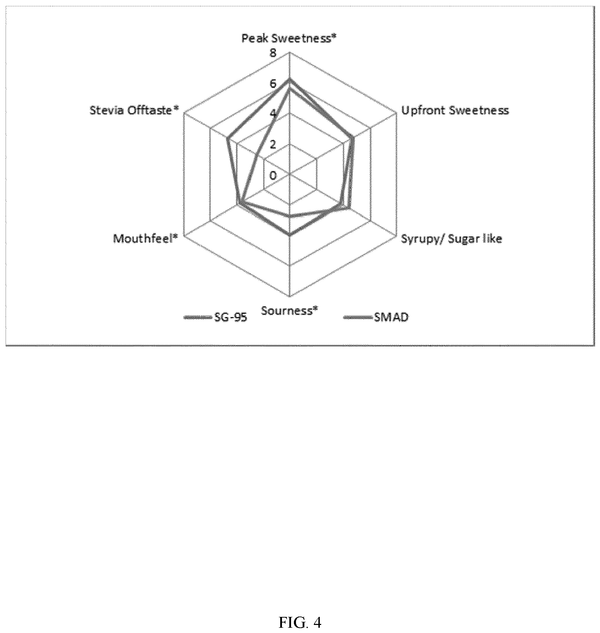

Comparative Composition 4: A composition comprising an extract comprising steviol glycosides, rebaudioside M, rebaudioside A; and rebaudioside D was added to a pineapple-orange juice beverage model, wherein the final concentrations of the extract comprising steviol glycosides, rebaudioside M, rebaudioside A; and rebaudioside D was 45, 150, 45, and 150 ppm, respectively. A control beverage comprising a pineapple-orange juice beverage model containing 390 ppm of an extract comprising steviol glycosides was also generated. The sensory properties are shown in FIG. 4.
The composition comprising an extract comprising steviol glycosides, rebaudioside M, rebaudioside A; and rebaudioside D showed a reduction in the stevia off-notes.
Although the various embodiments of the invention have been illustrated above by reference to examples and preferred embodiments, it will be appreciated that the scope of the invention is defined not by the foregoing description but by the following claims properly construed under principles of patent law.

## Claims

1. A sweetener composition comprising rebaudioside A and rebaudioside E, wherein the weight ratio of rebaudioside A to rebaudioside E ranges from 2:5 to 6:1.

2. The sweetener composition of claim 1, further comprising phloretin, naringenin, or any combinations thereof.

3. The sweetener composition of claim 1 or 2, further comprising rebaudioside B, rebaudioside D, rebaudioside M, mogroside V, glucosylated natural steviol glycosides, or any combinations thereof.

4. The sweetener composition of claim 1, further comprising glucosylated natural steviol glycosides, wherein the weight ratio of rebaudioside E to glucosylated natural steviol glycosides ranges from 1:2 to 2:1.

5. The sweetener composition of claim 4, further comprising phloretin, naringenin, or any combinations thereof.

6. The sweetener composition of claim 4 or 5, further comprising rebaudioside B, rebaudioside D, rebaudioside M, mogroside V, or any combinations thereof.

7. The sweetener composition of claim 1, further comprising rebaudioside D and rebaudioside M, wherein the weight ratio of rebaudioside M to rebaudioside A ranges from 9:16 to 10:3.

8. The sweetener composition of claim 7, wherein the weight ratio of rebaudioside M to rebaudioside D ranges from 1:1 to 3:2.

9. The sweetener composition of claim 7 or 8, wherein the weight ratio of rebaudioside A to rebaudioside D ranges from 3:10 to 8:1.

10. The sweetener composition of any one of claims 7 to 9, further comprising one or more other natural steviol glycosides.

11. The sweetener composition of any one of claims 7 to 10, further comprising phloretin, naringenin, or any combinations thereof.

12. The sweetener composition of any one of claims 7 to 11, further comprising rebaudioside B, mogroside V, glucosylated natural steviol glycosides, or any combinations thereof.

13. A flavored article comprising a sweetener composition of any one of claims 1 to 12.

14. A tabletop sweetener comprising a bulking agent and a sweetener composition of any one of claims 1 to 12.

15. The tabletop sweetener of claim 14, wherein at least a portion of the sweetener composition is encapsulated.

## Patentansprüche

1. Süßstoffzusammensetzung, umfassend Rebaudiosid A und Rebaudiosid E, wobei das Gewichtsverhältnis von Rebaudiosid A zu Rebaudiosid E im Bereich von 2:5 bis 6:1 liegt.

2. Süßstoffzusammensetzung nach Anspruch 1, weiterhin umfassend Phloretin, Naringenin oder beliebige Kombinationen davon.

3. Süßstoffzusammensetzung nach Anspruch 1 oder 2, weiterhin umfassend Rebaudiosid B, Rebaudiosid D, Rebaudiosid M, Mogrosid V, glucosylierte natürliche Steviolglykoside oder beliebige Kombinationen davon.

4. Süßstoffzusammensetzung nach Anspruch 1, weiterhin umfassend glucosylierte natürliche Steviolglykoside, wobei das Gewichtsverhältnis von Rebaudiosid E zu den glucosylierten natürlichen Steviolglykosiden im Bereich von 1:2 bis 2:1 liegt.

5. Süßstoffzusammensetzung nach Anspruch 4, weiterhin umfassend Phloretin, Naringenin oder beliebige Kombinationen davon.

6. Süßstoffzusammensetzung nach Anspruch 4 oder 5, weiterhin umfassend Rebaudiosid B, Rebaudiosid D, Rebaudiosid M, Mogrosid V oder beliebige Kombinationen davon.

7. Süßstoffzusammensetzung nach Anspruch 1, weiterhin umfassend Rebaudiosid D und Rebaudiosid M, wobei das Gewichtsverhältnis von Rebaudiosid M zu Rebaudiosid A im Bereich von 9:16 bis 10:3 liegt.

8. Süßstoffzusammensetzung nach Anspruch 7, wobei das Gewichtsverhältnis von Rebaudiosid M zu Rebaudiosid D im Bereich von 1:1 zu 3:2 liegt.

9. Süßstoffzusammensetzung nach Anspruch 7 oder 8, wobei das Gewichtsverhältnis von Rebaudiosid A zu Rebaudiosid D im Bereich von 3:10 zu 8:1 liegt.

10. Süßstoffzusammensetzung nach einem der Ansprüche 7 bis 9, weiterhin umfassend ein oder mehrere andere natürliche Steviolglykoside.

11. Süßstoffzusammensetzung nach einem der Ansprüche 7 bis 10, weiterhin umfassend Phloretin, Naringenin oder beliebige Kombinationen davon.

12. Süßstoffzusammensetzung nach einem der Ansprüche 7 bis 11, weiterhin umfassend Rebaudiosid B, Mogrosid V, glucosylierte natürliche Steviolglykoside oder beliebige Kombinationen davon.

13. Aromatisierter Artikel, umfassend eine Süßstoffzusammensetzung nach einem der Ansprüche 1 bis 12.

14. Tischsüßstoff, umfassend einen Füllstoff und eine Süßstoffzusammensetzung nach einem der Ansprüche 1 bis 12.

15. Tischsüßstoff nach Anspruch 14, wobei mindestens ein Teil der Süßstoffzusammensetzung eingekapselt ist.

## Revendications

1. Composition d'édulcorant comprenant du rébaudioside A et du rébaudioside E, le rapport en poids de rébaudioside A sur rébaudioside E se situant dans la plage de 2 : 5 à 6 : 1.

2. Composition d'édulcorant selon la revendication 1, comprenant en outre de la phlorétine, de la naringénine, ou de quelconques combinaisons correspondantes.

3. Composition d'édulcorant selon la revendication 1 ou 2, comprenant en outre du rébaudioside B, du rébaudioside D, du rébaudioside M, du mogroside V, des glycosides de stéviol naturel glucosylé, ou de quelconques combinaisons correspondantes.

4. Composition d'édulcorant selon la revendication 1, comprenant en outre des glycosides de stéviol naturel glucosylé, le rapport en poids de rébaudioside E sur glycosides de stéviol naturel glucosylé se situant dans la plage de 1 : 2 à 2 : 1.

5. Composition d'édulcorant selon la revendication 4, comprenant en outre de la phlorétine, de la naringénine, ou de quelconques combinaisons correspondantes.

6. Composition d'édulcorant selon la revendication 4 ou 5, comprenant en outre du rébaudioside B, du rébaudioside D, du rébaudioside M, du mogroside V, ou de quelconques combinaisons correspondantes.

7. Composition d'édulcorant selon la revendication 1, comprenant en outre du rébaudioside D et du rébaudioside M, le rapport en poids de rébaudioside M sur rébaudioside A se situant dans la plage de 9 : 16 à 10 : 3.

8. Composition d'édulcorant selon la revendication 7, le rapport en poids de rébaudioside M sur rébaudioside D se situant dans la plage de 1 : 1 à 3 : 2.

9. Composition d'édulcorant selon la revendication 7 ou 8, le rapport en poids de rébaudioside A sur rébaudioside D se situant dans la plage de 3 : 10 à 8 : 1.

10. Composition d'édulcorant selon l'une quelconque des revendications 7 à 9, comprenant en outre un ou plusieurs glycosides de stéviol naturel.

11. Composition d'édulcorant selon l'une quelconque des revendications 7 à 10, comprenant en outre de la phlorétine, de la naringénine, ou de quelconques combinaisons correspondantes.

12. Composition d'édulcorant selon l'une quelconque des revendications 7 à 11, comprenant en outre du rébaudioside B, du mogroside V, des glycosides de stéviol naturel glucosylé, ou de quelconques combinaisons correspondantes.

13. Article aromatisé comprenant une composition d'édulcorant selon l'une quelconque des revendications 1 à 12.

14. Édulcorant de table comprenant un agent de charge et une composition d'édulcorant selon l'une quelconque des revendications 1 à 12.

15. Édulcorant de table selon la revendication 14, au moins une partie de la composition d'édulcorant étant encapsulée.
